# EUROPÄISCHE PATENTSCHRIFT

(11) **EP 4 572 959 B1**
(45) Veröffentlichungstag und Bekanntmachung des Hinweises auf die Patenterteilung: **29.04.2026**
(21) Anmeldenummer: 24718372.6
(22) Anmeldetag: 04.04.2024
(51) Int. Cl.: B41F 33/00, B41F 33/06, B41F 33/08, B41F 33/16, B41F 19/00, B41F 33/10

(54) **VERFAHREN ZUM WECHSEL EINES BEARBEITUNGSAUFTRAGS AUSGEFÜHRT AN EINER BEARBEITUNGSMASCHINE**
METHOD FOR CHANGING A PROCESSING TASK CARRIED OUT ON A PROCESSING MACHINE
PROCÉDÉ DE CONFIGURATION DE PARAMÈTRES DE PROCESSUS DANS UNE MACHINE DE CONVERSION

(30) Priorität: 27.04.2023 DE 102023110902
(43) Veröffentlichungstag der Anmeldung: 25.06.2025
(73) Patentinhaber: Koenig & Bauer AG, 97080 Würzburg (DE)
(72) Erfinder: DEPPISCH, Bastian, 97753 Karlstadt (DE); MÜLLER, Torsten, 97261 Güntersleben (DE)
(74) Vertreter: Koenig & Bauer AG
(86) Internationale Anmeldenummer: PCT/EP2024/059147
(87) Internationale Veröffentlichungsnummer: WO 2024/223254

(56) Entgegenhaltungen:
- WO-A1-2022/074071
- JP-B2- 4 089 891
- US-A- 5 447 102
- US-A1- 2023 373 124

## Beschreibung

Die Erfindung betrifft ein Verfahren zum Wechsel eines Bearbeitungsauftrags ausgeführt an einer Bearbeitungsmaschine. In Bearbeitungsmaschinen, insbesondere für Bogen wie beispielsweise Wellpappbogen, kommen verschiedene Bearbeitungsaggregate zum Einsatz. Die Bogen werden mittels zumindest eines Auftragaggregates mit Druckfluid beaufschlagt und zusätzlich oder alternativ durch zumindest eine Formgebungseinrichtung in ihrer Masse und/oder Form und/oder Kontur verändert. Ein mögliches Auftragverfahren ist der Flexodruck. Der Flexodruck zeichnet sich aus durch einen Formzylinder mit einer flexiblen Druckform. Eine mögliche Formgebungseinrichtung ist üblicherweise eine Stanze, insbesondere eine Rotationsstanze. Die Rotationsstanze weist dabei üblicherweise einen Formzylinder, im Folgenden auch als Stanzzylinder bezeichnet, mit Werkzeug und einen Gegenstanzzylinder auf.

Rotationsstanzen weisen üblicherweise Stanzaggregate mit einem Stanzzylinder und einem Gegenstanzzylinder auf. Die DE 10 2004 058 597 A1 zeigt beispielsweise eine Stanze mit zwei rotierenden Bearbeitungswalzen.

Ebenfalls ist durch die WO 2020/216521 A1 eine solche Bearbeitungsmaschine aufweisend Auftragsaggregate und ein als Rotationsstanzeinrichtung ausgebildetes Formgebungsaggregat offenbart.

Um einen neuen Bearbeitungsauftrag an der Bearbeitungsmaschine auszuführen, muss die Bearbeitungsmaschine üblicherweise nach einem vorher ablaufenden

Bearbeitungsauftrag umgerüstet und/oder gewartet werden. Üblicherweise wird hierfür durch den Bediener ein umzurüstender Prozess manuell gestartet.

Auf einem Stanzzylinder ist eine Stanzform mit Stanzwerkzeugen, vorzugsweise Messern, angeordnet, welche im Betrieb das Substrat bearbeiten und dabei auch mit dem Gegenstanzzylinder in Kontakt tritt. Die Gegenstanzzylinder weisen vorzugsweise elastische und widerstandfähige Aufzüge bzw. Stanzbeläge auf. Bei einem Auftragswechsel, durch welchen das zu erzeugende Stanzbild verändert wird, müssen die Stanzformen getauscht werden. Um die Rotationsstanze schnell wieder in einen betriebsbereiten Zustand zu überführen, kommen beispielsweise Wechselvorrichtungen für Stanzzylinder zum Einsatz.

Die US 2005/0103173 A1 zeigt eine Möglichkeit Stanzzylinder auszutauschen, wobei diese mittels Linearführungen verstellt werden.

Aus verschiedenen technischen Gebieten der grafischen Industrie sind unterschiedliche Ansätze zur Automatisierung von Prozessen zum Wechsel von Bearbeitungsaufträgen bekannt.

Beispielsweise offenbart die EP 2 636 536 A1 für das technische Gebiet von Fertigungsanlagen ein Verfahren zum Umrüsten der aus mehreren jeweils eine Maschinensteuerung aufweisende Druckweiterverarbeitungsmaschinen bestehenden, eine Anlagensteuerung aufweisenden Fertigungsanlage. Eine Druckweiterverarbeitungsmaschine der Druckweiterverarbeitungsmaschinen wird dabei voll- oder teilautomatisch auf einen nächsten Fertigungsauftrag umgerüstet. Die Anlagensteuerung koordiniert das Ansteuern der einzelnen Maschinen im Verbund, wobei die Maschinensteuerungen für die Funktionen der betreffenden Maschine zuständig sind.

Die DE 10 2004 021 657 A1 offenbart ein Verfahren zur Durchführung eines druckplattenspezifischen Produktionswechsels an einer Druckmaschine, wobei ein erster Druckauftrag automatisch gestoppt wird und Parameter für einen anschließenden Druckauftrag automatisch geladen werden. Nach dem Erreichen der Produktionsbereitschaft für den zweiten Druckauftrag wird automatisch ein Produktionsbereitschaftssignal für den zweiten Druckauftrag erzeugt, wobei der zweite Druckauftrag erst nach einer Druckauftragsbestätigung gestartet und eine Zeit zwischen dem Erzeugen des Produktionsbereitschaftssignals und der Druckauftragsbestätigung überwacht und erfasst wird.

Die US 2014/0003853 A1 offenbart eine Methode zur Reduzierung von Ausschuss an einer digitalen Rollendruckmaschine. Während eines ersten Druckauftrags wird die Substratbahn mit einer ersten Geschwindigkeit bewegt und durch mindestens einen Druckkopf bedruckt und durch eine nachgeordnete Nachbearbeitungseinrichtung bearbeitet. Die Nachbearbeitungseinrichtung weist dabei Räder zum Schlitzen von Längsschlitzen und eine Schneideinrichtung zum Schneiden der Bahn in Abschnitte auf. Vor einem Ende des ersten Druckauftrags wird die Substratbahn verlangsamt. Die Konfiguration der Nachbearbeitungseinrichtung wird zu einem zweiten Druckauftrag geändert. Ein weiterer Abschnitt der Substratbahn wird gemäß des zweiten Druckauftrags bedruckt, bevor die Konfigurationsänderung der Nachbearbeitungseinrichtung abgeschlossen ist, wobei die Zeitdauer berücksichtigt wird, bis die Konfigurationsänderung abgeschlossen ist und der weitere Abschnitt der Substratbahn die Nachbearbeitungseinrichtung erreicht.

Die DE 10 2018 202 747 A1 offenbart ein Verfahren zur Durchführung eines Auftragswechsels an einer Maschine der grafischen Industrie, beispielsweise einer Bogenoffsetrotationsdruckmaschine, mit einem von einem Rechner bereitgestellten Auftragswechselmenü. Einem Bediener werden Vorwahlmöglichkeiten für einen automatischen Wechsel von einem Fortdruck in ein Auftragswechselprogramm oder für einen automatischen Wechsel von einem Auftragswechselprogramm in einen Fortdruck unterbreitet.

Die JP 4089891 B2 betrifft eine Eingangsschaltung für einen Spannungsdetektor einer Spannungssteuervorrichtung, die in Spannungskontrollvorrichtungen montiert wird. Beispielsweise wird der Spannungsdetektor als Vorrichtung zur Kontrolle einer Spannung eines dünnen Streifens wie Papier, Film, Draht oder dergleichen verwendet. Eine Nullwert-Kalibrierung erfolgt bei gestoppter Maschine.

Die US 5,447,102 A offenbart einen Betrieb einer Druckmaschine, wobei verschiedene Druckaufträge nacheinander ausgeführt werden. In Umrüstprozessen können Einstellungen für den nachfolgenden Druckauftrag vorgenommen werden.

Die Lehre der WO 2022/074071 A1 bzw. US 2023/0373124 A1 offenbart eine Verarbeitungsmaschine und ein Verfahren zum Kalibrieren einer Verarbeitungsmaschine. Die Verarbeitungsmaschine weist mehrere Aggregate, insbesondere Flexo-Druckaggregate, ein Anleger- Aggregat sowie ein als Rotationsstanzmodul ausgebildetes Aggregat auf. Zwischen den Bogen bearbeitenden Aggregaten sind Transferaggregate mit Rollen zum Transport der Bogen vorgesehen. Ein Kalibriersystem erfasst ein Kennzeichen auf den einzelnen transportierten Bogen und berechnet eine Abweichung einer Längskoordinate und einer Querkoordinate von einer Referenz. Wenn mindestens eine der Längsmarkierungsverschiebungen und der Quermarkierungsverschiebungen einen vorgegebenen Toleranzschwellenwert überschreitet, wird ein Korrekturprogramm eingeleitet. Es wird die generelle Möglichkeit offenbart, die Maschine zur Verarbeitung einer Serie an Chargen von unterschiedlichen Arten von Schachteln in Bezug auf Formaten und Druckbildern einzusetzen, wobei bei einem Ändern der Schachteldimension und Konfiguration das Rotationsstanzwerkzeug gewechselt werden muss. Nach Erhalt einer Auftragsspezifikation konfiguriert der Bediener die Verarbeitungsmaschine, indem der Bediener das Rotationsstanzwerkzeug des Stanzzylinders wechselt, dann die seitliche Position der Bogen in dem Anleger anpasst und das Längsregister einstellt. Eine Registerkorrektur an dem Rotationsstanzmodul wird bei unterbrochener Zuführung und bei leerer Maschine vorgenommen.

Der Erfindung liegt die Aufgabe zugrunde, ein Verfahren zum Wechsel eines Bearbeitungsauftrags ausgeführt an einer Bearbeitungsmaschine zu schaffen.

Die Aufgabe wird erfindungsgemäß durch die Merkmale des Anspruches 1 gelöst. Die abhängigen Ansprüche zeigen vorteilhafte Weiterbildungen und/oder Ausführungen der gefundenen Lösung.

Die Bearbeitungsmaschine weist mehrere Aggregate auf. Die Bearbeitungsmaschine weist mindestens zwei Bearbeitungsaggregate auf. Mindestens ein Bearbeitungsaggregat der Bearbeitungsmaschine ist als Formgebungsaggregat ausgebildet. Es weist die Bearbeitungsmaschine mindestens ein, bevorzugt mindestens zwei, weiter bevorzugt mindestens vier, beispielsweise sechs, als Auftragsaggregate ausgebildete Bearbeitungsaggregate auf. Das mindestens eine Auftragaggregat weist mindestens einen Formzylinder auf. Die Bearbeitungsmaschine weist zusätzlich zu dem mindestens einen Auftragaggregat das mindestens eine als Formgebungsaggregat, bevorzugt als Stanzaggregat, das als Rotationsstanzeinrichtung ausgebildet ist, ausgebildete Bearbeitungsaggregat auf. Das mindestens eine als Formgebungsaggregat ausgebildete Bearbeitungsaggregat ist als Rotationsstanzeinrichtung ausgebildet. Das mindestens eine Auftragaggregat, vorzugsweise alle Auftragaggregate, ist dabei vorzugsweise in Transportrichtung von Substrat vor dem mindestens einen Formgebungsaggregat angeordnet. Mindestens zwei Bearbeitungsaggregate der Bearbeitungsmaschine führen somit zueinander verschiedene Bearbeitungsprozesse durch.

Zum Wechsel des Bearbeitungsauftrags werden Aggregate der Bearbeitungsmaschine umgerüstet. Insbesondere die Bearbeitungsaggregate der Bearbeitungsmaschine werden zum des Wechsel des Bearbeitungsprozesses umgerüstet und/oder gewartet. Die Bearbeitungsmaschine ist vorzugsweise als Bogenbearbeitungsmaschine zur Bearbeitung von bogenförmigen Substrat ausgebildet. Insbesondere sind die Bearbeitungsaggregate bogenförmiges Substrat bearbeitend ausgebildet.

Ein Verfahren zum Wechsel eines Bearbeitungsauftrags ausgeführt an der Bearbeitungsmaschine weist mehrere Schritte auf.

Es wird mindestens ein erster Bearbeitungsauftrag durch die Bearbeitungsmaschine abgearbeitet. Während dieses ersten Bearbeitungsauftrags wird mindestens ein Substrat mit dem mindestens einen Bearbeitungsaggregat, insbesondere dem mindestens einen Formgebungsaggregat und/oder dem mindestens einen Auftragaggregat, weiter bevorzugt dem mindestens einen Formgebungsaggregat und dem mindestens einen Auftragaggregat, der Bearbeitungsmaschine bearbeitet. Somit wird das mindestens eine Substrat während des ersten Bearbeitungsauftrags mit den mindestens zwei Bearbeitungsaggregaten der Bearbeitungsmaschine bearbeitet. Vorzugsweise wird ein erstes Produkt entsprechend des ersten Auftrags erzeugt. Dieses weist bevorzugt mindestens ein Druckbild und/oder mindestens ein Stanzbild auf.

Der erste Bearbeitungsauftrag wird automatisiert beendet. Ein Umrüsten beginnt automatisiert. Vorteilhafterweise wird dadurch ein unterbrechungsfreier Übergang von dem ersten Bearbeitungsvorgang zum Umrüsten geschaffen. Vorteilhafterweise werden Verzögerungen aufgrund von notwendigen Eingaben durch einen Bediener vermieden.

Es folgt ein Abarbeiten des Umrüstens der Bearbeitungsmaschine zur Anpassung mindestens eines Aggregats der Bearbeitungsmaschine an eine Konfiguration eines direkt nachfolgenden Bearbeitungsauftrags. Vor dem Umrüsten wird die Konfiguration der Bearbeitungsmaschine für den mindestens einen nachfolgenden Bearbeitungsauftrag in einer Maschinensteuerung geladen und/oder eingestellt und/oder gespeichert. Vorteilhafterweise sind somit zu Beginn des Umrüstens alle erforderlichen Informationen zur Anpassung der Bearbeitungsmaschine in der Maschinensteuerung vorhanden und zur Durchführung der benötigten Prozesse vorbereitet. So erfolgt vorteilhafterweise ein unterbrechungsfreier Übergang zwischen dem ersten Bearbeitungsauftrag und dem Umrüsten.

Auf den ersten Bearbeitungsauftrag folgt mindestens ein, beispielsweise mindestens zwei, nachfolgender Bearbeitungsauftrag. Nach abgeschlossenem Umrüsten wird der direkt nachfolgende Bearbeitungsauftrag gestartet. Während dieses direkt nachfolgenden Bearbeitungsauftrags wird mindestens ein Substrat mit dem mindestens einen Formgebungsaggregat bearbeitet. Zusätzlich oder alternativ wird das mindestens eine Substrat mit dem mindestens einen als Auftragaggregat ausgebildeten Bearbeitungsaggregat bearbeitet. Somit wird das mindestens eine Substrat während des direkt nachfolgenden Bearbeitungsauftrags mit den mindestens zwei Bearbeitungsaggregaten der Bearbeitungsmaschine bearbeitet. Vorzugsweise wird ein zweites Produkt entsprechend des zweiten Auftrags erzeugt. Dieses weist bevorzugt mindestens ein Druckbild und/oder mindestens ein Stanzbild auf.

Die erzielbaren Vorteile sind insbesondere, dass ein Umrüsten zwischen Bearbeitungsaufträgen vereinfacht wird. Vorteilhafterweise erfolgt die Konfiguration der Bearbeitungsmaschine und das Umrüsten für einen nachfolgenden Bearbeitungsauftrag zeitoptimiert. Insbesondere ist die Konfiguration für den mindestens einen nachfolgenden Bearbeitungsauftrag, insbesondere die dafür notwendigen Wechselvorgänge und/oder Reinigungsvorgänge und/oder Formatanpassungen, vor dem dazu nötigen Umrüsten abgeschlossen, wodurch das Umrüsten vorteilhafterweise unterbrechungsfrei nach Beendigung des vorhergehenden Bearbeitungsauftrags starten kann. Vorteilhafterweise erfolgt die Vorbereitung einer Folgeproduktion und/oder die Durchführung von für einen Auftragswechsel erforderlicher Umrüstprozesse automatisiert. Vorteilhafterweise können dadurch mehrere Umrüstprozesse zueinander zeitlich überlappend, bevorzugt parallel zueinander, ablaufen. Vorteilhafterweise wird das Umrüsten beschleunigt. Es werden vorteilhafterweise Standzeiten der Bearbeitungsmaschine reduziert und somit die Produktivität der Bearbeitungsmaschine gesteigert. Vorteilhafterweise werden manuelle Eingriffe eines Bedieners während des Umrüstens reduziert. Vorteilhafterweise steht der Bediener somit bereits für weitere Aufgaben zur Verfügung.

Vorzugsweise wird die Umrüstung gemäß einer ersten Art der Umrüstung oder gemäß einer zweiten Art der Umrüstung durchgeführt. Die erste Art der Umrüstung erlaubt vorzugsweise eine Vielzahl an Umrüstprozessen und/oder einen Wechsel des zu bearbeitenden Substrates zu einem anderen Format oder anderer Art. Die zweite Art der Umrüstung ermöglicht vorzugsweise eine besonders schnelle Umrüstung und somit minimierte Umrüstdauer.

Bevorzugt erfolgen mindestens zwei Umrüstprozesse, bevorzugt alle Umrüstprozesse, während des Umrüstens automatisiert und/oder in durch die Maschinensteuerung gesteuerter Abhängigkeit voneinander. Vorteilhafterweise wird dadurch der Ablauf der Umrüstprozesse optimiert und insbesondere die Dauer des gesamten Umrüstens reduziert.

In bevorzugter Ausführung werden in der Maschinensteuerung Daten bezüglich eines zu bearbeitenden Substrates und/oder Daten bezüglich eines zu erzielenden Produktes des mindestens einen nachfolgenden Bearbeitungsauftrags hinterlegt oder sind hinterlegt. Vorzugsweise gibt die Maschinensteuerung durch Verarbeitung dieser Daten unter Berücksichtigung weiterer durch die Maschinensteuerung bereitgestellter maschinenbezogener Daten die Konfiguration der Bearbeitungsmaschine für den mindestens einen nachfolgenden Bearbeitungsauftrag sowie die dazu durchzuführenden Umrüstprozesse vor. Vorteilhafterweise werden so Eingabefehler eines Bedieners minimiert. Insbesondere bei wiederkehrenden Bearbeitungsaufträgen lässt sich so vorzugsweise der Aufwand der einzugebenden Daten durch einen Bediener minimieren.

In bevorzugter Ausführung schlägt die Maschinensteuerung mindestens einen Datensatz umfassend mindestens eine Konfiguration des nachfolgenden Bearbeitungsauftrags sowie die dazu durchzuführenden Umrüstprozesse vor, welcher durch einen Bediener anpassbar oder auswählbar ist. Vorteilhafterweise kann so ein Bediener die Konfiguration anpassen. Beispielsweise kann er einen zusätzlichen Umrüstprozess, wie einen Reinigungsprozess, integrieren oder einen Umrüstprozess entfernen, beispielsweise eine Reinigung abwählen, wenn ein Auftragfluid unverändert bleibt, oder ein abnutzungsbedingtes Austauschen eines Werkzeugs abwählen, wenn dessen Restlebensdauer für den folgenden Bearbeitungsauftrag ausreichend ist. Vorteilhafterweise wird jedes Aggregat der Bearbeitungsmaschine durch die Maschinensteuerung konfiguriert. Weiter bevorzugt ist die Konfiguration jedes Aggregats der Bearbeitungsmaschine durch einen Bediener anpassbar oder auswählbar.

In bevorzugter Ausführung wird zumindest vor dem jeweiligen Umrüsten, beispielsweise während der Abarbeitung des ersten Bearbeitungsauftrags, die Konfiguration des mindestens einen direkt nachfolgenden Bearbeitungsprozesses und die Konfiguration mindestens eines weiteren nachfolgenden Bearbeitungsprozesses sowie der mindestens eine durchzuführende Umrüstprozess geladen und/oder eingestellt und/oder gespeichert. Vorteilhafterweise können so Ketten an mehreren Bearbeitungsaufträgen zeitoptimiert durchgeführt werden. Vorteilhafterweise wird ein Bediener entlastet.

Die Maschinensteuerung steuert mindestens zwei ablaufende Umrüstprozesse. Weiter bevorzugt laufen diese mindestens zwei Umrüstprozesse automatisiert ab, also vorzugsweise ohne zusätzliche Bedienereinwirkung. Vorteilhafterweise wird dadurch ein Bediener entlastet.

Es laufen mindestens zwei Umrüstprozesse zeitlich überlappend, bevorzugt parallel, zueinander ab. Dadurch wird vorteilhafterweise die Dauer des Umrüstens reduziert. Diese werden durch die Maschinensteuerung gesteuert. Weiter bevorzugt laufen zumindest die zueinander zeitlich überlappend ablaufenden Umrüstprozesse während des Umrüstens automatisiert ab. Zumindest die zueinander zeitlich überlappend ablaufenden Umrüstprozesse während des Umrüstens, bevorzugt mindestens drei Umrüstprozesse während des Umrüstens, weiter bevorzugt die Umrüstprozesse zumindest der Bearbeitungsaggregate, laufen vorzugsweise automatisiert ab. Vorteilhafterweise wird durch die Automatisierung ein Bediener entlastet.

Während des Umrüstens läuft mindestens ein Umrüstprozess des mindestens einen Formgebungsaggregats zeitlich überlappend, bevorzugt parallel, zu mindestens einem weiteren Umrüstprozess der Bearbeitungsmaschine ab. Insbesondere erfolgt in mindestens zwei zueinander verschiedenen Aggregaten der Bearbeitungsmaschine, bevorzugt in zumindest zwei der Bearbeitungsaggregate, weiter bevorzugt in allen Bearbeitungsaggregaten, zueinander zeitlich überlappend, bevorzugt parallel, jeweils mindestens ein Umrüstprozess. Beispielsweise stellt ein Umrüstprozess des Formgebungsaggregats einen zeitlimitierenden Faktor des Umrüstens dar. Vorteilhafterweise wird der Ablauf der Umrüstprozesse optimiert und insbesondere die Dauer des gesamten Umrüstens reduziert.

Die Bearbeitungsmaschine weist vorzugsweise zumindest das mindestens eine Formgebungsaggregat, das mindestens eine Auftragaggregat, die mindestens eine Substratzufuhreinrichtung und die mindestens eine Auslage als Aggregate auf, wobei weiter bevorzugt während des Umrüstens mindestens drei Umrüstprozesse dieser Bestandteile der Bearbeitungsmaschine zueinander zeitlich überlappend vorzugsweise automatisiert ablaufen. Vorteilhafterweise wird dadurch der Ablauf der Umrüstprozesse optimiert und insbesondere die Dauer des gesamten Umrüstens reduziert.

In zusätzlicher oder alternativer besonders bevorzugter Ausführung steuert die Maschinensteuerung ein automatisiertes Beenden des ersten Bearbeitungsauftrags, einen automatisierten Beginn des Umrüstens sowie eine automatisierte Durchführung zumindest der zeitlich überlappenden Umrüstprozesse des Umrüstens. Vorteilhafterweise wird der Arbeitsaufwand für einen Bediener während des Umrüstens verringert. Vorteilhafterweise wird das Umrüsten bezüglich der Abläufe optimiert.

Es wird das mindestens eine Formgebungsaggregat durch mindestens einen Umrüstprozess umgerüstet. Beispielsweise wird mindestens ein Werkzeug und/oder mindestens ein Formzylinder gewechselt. Beispielsweise wird lediglich das Werkzeug gewechselt, beispielsweise alternativ wird der Formzylinder mit dem daran angeordneten Werkzeug gewechselt. Der Wechsel des Formzylinders erfolgt beispielsweise mittels einer Vorrichtung zum Wechseln der Formzylinder, vorzugsweise automatisiert, oder manuell durch einen Bediener. Vorzugsweise wird der Formzylinder und/oder der Gegenstanzzylinder vor einem Wechsel von der Bearbeitungsstelle entfernt, bevorzugt abgestellt. Das Werkzeug des Formzylinders wird bevorzugt manuell gewechselt. Insbesondere bei einem manuellen Wechsel wird der Formzylinder vorzugsweise automatisiert für den Bediener zugänglich gemacht. Beispielsweise im Anschluss an einen erfolgten Wechsel wird vorzugsweise ein Abstand des eingewechselten Formzylinders oder des mit gewechseltem Werkzeug versehenen Formzylinders zu dem Gegenstanzzylinder angepasst. Beispielsweise wird der Abstand auch zur Anpassung an ein Format des Substrats verändert.

Vorzugsweise wird das mindestens eine bevorzugt als Flexo-Auftragaggregat ausgebildete Auftragaggregat durch mindestens einen Umrüstprozess umgerüstet. Bevorzugt läuft mindestens ein Umrüstprozess des mindestens einen Auftragaggregats zeitlich überlappend zu dem mindestens einen Umrüstprozess des mindestens einen Formgebungsaggregats automatisiert ab. Dies reduziert vorteilhafterweise die Dauer der Umrüstung. An dem mindestens einen Auftragaggregat wird bevorzugt mindestens ein Umrüstprozess der folgenden Umrüstprozesse durchgeführt: Reinigung eines Auftragwerks und/oder Änderung eines Abstands zwischen einem Formzylinder und einem Gegendruckzylinder des mindestens einen Auftragaggregats und/oder Wechsel eines eingesetzten Auftragfluids und/oder Anpassung einer Auftragsmenge eines eingesetzten Auftragfluids und/oder Wechsel eines Formzylinders des mindestens einen Auftragaggregats und/oder Wechsel mindestens einer Druckform des mindestens einen Auftragaggregats und/oder Wechsel einer Rasterwalze des mindestens einen Auftragaggregats. Vorteilhafterweise wird ein zu erzielendes Druckbild an den durchzuführenden Bearbeitungsauftrag angepasst.

Beispielsweise wird während des Umrüstens zusätzlich oder alternativ zu weiteren Umrüstprozessen die Anzahl der ein Substrat bearbeitenden Bearbeitungsaggregate, insbesondere die Anzahl der Auftragaggregate, verändert. Vorteilhafterweise erhöht das die Flexibilität der Bearbeitungsmaschine und somit deren Einsatzmöglichkeiten.

Vorzugsweise wird das mindestens eine Substratzufuhraggregat durch mindestens einen Umrüstprozess umgerüstet. Vorzugsweise wird die mindestens eine Auslage durch mindestens einen Umrüstprozess umgerüstet. In bevorzugter Ausführung wird während mindestens eines Umrüstprozesses des Substratzufuhraggregats und/oder der Auslage eine Anpassung an ein Format eines zu bearbeitenden Substrats durchgeführt. Beispielsweise erfolgt mindestens einer der Umrüstprozesse zur Anpassung an das Format automatisiert.

Vorteilhafterweise erfolgt bei der Umstellung eines Formats der zu verarbeitenden Substrate mindestens ein Umrüstprozess zur Anpassung an das neue Format, insbesondere an dem Substratzufuhraggregat und/oder der Auslage aber bevorzugt zusätzlich auch an mindestens einem Bearbeitungsaggregat, beispielsweise durch Abstandsänderung der Zylinder an einer Bearbeitungsstelle oder durch Auswechseln von Formzylindern, Werkzeug und/oder Druckformen.

Während des Umrüstens gemäß der zweiten Art der Umrüstung wird bevorzugt eine Zufuhr von Substrat zu dem mindestens einen Bearbeitungsaggregat für lediglich 0 bis N Substrate blockiert, wobei N eine natürliche Zahl kleiner gleich 25 ist. Weiter bevorzugt wird die Zufuhr für mindestens ein Substrat blockiert. Zusätzlich wird bevorzugt während des Umrüstens mindestens eine Transporteinrichtung eines Transportaggregats der Bearbeitungsmaschine zum Transport von Substrat mit zumindest einem Geschwindigkeitsprofil angetrieben, wobei die Geschwindigkeit größer Null ist. Vorzugsweise wird während des Umrüstens mindestens ein Formzylinder des mindestens einen Formgebungsaggregats mit einer Geschwindigkeit größer Null rotierend angetrieben.

Bevorzugt zusätzlich oder alternativ weist das mindestens eine Auftragaggregat mindestens eine Ausschiebevorrichtung auf, die eine Fluidquelle im Falle von deren Anwesenheit in deren Position verstellen kann und/oder verstellend ausgebildet ist. Auf vorteilhafte Weise automatisiert die Ausschiebevorrichtung mindestens einen Vorgang des Auftragaggregates, es wird mindestens ein Umrüstprozess, insbesondere ein Reinigungsvorgang, beschleunigt. Eingriffe eines Bedieners werden minimiert, bevorzugt obsolet.

Weitere Vorteile sind aus der nachfolgenden Beschreibung der Zeichnungen ersichtlich. Ausführungsbeispiele der Erfindung sind in den Zeichnungen dargestellt und werden im Folgenden näher beschrieben.

Es zeigen:

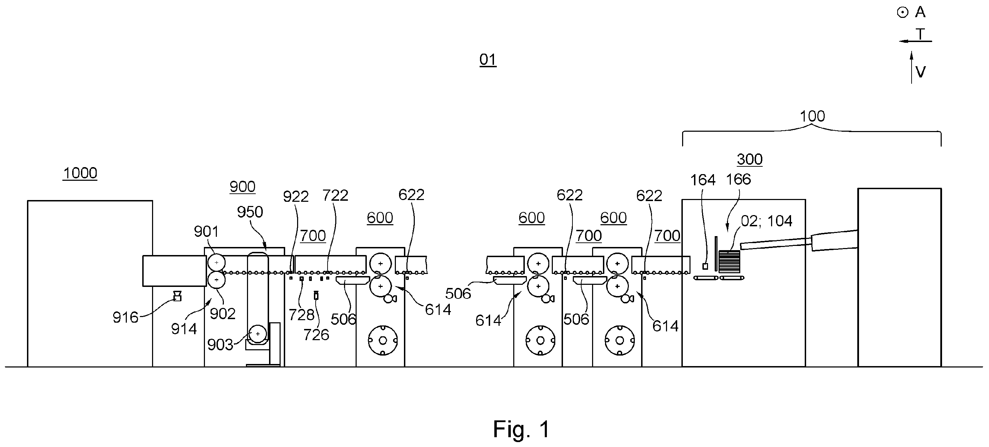

- Fig. 1: eine schematische Darstellung einer Bearbeitungsmaschine mit Auftragaggregaten und Formgebungsaggregat;

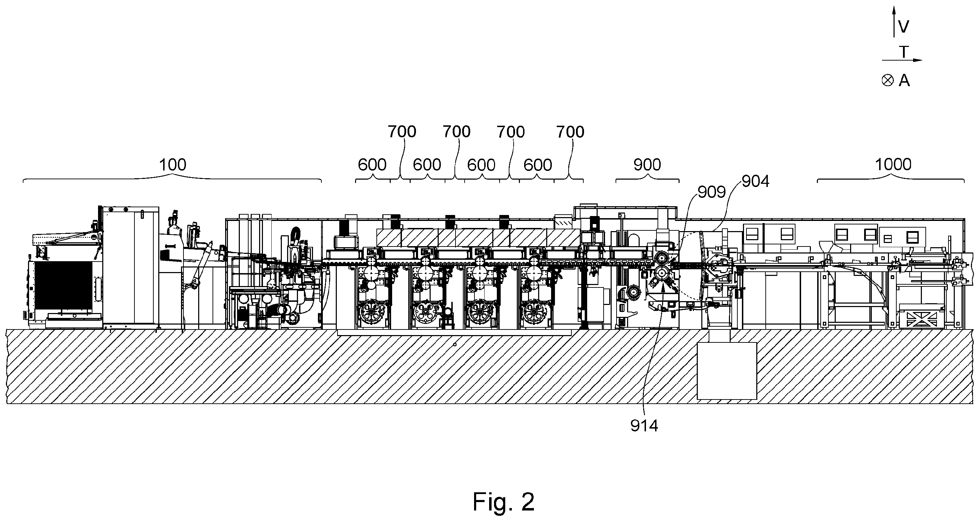

- Fig. 2: eine Seitenansicht einer Bearbeitungsmaschine in einer bevorzugten Konfiguration mit vier Druckwerken sowie dem Stanzaggregat mit Vorrichtung zum Wechseln;

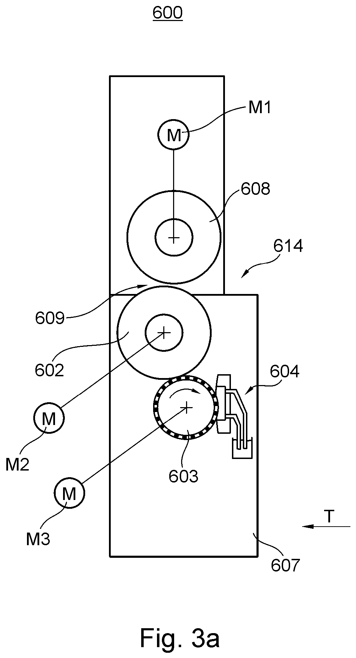

- Fig. 3a: eine schematische Darstellung eines Auftragaggregats mit einem Farbauftrag von unten;

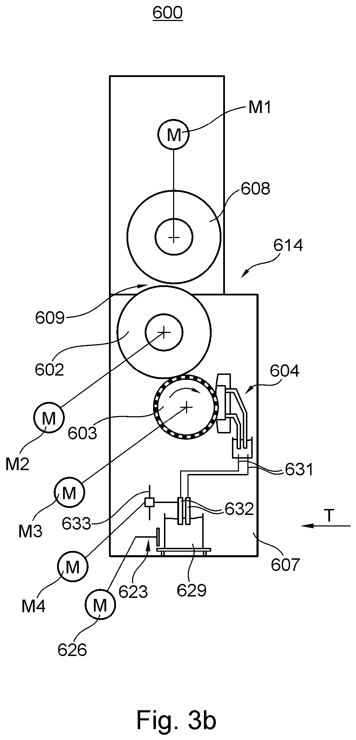

- Fig. 3b: eine schematische Darstellung eines Auftragaggregats mit Farbauftrag von unten und schematisch dargestellter Ausschiebevorrichtung einer Farbquelle;

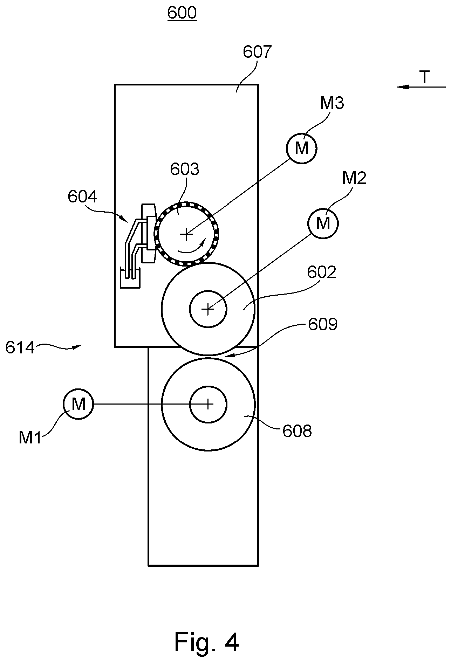

- Fig. 4: eine schematische Darstellung eines Auftragaggregats mit einem Farbauftrag von oben;

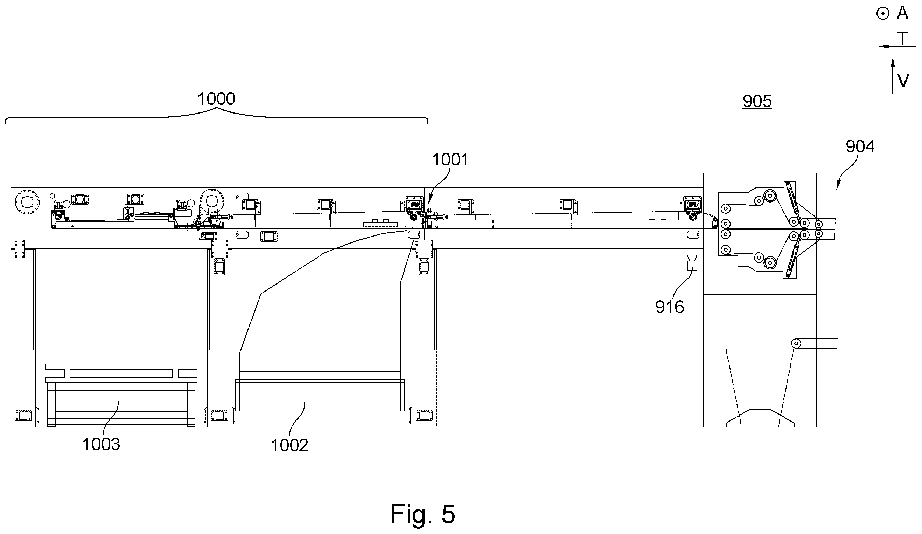

- Fig. 5: eine schematische Darstellung der Bogenauslage mit einer Vorrichtung zum Ausschleusen von Bogen sowie einer der Bogenauslage vorgeordneten Separationseinrichtung;

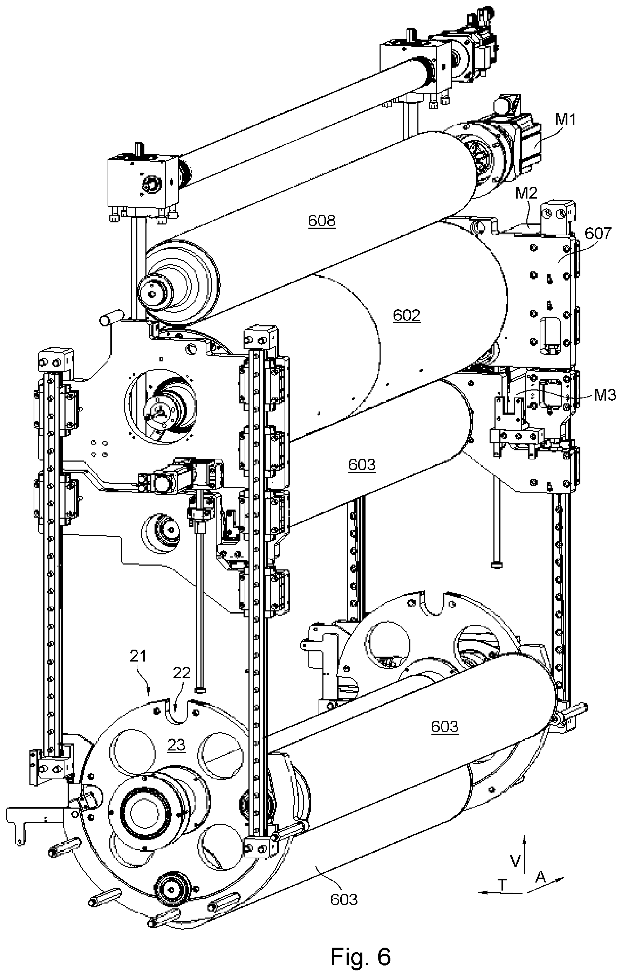

- Fig. 6: eine perspektivische Darstellung eines Auftragaggregats aufweisend eine Speichereinrichtung zum Wechsel einer Rasterwalze;

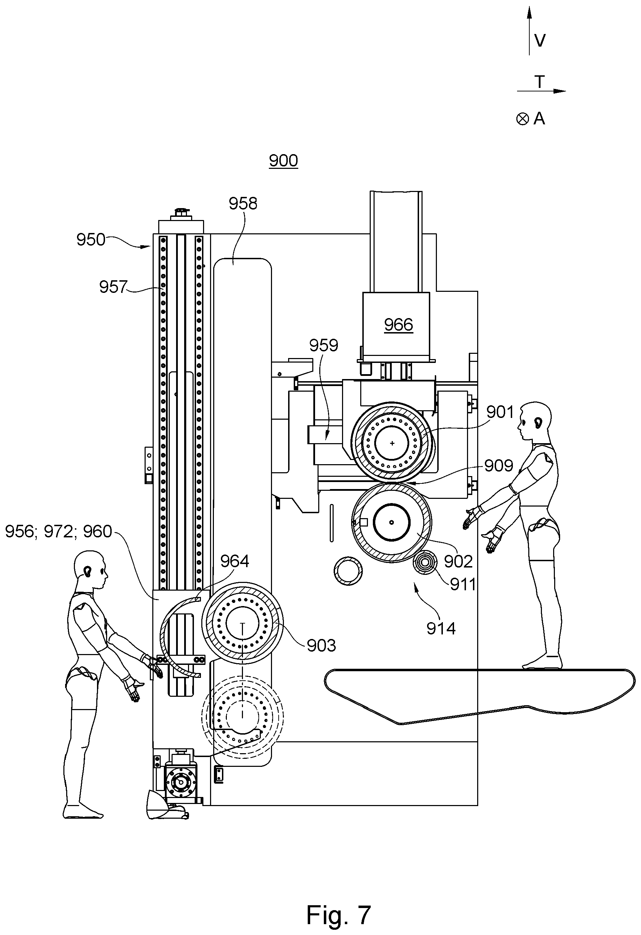

- Fig. 7: eine schematische Darstellung eines Formgebungsaggregats aufweisend eine Vorrichtung zum Wechseln der Formzylinder;

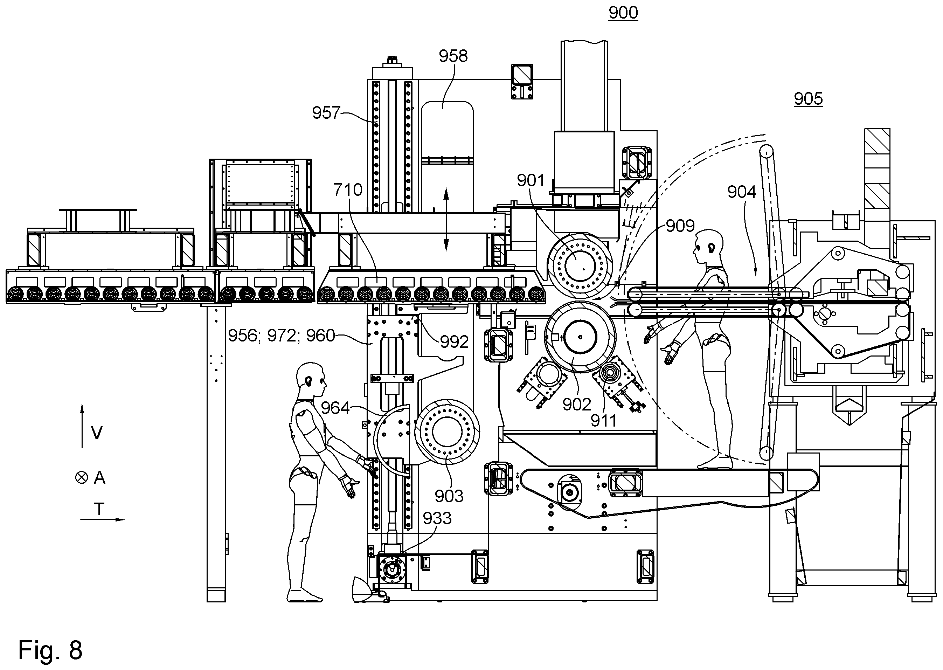

- Fig. 8: eine schematische Darstellung eines Teils der Bearbeitungsmaschine in bevorzugter Ausführung, wobei das Formgebungsaggregat eine Vorrichtung zum Wechseln der Formzylinder aufweist und aufzeigend die bevorzugte Ausführung, wobei eine Transporteinrichtung in Transportrichtung vor der Bearbeitungsstelle verstellbar ist und wobei ein Transportmittel in Transportrichtung nach der Bearbeitungsstelle schwenkbar ist;

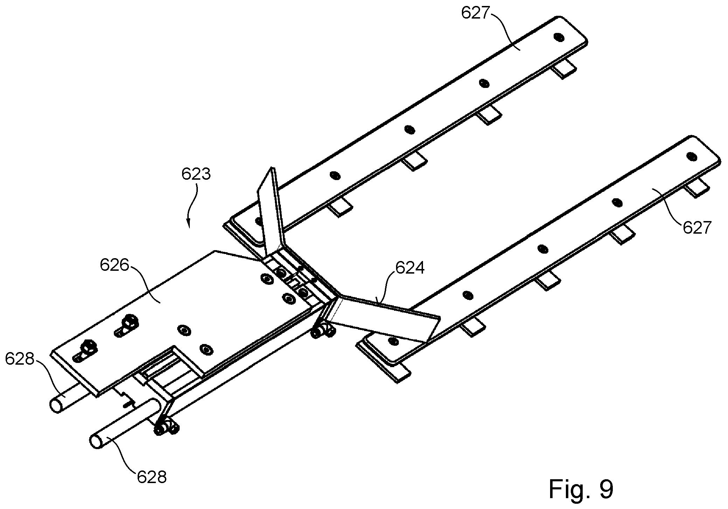

- Fig. 9: eine perspektivische Darstellung einer Ausschiebevorrichtung einer Farbquelle;

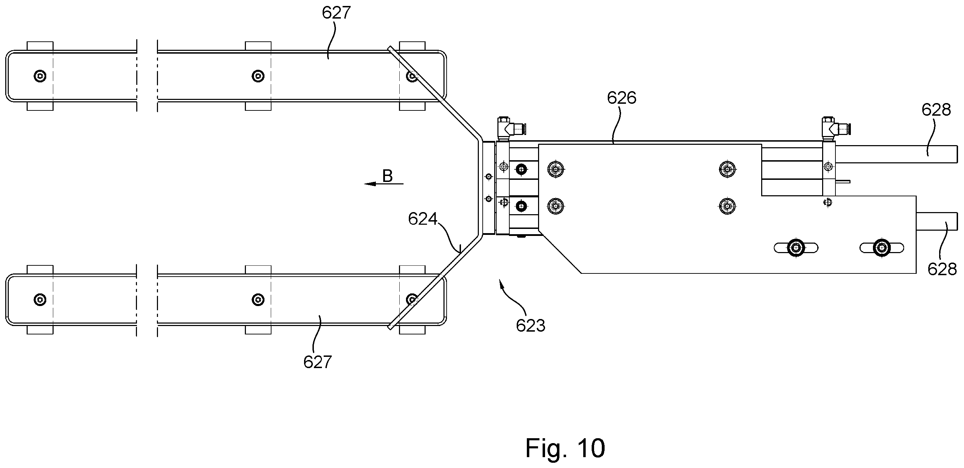

- Fig. 10: eine Darstellung einer Ausschiebevorrichtung einer Farbquelle in Draufsicht.

Eine Bearbeitungsmaschine 01 ist bevorzugt als Druckmaschine 01 und/oder als Formgebungsmaschine 01, insbesondere Stanzmaschine 01 ausgebildet. Die Druckmaschine 01 ist beispielsweise als Flexo-Druckmaschine 01 ausgebildet.

Bevorzugt wird die Bearbeitungsmaschine 01 als Druckmaschine 01 bezeichnet, wenn sie zumindest ein Druckwerk 614 und/oder zumindest ein Druckaggregat 600 aufweist, insbesondere unabhängig davon, ob sie weitere Aggregate zur Bearbeitung von Substrat 02 aufweist. Beispielsweise weist eine als Druckmaschine 01 ausgebildete Bearbeitungsmaschine 01 zusätzlich zumindest ein weiteres solches Aggregat 900 auf, beispielsweise zumindest ein Formgebungsaggregat 900, das bevorzugt als Stanzaggregat 900, weiter bevorzugt als Stanzeinrichtung 900, ausgebildet ist. Bevorzugt wird die Bearbeitungsmaschine 01 als Formgebungsmaschine 01 bezeichnet, wenn sie zumindest ein Formgebungswerk 914 und/oder zumindest ein Formgebungsaggregat 900 aufweist, insbesondere unabhängig davon, ob sie weitere Aggregate 600 zur Bearbeitung von Substrat 02 aufweist. Bevorzugt wird die Bearbeitungsmaschine 01 als Stanzmaschine 01 bezeichnet, wenn sie zumindest ein Stanzwerk 914 und/oder zumindest ein Stanzaggregat 900 und/oder zumindest eine Stanzeinrichtung 900 aufweist, insbesondere unabhängig davon, ob sie weitere Aggregate 600 zur Bearbeitung von Substrat 02 aufweist. Beispielsweise weist eine als Formgebungsmaschine 01 oder Stanzmaschine 01 ausgebildete Bearbeitungsmaschine 01 zusätzlich zumindest ein weiteres Aggregat 600 zur Bearbeitung von Substrat 02 auf, beispielsweise zumindest ein Druckaggregat 600 und/oder zumindest ein Druckwerk 614. Beispielsweise weist die Bearbeitungsmaschine somit lediglich als Auftragaggregate 600 ausgebildete Bearbeitungsaggregate 600 oder lediglich als Formgebungsaggregate 900 ausgebildete Bearbeitungsaggregate 900 oder sowohl mindestens ein als Auftragaggregat 600 als auch mindestens ein als Formgebungsaggregat 900 ausgebildete Bearbeitungsaggregate 600; 900 auf.

Bevorzugt ist die Bearbeitungsmaschine 01 als Bogenbearbeitungsmaschine 01 ausgebildet, also als Bearbeitungsmaschine 01 für eine Bearbeitung von bogenförmigem Substrat 02, bezeichnet auch als Bogen 02, insbesondere bogenförmigem Bedruckstoff 02. Beispielsweise ist die Bogenbearbeitungsmaschine 01 als Bogendruckmaschine 01 und/oder als Bogenformgebungsmaschine 01 und/oder als Bogenstanzmaschine 01 ausgebildet. Die Bearbeitungsmaschine 01 ist weiter bevorzugt als Wellpappbogenbearbeitungsmaschine 01 ausgebildet, also als Bearbeitungsmaschine 01 für eine Bearbeitung von bogenförmigem Substrat 02 oder Bogen 02 aus Wellpappe 02, insbesondere bogenförmigem Bedruckstoff 02 aus Wellpappe 02. Weiter bevorzugt ist die Bearbeitungsmaschine 01 als Bogendruckmaschine 01 ausgebildet, insbesondere als Wellpappbogendruckmaschine 01, also als Druckmaschine 01 für ein Beschichten und/oder Bedrucken von bogenförmigem Substrat 02 oder Bogen 02 aus Wellpappe 02, insbesondere bogenförmigem Bedruckstoff 02 aus Wellpappe 02. Beispielsweise ist die Druckmaschine 01 als eine nach einem druckformgebundenen Druckverfahren arbeitende Druckmaschine 01 ausgebildet.

Das Bearbeiten eines Substrates 02 beschreibt im Vorangegangenen und im Folgenden das Verändern zumindest einer Eigenschaft des betreffenden Substrates 02 insbesondere bezüglich dessen physikalischer Eigenschaften und/oder Materialeigenschaften, insbesondere dessen Masse und/oder Form und/oder Aussehen. Insbesondere stellen Stanzen, Schneiden, Prägen, Rillen, Ausbrechen und/oder Nutzentrennen eine Bearbeitung des Substrates 02 dar. Vorzugsweise wird ebenfalls ein Bedrucken, Lackieren und/oder Grundieren als Bearbeitung angesehen. Durch Bearbeitungsvorgänge ist ein bestehendes Substrat 02 in ein Zwischenprodukt oder Endprodukt weiterverarbeitbar. Die Bearbeitungsmaschine 01 kann deshalb beispielsweise auch als Verarbeitungsmaschine zur Verarbeitung von bevorzugt bogenförmigem Substrat 02 bezeichnet werden.

Die Bearbeitungsmaschine 01 ist Substrat 02, bevorzugt bogenförmiges Substrat 02, verarbeitend ausgebildet. Vorzugsweise weist das Substrat 02 mindestens einen Nutzen auf. Ein Nutzen ist vorzugsweise jener Bereich des Substrates 02, welcher als ein Produkt der Bearbeitungsmaschine 01, insbesondere als ein Zwischenprodukt zur Herstellung eines Endproduktes, ausgebildet ist und/oder beispielsweise zu einem gewünschten oder geforderten Endprodukt weiterverarbeitet wird und/oder weiterverarbeitbar ausgebildet ist. Bevorzugt ist hier das gewünschte oder geforderte Endprodukt, welches bevorzugt durch Weiterverarbeitung des jeweiligen Nutzens erzeugt wird, eine Faltschachtel und/oder eine Verpackung. Sofern nicht explizit unterschieden wird, soll hier vom Begriff des bogenförmigen Substrates 02, insbesondere eines Bedruckstoffes 02, speziell des Bogens 02 grundsätzlich jedes flächig und in Abschnitten vorliegendes Substrat 02, also auch tafelförmig oder plattenförmig vorliegende Substrate 02, also auch Tafeln bzw. Platten, umfasst sein. Das so definierte bogenförmige Substrat 02 bzw. der Bogen 02 ist beispielsweise aus Papier oder Karton, d. h. als Papier- oder Kartonbogen, oder durch Bogen 02, Tafeln oder ggf. Platten aus Kunststoff, Pappe, Glas oder Metall gebildet. Weiter bevorzugt handelt es sich bei dem Substrat 02 um Wellpappe 02, insbesondere Wellpappbogen 02. Vorzugsweise ist der zumindest eine Bogen 02 als Wellpappe 02 ausgebildet. Unter einer Dicke eines Bogens 02 ist bevorzugt eine Abmessung orthogonal zu einer größten Fläche des Bogens 02 zu verstehen. Diese größte Fläche wird auch als Hauptfläche bezeichnet. Die Dicke der Bogen 02 beträgt beispielsweise zumindest 0,1 mm, weiter bevorzugt zumindest 0,3 mm und noch weiter bevorzugt zumindest 0,5 mm. Gerade bei Wellpappbogen 02 sind auch deutlich größere Dicken üblich, beispielsweise zumindest 4 mm oder auch 10 mm und mehr. Wellpappbogen 02 sind vergleichsweise stabil und daher wenig biegbar. Entsprechende Anpassungen der Bearbeitungsmaschine 01 erleichtern deshalb die Bearbeitung von Bogen 02 großer Dicke. Beispielsweise weist das bogenförmige Substrat 02, insbesondere ein Bogen 02, eine Länge von mindestens 50,0 cm (fünfzig Zentimeter), bevorzugt von mindestens 52,0cm, weiter bevorzugt von mindestens 60,0 cm, weiter bevorzugt von mindestens 100,0 cm (einhundert Zentimeter), bevorzugt von mindestens 120,0 cm (einhundertzwanzig Zentimeter), weiter bevorzugt von mindestens 130,0 cm (einhundertdreißig Zentimeter), weiter bevorzugt von mindestens 150,0 cm (einhundertfünfzig Zentimeter), auf. Beispielsweise weist das Substrat 02 eine maximale Länge von 200,0 cm, vorzugsweise maximal 180,0 cm, insbesondere maximal 170,0 cm auf. Die Länge beschreibt vorzugsweise die Länge des Substrates 02 entlang der Transportrichtung T innerhalb der Bearbeitungsmaschine 01, also bevorzugt den Abstand von dessen vorlaufendem Ende zu dessen nachlaufenden Ende. Beispielsweise weist das bogenförmige Substrat 02, insbesondere ein Bogen 02, eine Breite von mindestens 50,0 cm, bevorzugt von mindestens 60,0 cm, weiter bevorzugt von mindestens 100,0 cm (einhundert Zentimeter), weiter bevorzugt von mindestens 120,0 cm (einhundertzwanzig Zentimeter), weiter bevorzugt von mindestens 130,0 cm (einhundertdreißig Zentimeter), weiter bevorzugt von mindestens 150,0 cm (einhundertfünfzig Zentimeter), noch weiter bevorzugt zumindest 200 cm (zweihundert Zentimeter), noch weiter bevorzugt zumindest 250 cm (zweihundert und fünfzig Zentimeter), noch weiter bevorzugt zumindest 280 cm (zweihundert und achtzig Zentimeter), auf. Beispielsweise beträgt die maximale Breite des Substrates 02 350,0 cm, insbesondere 300,0 cm. Die Breite beschreibt vorzugsweise die Breite des Substrates 02 entlang der Arbeitsbreite, also in Querrichtung A, innerhalb der Bearbeitungsmaschine 01.

Bevorzugt ist der jeweilige, vorzugsweise der zumindest eine, Bogen 02 aus Papier oder Pappe oder Karton gebildet. Nach DIN 6730 ist Papier ein flächiger, im Wesentlichen aus Fasern meist pflanzlicher Herkunft bestehender Werkstoff, der durch Entwässerung einer Faserstoffaufschwemmung auf einem Sieb gebildet wird. Dabei entsteht ein Faserfilz, der anschließend getrocknet wird. Die flächenbezogene Masse von Papier beträgt bevorzugt maximal 225 g/m². Nach DIN 6730 ist Pappe ein flächiger, im wesentlicher aus Fasern pflanzlicher Herkunft bestehender Werkstoff, der durch Entwässerung einer Faserstoffaufschwemmung auf einem oder zwischen zwei Sieben gebildet wird. Das Fasergefüge wird verdichtet und getrocknet. Bevorzugt wird Pappe durch Zusammenkleben oder Zusammenpressen aus Zellstoff gefertigt. Bevorzugt ist Pappe als Vollpappe oder Wellpappe 02 ausgebildet. Wellpappe 02 ist im Vorangegangenen und im Folgenden Pappe aus einer oder mehrerer Lagen eines gewellten Papiers, das auf eine Lage oder zwischen mehreren Lagen eines anderen bevorzugt glatten Papiers oder Pappe geklebt ist. Bevorzugt beträgt die flächenbezogene Masse von Pappe von über 225 g/m². Der Begriff Karton bezeichnet im Vorangegangenen und im Folgenden ein bevorzugt einseitig gestrichenes papiernes Flächengebilde bevorzugt mit einer flächenbezogenen Masse von mindestens 150 g/m² und maximal 600 g/m². Bevorzugt weist ein Karton eine hohe Festigkeit relativ zu Papier auf. Eine Vorderkante ist bevorzugt eine Kante des Substrates 02, welche entlang des Transportweges in der Bearbeitungsmaschine 01 als erste Kante des Substrates 02 in Kontakt zu den jeweiligen Aggregaten 100; 300; 600; 700; 900; 1000, insbesondere zu den Bearbeitungsstellen 609; 909, tritt. Eine Hinterkante ist eine entlang des Transportweges letzte Kante des Substrates 02.

Die Bearbeitungsmaschine 01 weist mehrere Aggregate 100; 300; 600; 700; 900; 1000 auf. Unter einem Aggregat ist dabei bevorzugt jeweils eine Gruppe von Einrichtungen zu verstehen, die funktionell zusammenwirken, insbesondere um einen bevorzugt in sich geschlossenen Bearbeitungsvorgang von Bogen 02 durchführen zu können. Beispielsweise sind zumindest zwei und bevorzugt zumindest drei und weiter bevorzugt sämtliche der Aggregate 100; 300; 600; 700; 900; 1000 als Module 100; 300; 600; 700; 900; 1000 ausgebildet oder zumindest jeweils einem solchen zugeordnet. Unter einem Modul ist dabei insbesondere ein jeweiliges Aggregat oder ein Gebilde aus mehreren Aggregaten zu verstehen, das bevorzugt zumindest ein Transportmittel und/oder zumindest einen eigenen steuerbaren und/oder regelbaren Antrieb aufweist und/oder als eigenständig funktionsfähiges Modul und/oder jeweils für sich hergestellte und/oder jeweils für sich montierte Maschineneinheit oder funktionelle Baugruppe ausgebildet ist. Unter einem eigenen steuerbaren und/oder regelbaren Antrieb eines Aggregats oder Moduls ist insbesondere ein Antrieb zu verstehen, der dazu dient, Bewegungen von Bauteilen dieses Aggregats oder Moduls anzutreiben und/oder der dazu dient, einen Transport von Substrat 02, insbesondere Bogen 02 durch dieses jeweilige Aggregat oder Modul und/oder durch zumindest einen Einwirkbereich dieses jeweiligen Aggregats oder Moduls zu bewirken und/oder der dazu dient, zumindest ein für einen Kontakt mit Bogen 02 vorgesehenes Bauteil des jeweiligen Aggregats oder Moduls direkt oder indirekt anzutreiben. Vorzugsweise ist der eigene steuerbare und/oder regelbare Antrieb eines Aggregats oder Moduls Bewegungen von Bauteilen dieses Aggregats oder Moduls antreibend ausgebildet und/oder einen Transport von Substrat 02 bewirkend ausgebildet und/oder zumindest ein für einen Kontakt mit Bogen 02 vorgesehenes Bauteil des jeweiligen Aggregats oder Moduls direkt oder indirekt antreibend ausgebildet. Diese Antriebe der Aggregate 100; 300; 600; 700; 900; 1000 der Bearbeitungsmaschine 01 sind bevorzugt als insbesondere lagegeregelte Elektromotoren ausgebildet. Durch die Anordnung und/oder Verkettung der Aggregate 100; 300; 600; 700; 900; 1000 weist die Bearbeitungsmaschine 01 bevorzugt einen unterbrechungsfreien Substratstrom, insbesondere der bogenförmigen Substrate 02, von dem ersten Aggregat 100; 300; 600; 700; 900; 1000 zu dem letzten Aggregat 100; 300; 600; 700; 900; 1000 der Bearbeitungsmaschine 01, insbesondere zumindest zwischen den Bearbeitungsaggregaten 600; 900, auf.

Bevorzugt weist jedes Aggregat 100; 300; 600; 700; 900; 1000 zumindest eine Antriebssteuerung und/oder zumindest einen Antriebsregler auf, die dem jeweiligen zumindest einen Antrieb des jeweiligen Aggregats 100; 300; 600; 700; 900; 1000 zugeordnet ist. Die Antriebssteuerungen und/oder Antriebsregler der einzelnen Aggregate 100; 300; 600; 700; 900; 1000 sind bevorzugt einzeln und unabhängig voneinander betreibbar. Weiter bevorzugt sind die Antriebssteuerungen und/oder Antriebsregler der einzelnen Aggregate 100; 300; 600; 700; 900; 1000 schaltungstechnisch, insbesondere mittels zumindest eines BUS-Systems, miteinander und/oder mit einer Maschinensteuerung der Bearbeitungsmaschine 01 derart verknüpft und/oder verknüpfbar, dass eine aufeinander abgestimmte Steuerung und/oder Regelung der Antriebe mehrerer oder aller Aggregate 100; 300; 600; 700; 900; 1000 der Bearbeitungsmaschine 01 vorgenommen wird und/oder werden kann. Die einzelnen Aggregate 100; 300; 600; 700; 900; 1000 und/oder insbesondere Module 100; 300; 600; 700; 900; 1000 der Bearbeitungsmaschine 01 sind demnach zumindest bezüglich ihrer Antriebe bevorzugt elektronisch aufeinander abgestimmt betreibbar und/oder betrieben, insbesondere mittels zumindest einer virtuellen und/oder elektronischen Leitachse. Vorzugsweise gibt die Leitachse, bevorzugt die virtuelle Leitachse, einen Maschinentakt vor. Bevorzugt wird dafür die virtuelle und/oder elektronische Leitachse vorgegeben, beispielsweise von einer übergeordneten Maschinensteuerung der Bearbeitungsmaschine 01. Alternativ oder zusätzlich sind die einzelnen Aggregate 100; 300; 600; 700; 900; 1000 der Bearbeitungsmaschine 01 zumindest bezüglich ihrer Antriebe beispielsweise mechanisch miteinander synchronisiert und/oder synchronisierbar. Bevorzugt sind die einzelnen Aggregate 100; 300; 600; 700; 900; 1000 der Bearbeitungsmaschine 01 jedoch zumindest bezüglich ihrer Antriebe mechanisch voneinander entkoppelt.

Der für den Transport von Substrat 02 vorgesehene Raumbereich, den das Substrat 02 im Falle dessen Anwesenheit zumindest zeitweise einnimmt, ist der Transportweg. Vorzugsweise wird der Transportweg durch zumindest eine Einrichtung zum Führen des Substrates 02 in einem Betriebszustand der Bearbeitungsmaschine 01 festgelegt. Soweit nicht anders beschrieben zeichnen sich die Aggregate 100; 300; 600; 700; 900; 1000 der Bearbeitungsmaschine 01 bevorzugt jeweils dadurch aus, dass der durch das jeweilige Aggregat 100; 300; 600; 700; 900; 1000 festgelegte Abschnitt eines für einen Transport von Substrat 02, insbesondere Bogen 02, vorgesehenen Transportwegs zumindest im Wesentlichen flach und weiter bevorzugt vollständig flach ist. Unter einem im Wesentlichen flachen Abschnitt des für den Transport von Substrat 02, insbesondere Bogen 02, vorgesehenen Transportwegs ist dabei ein Abschnitt zu verstehen, der einen minimalen Krümmungsradius aufweist, der zumindest 2 Meter beträgt, weiter bevorzugt zumindest 5 Meter und noch weiter bevorzugt zumindest 10 Meter und noch weiter bevorzugt zumindest 50 Meter. Ein vollständig flacher Abschnitt weist einen unendlich großen Krümmungsradius auf und ist somit ebenfalls im Wesentlichen flach und weist somit ebenfalls einen minimalen Krümmungsradius auf, der zumindest 2 Meter beträgt. Soweit nicht anders beschrieben zeichnen sich die Aggregate 100; 300; 600; 700; 900; 1000 der Bearbeitungsmaschine 01 bevorzugt jeweils dadurch aus, dass der durch das jeweilige Aggregat 100; 300; 600; 700; 900; 1000 festgelegte Abschnitt des für den Transport von Bogen 02 vorgesehenen Transportwegs zumindest im Wesentlichen horizontal und weiter bevorzugt ausschließlich horizontal verläuft. Dieser Transportweg erstreckt sich bevorzugt in einer Richtung T, insbesondere Transportrichtung T. Ein im Wesentlichen horizontal verlaufender für den Transport von Bogen 02 vorgesehener Transportweg bedeutet insbesondere, dass der vorgesehene Transportweg im gesamten Bereich des jeweiligen Aggregats 100; 300; 600; 700; 900; 1000 ausschließlich eine oder mehrere Richtungen aufweist, die höchstens um 30°, bevorzugt höchstens um 15° und weiter bevorzugt höchstens um 5° von zumindest einer horizontalen Richtung abweicht.

Die Richtung des Transportwegs, insbesondere die Transportrichtung T, ist dabei insbesondere diejenige Richtung, in der die Bogen 02 an der Stelle transportiert werden, an der die Richtung gemessen wird. Die insbesondere für einen Transport von Bogen 02 vorgesehene Transportrichtung T ist die Richtung T, die bevorzugt zumindest im Wesentlichen und weiter bevorzugt vollständig horizontal orientiert ist und/oder die bevorzugt von einem ersten Aggregat 100; 300; 600; 700; 900; 1000 der Bearbeitungsmaschine 01 zu einem letzten Aggregat 100; 300; 600; 700; 900; 1000 der Bearbeitungsmaschine 01 weist, insbesondere von einem Bogenanlegeraggregat 100 bzw. einer Substratzufuhreinrichtung 100 einerseits zu einem Auslageaggregat 1000 bzw. einer Substratabgabeeinrichtung 1000 andererseits, und/oder die bevorzugt in eine Richtung weist, in der die Bogen 02 abgesehen von vertikalen Bewegungen oder vertikalen Komponenten von Bewegungen transportiert werden, insbesondere von einem ersten Kontakt mit einem der Substratzufuhreinrichtung 100 nachgeordneten Aggregat 300; 600; 700; 900; 1000 der Bearbeitungsmaschine 01 oder ersten Kontakt mit der Bearbeitungsmaschine 01 bis zu einem letzten Kontakt mit der Bearbeitungsmaschine 01. Unabhängig davon, ob die Anlageeinrichtung 300 ein eigenständiges Aggregat 300 oder Modul 300 ist oder Bestandteil der Substratzufuhreinrichtung 100 ist, ist die Transportrichtung T bevorzugt diejenige Richtung T, in der eine horizontale Komponente einer Richtung weist, die von der Anlageeinrichtung 300 zu der Substratabgabeeinrichtung 1000 orientiert ist.

Eine Richtung A, bevorzugt eine Querrichtung A, vorzugsweise auch axiale Richtung A genannt, ist bevorzugt eine orthogonal zu der Transportrichtung T der Bogen 02 und/oder orthogonal zu dem vorgesehenen Transportweg der Bogen 02 durch das zumindest eine Auftragaggregat 600 und/oder durch das zumindest eine Formgebungsaggregat 900 und/oder durch die zumindest eine Bogenauslage 1000 orientierte Richtung A. Die Querrichtung A ist bevorzugt eine horizontal orientierte Richtung A. Eine Arbeitsbreite der Bearbeitungsmaschine 01 und/oder des zumindest einen Auftragaggregats 600 und/oder des zumindest einen Formgebungsaggregats 900 und/oder der zumindest einen Bogenauslage 1000 ist bevorzugt eine Abmessung, die sich bevorzugt orthogonal zu dem vorgesehenen Transportweg der Bogen 02 durch das zumindest eine Auftragaggregat 600 und/oder das zumindest eine Formgebungsaggregat 900 und/oder die zumindest eine Bogenauslage 1000 erstreckt, weiter bevorzugt in der Querrichtung A. Die Arbeitsbreite der Bearbeitungsmaschine 01 entspricht bevorzugt einer maximalen Breite, die ein Bogen 02 aufweisen darf, um noch mit der Bearbeitungsmaschine 01 bearbeitet werden zu können, also insbesondere einer maximalen mit der Bearbeitungsmaschine 01 verarbeitbaren Bogenbreite. Unter der Breite eines Bogens 02 ist dabei insbesondere dessen Abmessung in der Querrichtung A zu verstehen. Dies ist bevorzugt unabhängig davon, ob diese Breite des Bogens 02 größer oder kleiner ist als eine dazu orthogonale horizontale Abmessung des Bogens 02, die weiter bevorzugt die Länge dieses Bogens 02 darstellt. Die Arbeitsbreite der Bearbeitungsmaschine 01 entspricht bevorzugt der Arbeitsbreite des zumindest einen Auftragaggregats 600 und/oder des zumindest einen Formgebungsaggregats 900 und/oder der zumindest einen Bogenauslage 1000. Die Arbeitsbreite der Bearbeitungsmaschine 01, insbesondere Bogenbearbeitungsmaschine 01 beträgt bevorzugt zumindest 100 cm, weiter bevorzugt zumindest 150 cm, noch weiter bevorzugt zumindest 160 cm, noch weiter bevorzugt zumindest 200 cm und noch weiter bevorzugt zumindest 250 cm.

Eine vertikale Richtung V bezeichnet vorzugsweise eine Richtung, die parallel zu dem Normalenvektor einer Ebene aufgespannt durch die Transportrichtung T und die Querrichtung A angeordnet ist. Beispielsweise im Bereich der Formgebungseinrichtung 900 ist die vertikale Richtung V bevorzugt so orientiert, dass sie von dem Bedruckstoff 02 hin zu einem Formzylinder 901 der Formgebungseinrichtung 900 zeigt.

Die Bearbeitungsmaschine 01 weist bevorzugt zumindest eine Substratzufuhreinrichtung 100 auf, die weiter bevorzugt als Aggregat 100, insbesondere Substratzufuhraggregat 100 und/oder als Modul 100, insbesondere Substratzufuhrmodul 100 ausgebildet ist. Insbesondere im Fall einer Bogenbearbeitungsmaschine 01 ist die zumindest eine Substratzufuhreinrichtung 100 bevorzugt als Bogenanleger 100 und/oder Bogenanlegeraggregat 100 und/oder Bogenanlegermodul 100 ausgebildet. Ein zu bearbeitender Bogen 02 ist vorzugsweise in einem Stapel innerhalb eines Stapelbereichs der Substratzufuhreinrichtung 100 zu Beginn eines Bearbeitungsauftrags angeordnet und wird von dort durch die Bearbeitungsmaschine 01 gefördert. Das mindestens eine Substratzufuhraggregat 100 ist bevorzugt mit mindestens einer Steuerungseinheit verbunden, welche bevorzugt zumindest ein Element des Substratzufuhraggregats 100 steuert.

Vorzugsweise weist die zumindest eine Substratzufuhreinrichtung 100 an dem Stapelbereich mindestens einen Vorderanschlag und/oder mindestens einen seitlichen Anschlag und/oder mindestens einen Hinteranschlag auf, welcher weiter bevorzugt auf das mindestens eine Substrat 02 des Stapels zu und von diesem weg beweglich ist und als Geradstoßer wirkt. Beispielsweise alternativ ist mindestens einer der Anschläge in dessen Position fest, beispielsweise der Vorderanschlag. Das Substratzufuhraggregat 100 weist vorzugsweise mindestens ein Übernahmemittel, bevorzugt Saugmittel, zum Abführen des mindestens einen Substrats 02 von dem Stapel auf, insbesondere durch Ansaugen und Abtransport in einem angesaugtem Zustand. Vorzugsweise zur Unterstützung des Prozesses, insbesondere zum Anheben mindestens einer Kante eines obersten Substrates 02 des Stapels, ist mindestens eine Blaseinrichtung vorgesehen, welche auf den Stapel in dem Stapelbereich gerichtet ist. Vorzugsweise wird durch diese Luft seitlich an den Stapel geblasen, vorzugsweise im Bereich der obersten Substrate 02 des Stapels, beispielsweise wird dadurch eine Vorderkante oder Hinterkante oder Seitenkante mindestens eines Substrates 02 angehoben und/oder von weiteren Substraten 02 des Stapels gelockert. Dem Stapelbereich der Substratzufuhreinrichtung 100 ist vorzugsweise mindestens ein Schuppenanleger nachgeordnet. Dieser ist vorzugsweise so ausgebildet, dass ein von dem Stapel abgezogene Substrate 02 in geschuppter Anordnung in Transportrichtung T transportiert werden. Bevorzugt wird dies mittels mindestens eines Fördermittels, bevorzugt Förderband und/oder Transportrolle erzielt. Die Substrate 02 werden vorzugsweise in geschuppter Anordnung oder einzeln einem Anlageaggregat 300 zugeführt.

Die Bearbeitungsmaschine 01 weist bevorzugt zumindest ein Aggregat 300, bevorzugt eine Anlageeinrichtung 300 auf, die weiter bevorzugt als Anlageaggregat 300 und/oder Anlagemodul 300 ausgebildet ist. Die zumindest eine Anlageeinrichtung 300, auch als Anlage bezeichnet, ist in bevorzugter Ausführung als Bestandteil der Substratzufuhreinrichtung 100 ausgebildet. Die Substratzufuhreinrichtung 100 umfasst bevorzugt das Anlageaggregat 300. Bevorzugt erfolgt in dem Anlageaggregat 300 die Ausrichtung des mindestens einen Substrates 02. Das zumindest eine Anlageaggregat 300 weist vorzugsweise einen Speicherbereich 166 auf, in welchem Substrate 02 im Falle von deren Anwesenheit in Form mindestens eines Stapels, dem Anlegerstapel 104, oder in geschuppter Anordnung, das heißt mit mindestens einer Kante überlappend, vorliegen.

Ist der Schuppenanleger vorgeordnet, so wird in dem Speicherbereich 166 vorzugsweise zeitweise ein Stapel von Substrat 02, der Anlegerstapel 104, gebildet. Vorzugsweise weist die zumindest eine Substratzufuhreinrichtung 100, insbesondere dessen Anlageaggregat 300, mindestens einen Vorderanschlag und/oder mindestens einen seitlichen Anschlag und/oder mindestens einen Hinteranschlag auf, welcher bevorzugt das mindestens eine Substrat 02 in dem Speicherbereich 166 ausrichtet. Beispielsweise ist mindestens ein Anschlag fest oder beweglich, auf das Substrat 02 zu und/oder von dem Substrat 02 weg bewegbar. Vorzugsweise wird das mindestens eine Substrat 02 in der zumindest einen Substratzufuhreinrichtung 100, insbesondere in dessen Anlageaggregats 300, mittels des mindestens einen festen oder beweglichen Anschlags ausgerichtet. Vorzugsweise vereinzelt die Substratzufuhreinrichtung 100 und/oder das Anlageaggregat 300 die Substrate 02, sodass die Substrate 02 nacheinander, vorzugsweise zueinander beabstandet, durch die nachfolgenden Aggregate 600; 700; 900; 1000 der Bearbeitungsmaschine 01 transportiert werden.

Die zumindest eine Substratzufuhreinrichtung 100, bevorzugt das zumindest eine Anlageaggregat 300 der Substratzufuhreinrichtung 100, weist bevorzugt mindestens ein Beschleunigungsmittel, bevorzugt mindestens ein primäres Beschleunigungsmittel und/oder mindestens ein sekundäres Beschleunigungsmittel, zur Beschleunigung des Substrates 02 auf Bearbeitungsgeschwindigkeit auf. Vorzugsweise ist mindestens ein Beschleunigungsmittel des Substratzufuhraggregats 100, insbesondere dessen Anlageaggregats 300, als primäres Beschleunigungsmittel ausgebildet, welches ein einzelnes Substrat 02 aus dem Speicherbereich 166 abzieht und/oder das einzelne Substrat 02 auf eine Bearbeitungsgeschwindigkeit der Bearbeitungsaggregate 600; 900 beschleunigt. In bevorzugter Ausführung ist das mindestens eine primäre Beschleunigungsmittel mindestens ein Förderband, alternativ beispielsweise ein Schwinggreifer. Bevorzugt erfolgt das Abziehen des Substrates 02 von dem Stapel in dem Speicherbereich 166, weiter bevorzugt wird das unterste Substrat 02 des Anlegerstapels 104 abgezogen. Beispielsweise alternativ zu dem Abziehen von dem Stapel, insbesondere wenn der Speicherbereich 166 zur Speicherung der Substrate 02 in geschuppter Anordnung ohne die Bildung eines Stapels ausgebildet ist, wird ein vorderstes Substrat 02 der geschuppten Anordnung durch das mindestens eine Beschleunigungsmittel abgezogen. Das mindestens eine Beschleunigungsmittel, insbesondere das mindestens eine primäre Beschleunigungsmittel, ist bevorzugt mit einer Steuerungseinheit verbunden, welche bevorzugt das Beschleunigungsmittel aktiviert oder deaktiviert und/oder welche vorzugsweise die Geschwindigkeit des Beschleunigungsmittels einstellt. Beispielsweise ist das mindestens eine sekundäre Beschleunigungsmittel ein Substrat 02 in Umfangsrichtung, also in Transportrichtung T, ausrichtend ausgebildet, insbesondere durch eine Anpassung der Geschwindigkeit des Substrates durch Beschleunigen vorzugsweise in Abhängigkeit von mindestens einem das Substrat 02 erfassenden Sensors 164.

Die Bearbeitungsmaschine 01 weist beispielsweise zumindest ein als Konditionierungseinrichtung ausgebildetes Aggregat, insbesondere Konditionierungsaggregat auf, das weiter bevorzugt als Modul, insbesondere als Konditionierungsmodul ausgebildet ist. Eine solche Konditionierungseinrichtung ist beispielsweise als Vorbereitungseinrichtung oder als Nachbehandlungseinrichtung ausgebildet. Die Bearbeitungsmaschine 01 weist bevorzugt zumindest ein als Vorbereitungseinrichtung ausgebildetes Aggregat, insbesondere Vorbereitungsaggregat auf, das weiter bevorzugt als Modul, insbesondere als Vorbereitungsmodul ausgebildet ist und eine Konditionierungseinrichtung darstellt. Die Bearbeitungsmaschine 01 weist bevorzugt zumindest eine Nachbehandlungseinrichtung auf.

Die Bearbeitungsmaschine 01 weist mindestens ein Bearbeitungsaggregat 600; 900 auf. Das mindestens eine Bearbeitungsaggregat 600; 900 ist vorzugsweise dem Substratzufuhraggregat 100 nachgeordnet. Die Bearbeitungsmaschine 01 weist mindestens zwei Bearbeitungsaggregate 600; 900 auf, welche bevorzugt zueinander verschiedene Bearbeitungsprozesse durchführen. Mindestens ein Bearbeitungsaggregat 900 der Bearbeitungsmaschine 01 ist als Formgebungsaggregat 900, bevorzugt als Stanzaggregat 900, das als Rotationsstanzeinrichtung 900 ausgebildet ist, ausgebildet. Das mindestens eine als Formgebungsaggregat 900 ausgebildete Bearbeitungsaggregat 900 ist als Rotationsstanzeinrichtung 900 ausgebildet. Die Bearbeitungsverfahren, welche das mindestens eine Formgebungsaggregat 900 ausführt, sind beispielsweise Stanzen, Rillen, Prägen, Perforieren und/oder Ausbrechen. Bevorzugt ist das mindestens eine Formgebungsaggregat 900 dazu ausgebildet, mindestens zwei der Bearbeitungsverfahren auszuführen. Vorzugsweise weist es hierfür mindestens zwei zueinander verschiedene Werkzeuge auf.

Die Bearbeitungsmaschine 01 weist mindestens ein, vorzugsweise mindestens zwei, bevorzugt mindestens vier, als Auftragaggregat 600 ausgebildetes Bearbeitungsaggregat 600 auf. Bevorzugt ist dabei mindestens ein dem mindestens einen Auftragaggregat 600 nachfolgendes Bearbeitungsaggregat 900 als Formgebungsaggregat 900, insbesondere Stanzaggregat 900, ausgebildet.

In bevorzugter Ausführung ist genau eine Formgebungseinrichtung 900, insbesondere Stanzeinrichtung 900 und/oder Rotationsstanzeinrichtung 900, angeordnet. In einer alternativen Ausführung weist die Bearbeitungsmaschine 01 mindestens zwei Formgebungsaggregate 900 auf, welche zur Ausführung von zueinander verschiedenen Bearbeitungsverfahren ausgebildet sind. Beispielsweise weist ein Formgebungsaggregat 900 Stanzwerkzeug auf, während ein weiteres Formgebungsaggregat Rillwerkzeug und/oder Prägewerkzeug und/oder Ausbrechwerkzeug aufweist. Beispielsweise weist die Bearbeitungsmaschine aufweisend mehrere Formgebungsaggregate zusätzlich kein Auftragaggregat oder aber mindestens ein Auftragaggregat auf. Wird im Vorangegangenen und im Folgenden das mindestens eine Formgebungsaggregat 900 insbesondere durch die Ausführung als Stanzaggregat 900 beschrieben, so ist diese Beschreibung ebenfalls für weitere Formgebungsaggregate, wie beispielsweise ein Rillaggregat, Prägeaggregat oder Ausbrechaggregat, anzuwenden. Dabei ist vorzugsweise das Werkzeug an das jeweilige durchzuführende Bearbeitungsverfahren angepasst und/oder anpassbar.

Die Bearbeitungsmaschine 01 weist zumindest ein, bevorzugt mindestens zwei, weiter bevorzugt mindestens vier, weiter bevorzugt mindestens sechs, beispielsweise acht, als Auftragaggregat 600 ausgebildetes Bearbeitungsaggregat 600 auf. Das zumindest eine Auftragaggregat 600 ist vorzugsweise je nach Funktion und/oder Auftragverfahren angeordnet und/oder aufgebaut. Das zumindest eine Auftragaggregat 600 dient bevorzugt dazu, zumindest ein jeweiliges Auftragfluid oder Beschichtungsmittel vollflächig und/oder teilflächig auf die Bogen 02 aufzutragen. Ein Beispiel eines Auftragaggregats 600 ist ein Druckaggregat 600 oder Druckmodul 600, das insbesondere einem Auftragen von Druckfarbe und/oder Tinte auf Substrat 02, insbesondere Bogen 02, dient. Insbesondere ist das zumindest eine Auftragaggregat 600 Auftragfluid, bevorzugt Druckfarbe und/oder Tinte, beispielsweise vollflächig und/oder teilflächig auf die Bogen 02 auftragend ausgebildet. Im Vorangegangenen und im Nachfolgenden gelten auch ein gegebenenfalls angeordnetes Grundierungsaggregat und/oder ein gegebenenfalls Lackierungsaggregat als solches Auftragaggregat 600 oder Druckaggregat 600. Bevorzugt wird mindestens ein Substrat 02, insbesondere Bogen 02, in dem mindestens einen vorderen, vorzugsweise als Auftragaggregat 600 ausgebildeten, Bearbeitungsaggregat 600 bedruckt und/oder lackiert und/oder grundiert. Das mindestens eine Auftragaggregat 600 weist vorzugsweise das mindestens eine Auftragwerk 614 auf. Vorzugsweise ist zumindest ein erstes Auftragaggregat 600 in Transportrichtung T als ein Grundierungsaggregat ausgebildet. Vorzugsweise ist zumindest ein letztes Auftragaggregat 600 in Transportrichtung T als ein Lackierungsaggregat ausgebildet. Vorzugsweise ist mindestens ein, bevorzugt mindestens vier, Auftragaggregat 600, welches bevorzugt dem Grundierungsaggregat nachgeordnet ist und/oder welches dem Lackierungsaggregat vorgeordnet ist, als Druckaggregat 600 ausgebildet. Im Falle der Anwesenheit des mindestens einen Auftragaggregats 600 ist das mindestens eine Formgebungsaggregat 900 vorzugsweise nach dem mindestens einen Auftragaggregat 600, bevorzugt nach allen Auftragaggregaten 600 der Bearbeitungsmaschine 01, angeordnet.

Insbesondere unabhängig von der Funktion des damit auftragbaren Auftragfluids lassen sich Auftragaggregate 600 bevorzugt hinsichtlich ihrer Auftragverfahren unterscheiden. Ein Beispiel eines Auftragaggregats 600 ist ein formbasiertes Auftragaggregat 600, das insbesondere zumindest eine feste, körperliche und bevorzugt auswechselbare Druckform aufweist. Formbasierte Auftragaggregate 600 arbeiten bevorzugt nach einem Flachdruckverfahren, insbesondere Offset-Flachdruckverfahren und/oder nach einem Tiefdruckverfahren und/oder nach einem Hochdruckverfahren, insbesondere bevorzugt nach einem Flexo-Druckverfahren. Das entsprechende Auftragaggregat 600 ist dann beispielsweise ein Flexo-Auftragaggregat 600 oder Flexo-Druckaggregat 600, insbesondere Flexo-Auftragmodul 600 oder Flexo-Druckmodul 600. Das mindestens eine Auftragaggregat 600 ist bevorzugt als formbasiertes Auftragaggregat 600, weiter bevorzugt ein Flexo-Auftragaggregat 600, ausgebildet. In besonders bevorzugter Ausführung weist das Flexo-Auftragaggregat 600 ein Flexo-Grundierwerk oder ein FlexoDruckwerk oder ein Flexo-Lackwerk auf.

Das mindestens eine Auftragaggregat 600 weist einen Formzylinder 602 auf. Der Formzylinder 602 ist vorzugsweise mittels eines Antriebs M2, bevorzugt Einzelantriebs, angetrieben. Dem Formzylinder 602 zugeordnet ist vorzugsweise ein Gegendruckzylinder 608. Zwischen Formzylinder 602 und Gegendruckzylinder 608 befindet sich die als Auftragsstelle 609 ausgebildete Bearbeitungsstelle 609. Der Gegendruckzylinder ist mittels eines Antriebs M1 angetrieben, vorzugsweise mittels eines Einzelantriebs oder eines Antriebs des Druckaggregats 600, oder in einer alternativen Ausführung zusätzlich zu dem Formzylinder 602 mittels des Antriebs M1 des Formzylinders 602. Der Formzylinder 602 und der Gegendruckzylinder 608 sind vorzugsweise jeweils als Zylinder 602 bzw. Zylinder 608 ausgebildet.

Weiter weist das mindestens eine Auftragaggregat 600, insbesondere im Falle eines Flexo-Druckaggregats 600, vorzugsweise mindestens eine Versorgungswalze 603, welche bevorzugt als Rasterwalze 603 ausgebildet ist, auf. Der Formzylinder 602 wird im Betrieb über die Versorgungswalze 603 mit Druckfluid versorgt. Dazu steht die Versorgungswalze 603 bevorzugt mit einer Kammerrakel 604 in Kontakt.

Das mindestens eine Auftragaggregat 600 weist bevorzugt mindestens ein Versorgungssystem von Auftragfluid, bevorzugt Farbe und/oder Tinte und/oder Lack und/oder Grundierungsmittel, auf. Das Versorgungssystem ist bevorzugt dazu ausgebildet, das Auftragfluid den rotierenden Walzen und/oder Zylindern des Auftragwerks 614, also bevorzugt der Rasterwalze 603, zuzuführen. Bevorzugt ist die Kammerrakel 604 ein Bestandteil des Versorgungssystems.

Die Kammerrakel 604 weist bevorzugt mindestens eine Rakel und bevorzugt zusätzlich mindestens einen Zwischenspeicher von Auftragfluid auf. Der Zwischenspeicher wird beispielsweise von einer Fluidquelle 629 des Versorgungssystems mit Auftragfluid versorgt. Das Auftragfluid wird durch die Kammerrakel 604 vorzugsweise auf die Versorgungswalze 603 aufgebracht.

Vorzugsweise ist an dem mindestens einen Auftragaggregat 600 mindestens eine Fluidquelle 629 vorgesehen. Bevorzugt ist die mindestens eine Fluidquelle 629 von dem Auftragaggregat 600 entfernbar ausgebildet. Die mindestens eine Fluidquelle 629 ist bevorzugt eine Quelle des Auftragfluids, also der Farbe und/oder Tinte und/oder Lack und/oder Grundierungsmittel des Auftragaggregats 600. Beispielsweise ist die Fluidquelle 629 als Farbeimer ausgebildet. Bevorzugt ist ein Volumen, insbesondere Füllvolumen, der Fluidquelle 629 für Auftragfluid größer als diejenige Menge an Auftragfluid, die für einen einzelnen Bearbeitungsauftrag benötigt wird. Während eines Einsatzes der Fluidquelle 629 in dem Auftragaggregat 629 ist diese in einer Wirkposition angeordnet. In bevorzugter Ausführung ist die mindestens eine Fluidquelle 629 so angeordnet, dass sie insbesondere bei verriegelter Bearbeitungsmaschine 01 für einen Bediener zugänglich ist. Besonders bevorzugt ist die mindestens eine Fluidquelle 629 an einer Außenseite eines Gehäuses des Auftragaggregats 600 angeordnet. Das Gehäuse stellt vorzugsweise eine Sicherheitsabdeckung des Auftragwerks 614 dar und weist beispielsweise eine verriegelbare Tür auf.

Das Versorgungssystem weist bevorzugt mindestens eine Leitung 631 von Auftragfluid, bevorzugt zumindest eine als Zuleitung ausgebildete Leitung 631 und/oder mindestens eine als Ableitung ausgebildete Leitung 631, auf. Die mindestens eine Leitung 631 ist dazu ausgebildet, mit der, im Falle von deren Anwesenheit, in der Wirkposition angeordneten Fluidquelle 629 zur Bereitstellung von Auftragfluid zusammenzuwirken, insbesondere um das Auftragfluid an die Kammerrakel 604 und/oder Rasterwalze 603 zu fördern. Die mindestens eine Leitung 631 führt bevorzugt das Auftragfluid in das Auftragwerk 614, insbesondere in das Gehäuse hinein. Bevorzugt steht die mindestens eine Leitung 631 mit zumindest einer Pumpeinrichtung in Wirkverbindung.

Die mindestens eine Leitung 631 weist bevorzugt, insbesondere an deren der Fluidquelle 629 zugewandtem Ende, mindestens eine Lanze 632 auf. Bevorzugt weist die mindestens eine Zuleitung und die mindestens eine Ableitung jeweils eine Lanze 632 auf. Beispielsweise ist die Lanze 632 ein starres rohrförmiges Bauteil. Die mindestens eine Lanze 632 ist vorzugsweise dazu ausgebildet, in die Fluidquelle 629, insbesondere in das darin vorhandene Auftragfluid, einzutauchen und eine Förderung des Auftragfluids sicherzustellen. In einer ersten, abgesenkten Position ist die mindestens eine Lanze 632, vorzugsweise zumindest mit einer Spitze der Lanze 632, vorzugsweise zum Eindringen in ein Volumen der, im Falle von deren Anwesenheit, in der Wirkposition angeordneten Fluidquelle 629 angeordnet.

In bevorzugter Ausführung ist die mindestens eine Lanze 632, bevorzugt die mindestens zwei Lanzen 632, verstellbar, besonders bevorzugt höhenverstellbar, ausgebildet. Die mindestens eine Lanze 632 weist vorzugsweise zumindest die erste, abgesenkte Position und zumindest eine zweite, angehobene Position auf. Diese Positionen sind bevorzugt in vertikaler Richtung V zueinander beabstandet. Die mindestens eine Lanze 632, insbesondere mit deren Spitze, ist in der zweiten Position bevorzugt außerhalb des Volumens der mindestens einen Fluidquelle 629 im Falle von deren Anwesenheit angeordnet. Die mindestens eine Lanze 632 ist bevorzugt entlang mindestens einer Führung 633, bevorzugt Linearführung, beispielsweise einem Schienensystem, zur Verstellung zwischen den mindestens zwei Positionen verstellbar. Vorzugsweise weist die mindestens eine Lanze 632 mindestens eine Befestigung, bevorzugt die mindestens zwei Lanzen 632 eine gemeinsame Befestigung, auf, die entlang der mindestens einen Führung 633 verstellbar ist. Bevorzugt ist mindestens ein Antrieb M4 vorgesehen, der in Antriebsverbindung zu der mindestens einen Lanze 632 steht und diese zwischen der mindestens einen ersten und zweiten Position verstellt. Beispielsweise ist der Antrieb M4 der mindestens einen Lanze 632 ein pneumatischer oder hydraulischer Antrieb oder ein elektrischer Antrieb. Der mindestens eine Antrieb M4 der mindestens einen Lanze 632 steht bevorzugt in Datenverbindung zu mindestens einer Steuerungseinheit Bearbeitungsmaschine 01, insbesondere zu derjenigen Steuerungseinheit, die zumindest einen Reinigungsvorgang, insbesondere Waschvorgang, des Auftragaggregates 600 steuert und/oder regelt.

Die mindestens eine Fluidquelle 629 ist während des Bearbeitungsbetriebs des Auftragaggregats 600 vorzugsweise in der Wirkposition angeordnet, in der sie bevorzugt in Wirkverbindung zu der mindestens einen Leitung 631, insbesondere der mindestens einen Lanze 632, treten kann oder tritt. Bevorzugt ist die mindestens eine Fluidquelle 629 aus deren Wirkposition entfernbar. Eine zu der Wirkposition beabstandete Position der mindestens einen Fluidquelle 629 ist eine Abstellposition, vorzugsweise in eine Bewegungsrichtung B beabstandet. Vorzugsweise steht die mindestens eine Fluidquelle 629 auf einem Untergrund, der ein Gleiten der Fluidquelle 629 darüber erlaubt.

Beispielsweise ist unterhalb der mindestens einen Fluidquelle 629 mindestens eine, bevorzugt mindestens zwei, Gleitschiene 627 angeordnet, entlang derer die mindestens eine Fluidquelle 629 zwischen der Wirkposition und der Abstellposition verstellbar ist. Beispielsweise alternativ steht die mindestens eine Fluidquelle 629 auf dem Boden der Maschinenhalle.

Das mindestens eine Auftragaggregat 600 weist bevorzugt mindestens eine Ausschiebevorrichtung 623 mit mindestens einer Kontaktfläche 624 auf. Die mindestens eine Ausschiebevorrichtung 623 ist bevorzugt dazu ausgebildet, die mindestens eine Fluidquelle 629 im Falle von deren Anwesenheit von der Wirkposition in die Abstellposition zu verstellen, insbesondere in Bewegungsrichtung B. Beispielsweise schiebt die mindestens eine Ausschiebevorrichtung 623 die mindestens eine Fluidquelle 629 seitlich, bevorzugt in Querrichtung A, aus deren Wirkposition heraus. Die Bewegungsrichtung B ist bevorzugt eine lineare Richtung B, die besonders bevorzugt horizontal gerichtet ist, die beispielsweise von dem Gehäuse des Auftragaggregates 600 in oder entgegen der Querrichtung A wegzeigend gerichtet ist.

Die mindestens eine Ausschiebevorrichtung 623 weist die mindestens eine Kontaktfläche 624 auf, die bevorzugt in Wirkkontakt zu der Fluidquelle 629 treten kann oder im Falle von deren Anwesenheit tritt. Ein Normalenvektor der Kontaktfläche 624, der also auf der Kontaktfläche 624 senkrecht steht, ist vorzugsweise in Richtung der Fluidquelle 629 gerichtet. Bevorzugt weist die mindestens eine Kontaktfläche 624 mindestens einen Flächenbereich auf, der einen Normalenvektor mit einer Richtungskomponente in Bewegungsrichtung B aufweist. Zum Beispiel ist mindestens ein Normalenvektor eines ersten Flächenbereichs parallel zu der Bewegungsrichtung B. Zusätzlich oder alternativ ist mindestens ein Normalenvektor eines zweiten Flächenbereichs beispielsweise parallel zu einer zu der Bewegungsrichtung B verschiedenen Richtung. Bevorzugt bildet der erste und/oder zweite Flächenbereich der Kontaktfläche 624 eine Ebene, die aufgespannt wird durch die vertikale Richtung V und eine von der Bewegungsrichtung B verschiedenen horizontale Richtung.

Die mindestens eine Kontaktfläche 624 weist bevorzugt zumindest eine erste, deaktivierte Position und eine zweite, aktivierte Position auf. Die mindestens eine Ausschiebevorrichtung 623 ist vorzugsweise bei Anordnung der mindestens einen Kontaktfläche 624 in der ersten, deaktivierten Position die Wirkposition zur Anordnung der Fluidquelle 629 freigebend ausgebildet. Die mindestens eine Ausschiebevorrichtung 623 ist vorzugsweise bei Anordnung der mindestens einen Kontaktfläche 624 in der zweiten, aktivierten Position die Wirkposition zur Anordnung der Fluidquelle 629 blockierend ausgebildet. bevorzugt ist die mindestens eine Kontaktfläche 624 in der deaktivierten Position zu der Wirkposition der Fluidquelle 629 beabstandet angeordnet, beispielsweise in einer Gehäusewand des Auftragaggregates 600 versenkt. Die mindestens eine Kontaktfläche 624 ist bevorzugt während der Abarbeitung eines Bearbeitungsauftrages durch das Auftragaggregat 600 in der deaktivierten Position angeordnet. Die mindestens eine Ausschiebevorrichtung 623 weist bevorzugt mindestens eine Führung 628, bevorzugt Führungsschiene 628, weiter bevorzugt linear gerichtete Führungsschiene 628, zur Verstellung der mindestens einen Kontaktfläche 624 von der deaktivierten Position in die aktivierte Position und/oder umgekehrt auf.

Die mindestens eine Ausschiebevorrichtung 623 weist bevorzugt mindestens ein Stellmittel 626, bevorzugt mindestens einen Stellzylinder 626, zur Verstellung der mindestens einen Kontaktfläche 624 von der deaktivierten Position in die aktivierte Position und/oder umgekehrt auf. Besonders bevorzugt ist das mindestens eine Stellmittel 626 ein pneumatischer oder hydraulischer Stellzylinder 626. Alternativ ist das mindestens eine Stellmittel 626 zum Beispiel ein elektrisches Antriebsmittel, beispielsweise aufweisend einen Elektromotor.

Das mindestens eine Stellmittel 626 der mindestens einen Ausschiebevorrichtung 623 steht bevorzugt in Datenverbindung zu mindestens einer Steuerungseinheit der Bearbeitungsmaschine 01. Das mindestens eine Stellmittel 626 steht bevorzugt in Datenverbindung zu einer einen als Reinigungsvorgang ausgebildeten Umrüstprozess des mindestens einen Auftragaggregates 600 steuernden oder regelnden Steuerungseinheit der Bearbeitungsmaschine 01. Bevorzugt zusätzlich oder alternativ steht das mindestens eine Stellmittel 626 in Datenverbindung zu einer einen Umrüstprozess des mindestens einen Formgebungsaggregats 900 steuernden oder regelnden Steuerungseinheit der Bearbeitungsmaschine 01. Das mindestens eine Stellmittel 626 der mindestens einen Ausschiebevorrichtung 623 wird bevorzugt abgestimmt auf mindestens einen Umrüstprozess des mindestens einen Formgebungsaggregats 900 angesteuert oder geregelt, insbesondere durch die mindestens eine Steuerungseinheit. In besonders bevorzugter Ausführung steht das mindestens eine Stellmittel 626 der mindestens einen Ausschiebevorrichtung 623 und der mindestens eine Antrieb M4 der mindestens einen Lanze 632 in Datenverbindung zu mindestens einer die Ansteuerung des mindestens einen Stellmittels 626 und des mindestens einen Antriebs M4 aufeinander abstimmenden Steuerungseinheit der Bearbeitungsmaschine 01. Besonders bevorzugt werden das mindestens eine Stellmittel 626 der mindestens einen Ausschiebevorrichtung 623 und der mindestens eine Antrieb M4 der mindestens einen Lanze 632 aufeinander abgestimmt durch die mindestens eine Steuerungseinheit der Bearbeitungsmaschine 01 angesteuert oder geregelt.

Die Versorgungswalze 603 weist bevorzugt eine Näpfchenstruktur auf ihrer Mantelfläche auf, insbesondere auf der Mantelfläche ihres Walzenballens. Die Versorgungswalze 603 ist vorzugsweise als Zylinder 603 ausgebildet. Die zumindest eine Versorgungswalze 603 ist bevorzugt mit einem Formzylinder 602 in Kontakt stehend und/oder in Kontakt bringbar angeordnet. Vorzugsweise wird Auftragfluid von der an den Formzylinder 602 angestellten Rasterwalze 603 auf den Formzylinder 602 übertragen. Ein als Antrieb M3 der Versorgungswalze 603 ausgebildeter Versorgungswalzenantrieb M3 ist bevorzugt über eine lösbare Verbindung mit der Versorgungswalze 603 verbunden und/oder verbindbar, beispielsweise mittels einer Kupplung. Diese Verbindung wird bevorzugt gelöst, wenn die Versorgungswalze 603 in eine Speichereinrichtung 21 abgelegt werden soll. Die zumindest eine Speichereinrichtung 21 weist bevorzugt zumindest zwei, weiter bevorzugt zumindest drei, noch weiter bevorzugt zumindest vier und noch weiter bevorzugt genau vier Speicheraufnahmen 22 zur Aufnahme jeweils einer Versorgungswalze 603 auf. Auf diese Weise kann immer zumindest eine Versorgungwalze 603 in der Nähe ihres vorgesehenen Einsatzortes bereitgehalten werden, falls eine aktuell eingesetzte Versorgungswalze 603 ersetzt werden soll. Üblicherweise findet ein solches Ersetzen beispielsweise statt, wenn ein nachfolgender Bearbeitungsauftrag eine geringere oder größere Menge von Auftragfluid pro Fläche erfordert. Die Speichereinrichtung 21 weist bevorzugt zumindest eine bewegbare Umlagereinrichtung 23 auf, mittels der die zumindest zwei Speicheraufnahmen 22 bewegbar und in unterschiedlichen Speicherpositionen anordenbar sind. Die Speichereinrichtung 21 ist somit geeignet die Rasterwalze 603 schnell und einfach auszutauschen. Zum Wechsel der Rasterwalze 603 wird vorzugsweise die auszuwechselnde Rasterwalze 603 von deren Arbeitsposition an mindestens eine freie Speicherposition der Umlagereinrichtung 23 geführt und mindestens eine einzuwechselnde Rasterwalze 603 aus deren Speicherposition in der Umlagereinrichtung 23 an die Arbeitsposition bewegt. Vorzugsweise wird dieser Wechselprozess mittels der Maschinensteuerung gesteuert. Insbesondere in Verbindung mit einer Vorrichtung zum Wechseln 950 von Stanzzylindern 901; 903 kann ein beschleunigter Jobwechsel geschafft werden. Beide Einrichtungen tragen damit zu beschleunigten Jobwechsel der Bearbeitungsmaschine 01 entscheidend bei. Die Zylinder 602, 603, 608 werden vorzugsweise von einem Gestell 607 getragen.

Eine bevorzugte erste Ausführungsform des Flexo-Auftragwerks 614 ist dafür vorgesehen, Substrat 02, insbesondere Bogen 02 und/oder Bedruckstoff 02, von unten mit Auftragfluid zu versehen, beispielsweise zu bedrucken. In dieser bevorzugten ersten Ausführungsform des Flexo-Auftragwerks 614 ist der Formzylinder 602 bevorzugt unterhalb des Gegendruckzylinders 608 angeordnet. In einer alternativen Ausführungsform werden die Bogen 02 von oben bedruckt. Dann ist das Druckaggregat 600 bevorzugt spiegelverkehrter Reihenfolge mit konstruktiven Anpassungen ausgebildet. Bevorzugt werden die Bogen 02 auf der gegenüberliegenden Seite zu dem Druckbild gestanzt. Daher ist ein Bedrucken von unten die bevorzugte Ausführungsform.

Der Formzylinder 602 des mindestens einen Auftragaggregats 600 ist bevorzugt relativ zu der Versorgungswalze 603 mittels Stellantrieben und/oder relativ zu dem Gegendruckzylinder 608 mittels Stellantrieben bewegbar. Dadurch kann eine entsprechende Auftragstelle 609 bevorzugt an unterschiedliche Dicken von zu bearbeitendem Substrat 02 angepasst werden.

Die mindestens eine Druckform des Formzylinders 602 ist vorzugsweise an den durchgeführten Bearbeitungsauftrag angepasst. Somit besteht ein Bedarf, die mindestens eine Druckform bei einem Wechsel zu einem anderen Bearbeitungsauftrag zu wechseln. Bevorzugt erfolgt der Druckformwechsel automatisiert. Die Druckform ist mit einem Druckbild versehbar oder versehen. Mittels Haltemittel, beispielsweise Einhängeschenkeln der Druckform in Zusammenwirkung mit Federelementen des Zylinders 602, lässt sich die Druckform bevorzugt auf dem Formzylinder 602 befestigen, vorzugsweise durch Erzeugen einer Haltekraft. Beispielsweise wird die Druckform dabei in einem Kanal in der Mantelfläche des Zylinders 602 eingehängt und/oder festgespannt. Die Druckform wird durch Entfernen der Haltekraft, beispielsweise unter Einsatz eines vorzugsweise pneumatisch betätigbaren Stellmittels, von dem Formzylinder 602 gelöst. Das mindestens eine Auftragaggregat 600 weist bevorzugt mindestens ein Druckformmagazin auf. Das Druckformmagazin weist vorzugsweise mindestens eine Aufnahmeeinrichtung für eine einzuwechselnde Druckform und mindestens eine Aufnahmeeinrichtung für eine auszuwechselnde Druckform auf. Zur Entnahme einer gebrauchten Druckform und/oder zur Bereitstellung einer neuen Druckform in den Aufnahmeeinrichtungen, sind die Aufnahmeeinrichtungen bevorzugt von der vom Formzylinder 602 abgewandten Seite oder von einer zur Transportrichtung des Substrates 02 parallel verlaufenden Seite der Druckformmagazine zugänglich.

Vorzugsweise erstrecken sich die Druckformmagazine über die gesamte Arbeitsbreite der Bearbeitungsmaschine 01 und/oder weiter bevorzugt werden die Aufnahmeeinrichtungen über die in dem jeweiligen Bearbeitungsauftrag notwendigen Bereich der Arbeitsbreite mit Druckformen bestückt. Vorzugsweise ist das Druckformmagazin an den Formzylinder 602 anstellbar, beispielsweise mittels Schwenkens, wodurch die Zugänglichkeit weiter erhöht wird.

In einer Arbeitsposition des Druckformmagazins, also wenn dieses an den Formzylinder 602 angestellt ist, ist vorzugsweise mindestens eine Druckform zwischen den Aufnahmeeinrichtungen und dem Formzylinder 602 austauschbar, bevorzugt indem entweder eine zur Ausführung eines Druckauftrags nicht mehr benötigte Druckform vom Formzylinder 602 abgenommen und in die Aufnahmeeinrichtung eingeführt oder eine zur Ausführung des Druckauftrags neue Druckform aus der Aufnahmeeinrichtung herausgeführt und auf dem Formzylinder 602 montiert wird. Beispielsweise ist mindestens ein Leitblech zur Führung der Druckformen vorgesehen. Es ist vorzugsweise ein Antriebsmittel vorgesehen, welches die Druckform aus der Aufnahmeeinrichtung zum Formzylinder 602 oder umgekehrt bewegt. Vorzugsweise wird eine gebrauchte Druckform von dem Mantel des Formzylinders 602 gelöst und durch Drehen des Formzylinders von dem Formzylinder 602 abgezogen und in die Aufnahmeeinrichtung übergeben. Nach dem Entfernen der gebrauchten Druckform wird eine neue Druckform vorzugsweise von deren Aufnahmeeinrichtung freigegeben und mittels des Antriebsmittels und/oder durch Drehen des Formzylinders 602 in die entgegengesetzte Richtung auf den Formzylinder 602 aufgezogen. Die neue Druckform wird anschließend an dem Formzylinder 602 befestigt, vorzugsweise durch Aufbringen der Haltekraft.

Es ist vorteilhaft, wenn die Durchführung, insbesondere der Vollzug eines Druckformwechsels sensorisch überwacht wird. Es ist vorteilhaft, den Formzylinder 602 seitenregistermäßig in eine vordefinierte Position zu bringen, ihn z. B. bezüglich des Seitenregisters zu nullen, bevor es zu einem Austausch einer Druckform zwischen dem Formzylinder 602 und dem Druckformmagazin kommt. Alternativ zur Einstellung des Formzylinders 602 kann auch das Druckformmagazin seitlich relativ zum Formzylinder 602 in eine vordefinierte Position gebracht werden, damit der Austausch einer Druckform zwischen dem Druckformmagazin und dem Formzylinder 602 zielgerichtet und ohne seitlichen Versatz erfolgen kann. Gleichfalls sind die Druckformmagazine in Verbindung mit den Formzylindern 602 derart steuerbar, dass vorzugsweise von einem der Bearbeitungsmaschine 01 zugeordneten Leitstand und/oder durch die Maschinensteuerung aus selektiv ein Druckformwechsel veranlasst werden kann. Weil die Druckformmagazine während einer laufenden Produktion der Bearbeitungsmaschine 01 für einen Druckformwechsel vorbereitet werden können, reduziert sich die einen Stillstand der Auftragaggregate 600 erfordernde Rüstzeit auf einen äußerst kurzen Zeitraum von z. B. weniger als zwei Minuten, vorzugsweise von weniger als neunzig Sekunden, für einen kompletten Wechsel aller Druckformen der in dieser Bearbeitungsmaschine 01 angeordneten Auftragaggregate 600. Ein derart rascher Druckformwechsel selbst bei einer größeren Anzahl von Druckformen erhöht die Wirtschaftlichkeit der Bearbeitungsmaschine 01 aufgrund ihrer äußerst kurzen Stillstandszeit erheblich.

Beispielsweise weist das Auftragaggregat 600 mindestens eine Reinigungseinrichtung, bevorzugt Wascheinrichtung, zum Reinigen, insbesondere Waschen, mindestens eines der Zylinder 602; 603; 608 auf. Vorteilhafterweise wird mit Wasser und/oder auf das jeweilige Auftragfluid abgestimmtem Reinigungsmittel gewaschen. Insbesondere ist mindestens eine Reinigungseinrichtung an den Formzylinder 602 anstellbar und/oder angestellt. Bevorzugt ist mindestens eine weitere Reinigungseinrichtung an die Versorgungswalze 603 anstellbar und/oder angestellt. Alternativ ist die Reinigungseinrichtung des Formzylinders 602 ebenfalls zur Reinigung der Versorgungswalze 603 und/oder des Gegendruckzylinders 608 einsetzbar, beispielsweise durch aneinander Anstellen der Zylinder 602; 603; 608 während des Reinigungsvorgangs. Die mindestens eine Reinigungseinrichtung steht bevorzugt in Wirkverbindung zu der mindestens einen Steuerungseinheit der Maschinensteuerung.

In einer bevorzugten Ausführungsform weist die Bearbeitungsmaschine 01 mehr Auftragsaggregate 600, als in einem normalen Auftragsjob benötigt werden, auf. Das heißt, dass die Bearbeitungsmaschine 01 zumindest zwei Auftragsaggregate 600 aufweist, wobei eines der Auftragsaggregate 600 zumindest als redundantes Auftragsaggregat 600 verwendet werden kann. Beim Mehrfarbendruck kommen üblicherweise vier Auftragsaggregate 600 zum Einsatz. Bevorzugt handelt es sich bei diesen vier Auftragsaggregaten 600 um Druckaggregate 600. Zusätzlich können auch weitere als Lackauftragsaggregate 600 ausgebildete Aggregate 600 vorhanden sein. Weiter bevorzugt weist die Bearbeitungsmaschine 01 beim Mehrfarbendruck vier weitere Auftragsaggregate 600 auf. Diese vier Auftragsaggregate 600 können üblicherweise gewartet und/oder gerüstet werden, während die anderen Aggregate 600 im Betrieb laufen. Diese vier weiteren Auftragsaggregate 600 können zumindest als redundante Auftragsaggregate 600 eingesetzt werden. Alternativ sind diese zusätzlichen Auftragsaggregate 600 auch für spezielle Druckjobs einsetzbar. Beispielsweise können mit den zusätzlichen Auftragsaggregaten 600 auch Spezialfarben und/oder Lacke aufgetragen werden.

Weiterhin weist die Bearbeitungsmaschine 01 beispielsweise zumindest ein als Trocknungseinrichtung ausgebildetes Aggregat, insbesondere Trocknungsaggregat auf, das weiter bevorzugt als Modul, insbesondere als Trocknungsmodul ausgebildet ist. Alternativ oder zusätzlich ist beispielsweise zumindest eine Trocknungsvorrichtung 506 und/oder zumindest eine Nachtrocknungseinrichtung Bestandteil zumindest eines bevorzugt als Modul 100; 300; 600; 700; 900; 1000 ausgebildeten Aggregats 100; 300; 600; 700; 900; 1000. Beispielsweise weist zumindest ein Auftragaggregat 600 zumindest eine Trocknungsvorrichtung 506 auf und/oder weist zumindest ein als Transporteinrichtung 710 und/oder zumindest ein Transportaggregat 700 ausgebildetes Aggregat 700 auf. Die Trocknungsvorrichtung 506 ist bevorzugt der Auftragsstelle 609 nachgeordnet.

Die Bearbeitungsmaschine 01 weist mindestens ein Aggregat 700, insbesondere mindestens ein Transportaggregat 700, und/oder das Modul 700, insbesondere das Transportmodul 700 auf. Zusätzlich oder alternativ weist die Bearbeitungsmaschine 01 bevorzugt Transporteinrichtungen 700 beispielsweise als Bestandteile anderer Aggregate und/oder Module auf. Das mindestens eine Transportaggregat 700 ist durch einen Antrieb angetrieben. Beispielsweise ist dieser Antrieb mechanisch mit weiteren Aggregaten 700, beispielsweise weiteren Transportaggregaten 700, gekoppelt. Alternativ ist der Antrieb mechanisch von weiteren Aggregaten entkoppelt.

Die Bearbeitungsmaschine 01 weist die zumindest eine Formgebungseinrichtung 900 auf, die als Aggregat 900, insbesondere Formgebungsaggregat 900 oder Stanzaggregat 900, und/oder als Modul 900, insbesondere als Formgebungsmodul 900 oder Stanzmodul 900 und/oder als Stanzeinrichtung 900 ausgebildet ist. Bevorzugt weist die Bearbeitungsmaschine 01 zumindest ein als Stanzaggregat 900 ausgebildetes Formgebungsaggregat 900 auf. Die zumindest eine Formgebungseinrichtung 900 ist als Rotationsstanzeinrichtung 900 ausgebildet und/oder weist bevorzugt zumindest ein Formgebungswerk 914 oder Stanzwerk 914 auf. Unter einer Formgebungseinrichtung 900 soll auch eine Prägeeinrichtung und/oder eine Rilleinrichtung zu verstehen sein. Bevorzugt ist eine Perforiereinrichtung ebenfalls eine Form einer Stanzeinrichtung 900. Die Formgebungseinrichtung 900 weist vorzugsweise zumindest einen Formzylinder 901 und zumindest einen Gegenstanzzylinder 902 auf. Der Formzylinder 901 ist als Zylinder 901, vorzugsweise als Stanzformzylinder 901, insbesondere Stanzzylinder 901, ausgebildet. Der Stanzzylinder 901 ist vorzugsweise durch einen Antrieb rotierend angetrieben oder antreibbar. Der Gegenstanzzylinder 902 ist als Zylinder 902 ausgebildet. Beispielsweise ist der Gegenstanzzylinder 902 auch als Gegendruckzylinder 902 der Formgebungseinrichtung 900 bezeichnet. Der Gegenstanzzylinder 902 ist vorzugsweise durch einen Antrieb rotierend angetrieben oder antreibbar.

Beispielsweise zum Wechseln der Formzylinder 901; 903, insbesondere Stanzzylinder 901; 903, ist ein weiterer Zylinder 903, insbesondere Stanzzylinder 903, vorgesehen. Die zumindest eine Formgebungseinrichtung 900 weist bevorzugt zumindest eine und weiter bevorzugt genau eine als Formgebungsstelle 909 ausgebildete Bearbeitungsstelle 909 auf. Die zumindest eine Formgebungseinrichtung 900 weist bevorzugt die zumindest eine und weiter bevorzugt genau eine Formgebungsstelle 909 auf, die durch zumindest und weiter bevorzugt genau einen insbesondere als Stanzformzylinder 901 ausgebildeten Formzylinder 901 einerseits und zumindest einen Gegendruckzylinder 902 andererseits gebildet wird. Die Formgebungsstelle 909 ist bevorzugt derjenige Bereich, in dem sich der jeweilige Formzylinder 901 einerseits und der jeweilige Gegendruckzylinder 902 andererseits am nächsten sind. Die zumindest eine Formgebungsstelle 909 ist bevorzugt als zumindest eine Stanzstelle 909 und/oder als zumindest ein Transportmittel 909 und/oder als zumindest ein Formgebungstransportmittel 909 und/oder als zumindest ein Stanztransportmittel 909 ausgebildet. Bevorzugt umfasst die Formgebungseinrichtung 900, insbesondere das Formgebungswerk 914, zumindest ein Werkzeug, weiter bevorzugt umfasst der zumindest eine Formzylinder 901 zumindest ein Werkzeug. Beispielsweise weisen die Werkzeuge des Formzylinders 901, bevorzugt auch als Stanzwerkzeuge bezeichnet, Halbschalen 964 mit darauf angeordneten Stanzwerkzeugen wie Stanzmessern oder Prägemessern oder Rillwerkzeugen auf. Vorzugsweise wird mindestens eine Stanzform, welche bevorzugt als Halbschale 964 ausgebildet ist, auf dem Formzylinder 901; 903 befestigt. In einer bevorzugten Ausführung steht das Werkzeug der Formgebungseinrichtung 900, insbesondere des Formgebungswerks 914, bevorzugt das Werkzeug des Formzylinders 901, in direktem Kontakt zu dem Gegenstanzzylinder 902, insbesondere in dem Bereich der Formgebungsstelle 909. Bevorzugt muss der Gegendruckzylinder 608 und der Gegenstanzzylinder 902 im betrieblichen Gleichlauf, bevorzugt mit der gleichen Oberflächengeschwindigkeit, laufen. Das Werkzeug ist bevorzugt an das Bearbeitungsverfahren angepasst, als Stanzwerkzeug, Rillwerkzeug, Prägewerkzeug und/oder Perforierwerkzeug.

Vorzugsweise weist der Formzylinder 901 mehrere Werkzeuge verschiedener Bearbeitungsverfahren gemeinsam auf. Der zumindest eine als Stanzzylinder 901 ausgebildete Formzylinder 901 weist ein Werkzeug mit bevorzugt senkrecht angeordneten Messern auf. Die Messer sind bevorzugt diskontinuierlich angeordnet und unterscheiden sich je nach Stanzjob. Beispielsweise unterscheiden sich die Messer in der Eindringtiefe. Insbesondere kann dann keine einzige Oberflächengeschwindigkeit für den Stanzzylinder 901 angegeben werden. Dann wird bevorzugt mit einem Mittelwert gerechnet. Bevorzugt muss der zumindest eine Startdurchmesser vor dem Starten der Maschine, beispielsweise manuell, in einer Schnittstelle zu einer Steuerung eingegeben werden.

Der zumindest eine als Gegenstanzzylinder 902 ausgebildete Gegendruckzylinder 902 weist bevorzugt einen Aufzug bzw. Stanzbelag auf. Bevorzugt ist der Stanzbelag aus einem Kunststoff und/oder Gummi und weist leicht elastische Eigenschaften auf. Bevorzugt ist der Stanzbelag aus einem Kunststoff wie Polyurethan oder ähnlichem. Bevorzugt ist der Stanzbelag beispielsweise leicht eindrückbar und kann sich teilweise zurück verformen. Üblicherweise ist ein solcher Stanzbelag zwischen 10 mm und 12 mm dick, wobei zwischen 4 und 8 mm abschleifbar sind. An dem Gegenstanzzylinder ist zumindest ein Schleifzylinder 911 bzw. eine Schleifwalze 911 angeordnet bzw. anstellbar. Der zumindest eine Schleifzylinder 911 weist einen Antrieb, bevorzugt einen Direktantrieb, auf. Mittels Stellantrieben ist der Schleifzylinder 911 vorzugsweise an den Gegenstanzzylinder 902 anstellbar.

Bevorzugt weist das Stanzaggregat 900 eine Absaugeinrichtung 966 zum Absaugen von Abfallteilen oder Staub auf. Das Stanzaggregat 900 weist bevorzugt ein Gehäuse auf. Vorzugsweise weist das Gehäuse des Stanzaggregats 900 zumindest eine erste Wand und eine zweite Wand auf, welche in axialer Richtung vor und nach dem Transportweg von Bogen 02 angeordnet sind. Vorzugsweise ist das Gehäuse als Gestell, beispielsweise zum Halten der Zylinder 901; 902; 903 des Stanzaggregats 900 ausgebildet.

Die Bearbeitungsmaschine 01 weist bevorzugt zumindest ein als Substratabgabeeinrichtung 1000 ausgebildetes, insbesondere als Auslage 1000 ausgebildetes Aggregat 1000, insbesondere als Bogenauslage 1000 ausgebildetes Aggregat 1000, insbesondere Auslageaggregat 1000 auf, das weiter bevorzugt als Modul 1000, insbesondere als Auslagemodul 1000 ausgebildet ist. Das Auslageaggregat 1000 ist bevorzugt das letzte Aggregat 1000 der Bearbeitungsmaschine 01. Vorzugsweise wird in dieser mindestens ein Stapel der bearbeiteten Substrate 02 gebildet. Das Auslageaggregat 1000 weist mindestens einen Auslagestapelträger 1003 auf, auf welchem bearbeitete Substrate 02 ablegbar sind. Ein Substrat 02 wird entlang des Transportweges durch mindestens ein bevorzugt als Saugtransportmittel ausgebildetes Transportmittel abgebremst. Beispielsweise ist die Geschwindigkeit des Abbremsens so angepasst, dass das Substrat 02 innerhalb eines Maschinenzyklus zum Stillstand gebracht wird. Mittels mindestens eines Drückers wird vorzugsweise ein hinterer Bereich des Substrates 02, welcher vorzugsweise näher an der Hinterkante als an der Vorderkante des Substrates 02 angeordnet ist, von dem abbremsenden Transportmittel gelöst, sodass eine Unterschuppung durch ein nachfolgendes Substrat 02 ermöglicht wird. Beispielsweise rotiert oder schwenkt der mindestens eine Drücker um eine Achse, die quer zur Transportrichtung T gerichtet ist, und tritt mit jeder Umdrehung oder jedem Schwenken in Kontakt zu einem Substrat 02, das zu diesem Zeitpunkt an der Position des Transportweges an dem der Drücker wirkt anwesend ist und dessen hinterer Bereich dann durch den Drücker gelöst wird. Die Drehgeschwindigkeit des Drückers ist vorzugsweise so angepasst, dass jeweils der hintere Bereich eines Substrates 02 in gelöst wird. Mindestens ein Abwurfmittel löst bevorzugt das abgebremste Substrat 02 vollständig von dem abbremsenden Transportmittel, vorzugsweise durch Drücken nach unten, wodurch das Substrat 02 vorzugsweise auf den Auslagestapelträger 1003 abgelegt wird. Im Bereich des Auslagestapelträgers 1003 ist bevorzugt mindestens ein Anschlag zur Ausrichtung des abgelegten Substrates 02, bevorzugt zumindest ein Anschlag für die Vorderkante und/oder mindestens ein Anschlag für die Hinterkante des Substrats 02 vorgesehen. Beispielsweise sind auch seitliche Anschläge vorgesehen. Vorzugsweise ist mindestens eine Ausleitauslage 1002 vorgesehen, in welcher Musterbogen und/oder Substrate 02 von nicht ausreichender Qualität ablegbar und von den weiteren Substraten 02 trennbar sind. Über mindestens eine Bogenweiche 1001 ist der Transportweg des Substrats 02 vorzugsweise veränderbar, sodass ein Substrat 02 anstelle an den Auslagestapelträger 1003 in die Ausleitauslage 1002 geleitet wird.

Die Bearbeitungsmaschine 01 weist mehrere Sensoren auf. Damit kann beispielsweise die Bogenankunft an bestimmten Stellen der Bearbeitungsmaschine 01 erfasst werden. Weiterhin können die Sensoren auch als Kameras ausgebildet sein und beispielsweise das Bearbeitungsergebnis inspizieren. Bevorzugt ist ein solches Inspektionssystem als Druckbildkontrollsystem 726 zur Inspektion eines Druckbildes ausgebildet. Weiterhin kann ein solcher Sensor eine Passerkontrollsystem 728 sein. Das Druckbildkontrollsystem 726 und das Passerkontrollsystem 728 sind bevorzugt nach den Auftragsaggregaten 600 angeordnet und inspizieren bevorzugt das komplette Druckbild und/oder gedruckte Registermarken. Weiterhin weist die Bearbeitungsmaschine 01 bevorzugt ein Stanzbildkontrollsystem 916 auf. Dieses ist bevorzugt nach dem Stanzaggregat 900 angeordnet. Mittels der Sensoren 726, 728, 916 kann beispielsweise eine Bogen 02 aus der Bearbeitungsmaschine 01 ausgeschleust werden. Dazu weist die Bearbeitungsmaschine 01 bevorzugt eine Bogenweiche 1001 und einen Ausschleusestapel 1002, auch Ausleitauslage 1002 genannt, auf. Bei Abweichungen der Druck und/oder Stanzqualität kann die Bogenweiche 1001 mittels der Signal der Sensoren 726, 728, 916 gesteuert werden und die Bogen in der Transportbahn abgelenkt werden und so auf den Ausschleusstapel 1002 befördert werden. Ist die Druckqualität und/oder Stanzqualität hingegen ausreichend, so wird der Bogen 02 vorzugsweise auf einem Auslagestapelträger 1003 der Bogenauslage 1000 abgelegt. Weiterhin weist die Bogenbearbeitungsmaschine 01 mehrere Bogenankunftssensoren 164; 622; 722; 922 auf. Weiterhin ergeben sich mit der Zeit durch äußere Veränderungen in der Drucklänge der Stanzlänge. Diese Veränderung kann ebenfalls durch die Sensoren detektiert werden und die Zylinder, insbesondere die Formzylinder 602; 901; 903, anschließend mit den Signalen gesteuert und/oder geregelt werden.

Die Bearbeitungsmaschine 01 weist die mindestens eine Maschinensteuerung auf. Vorzugsweise ist die Maschinensteuerung eine übergeordnete Steuerung der Bearbeitungsmaschine 01, welche mindestens eine Steuerungseinheit aufweist. Bevorzugt weist die Maschinensteuerung mindestens eine zentrale Steuerungseinheit auf, Prozesse der Bearbeitungsmaschine 01 steuert. Bevorzugt ist die zentrale Steuerungseinheit mit Mitteln zur Steuerung einzelner Aggregate 100; 300; 600; 700; 900; 1000 gekoppelt und/oder mit Mitteln zur Steuerung einzelner Bestandteile, wie beispielsweise einem Zylinder 602; 603; 608; 901; 902; 903 oder Vorrichtung zum Wechseln 950 von Formzylindern 901, innerhalb eines Aggregats 100; 300; 600; 700; 900; 1000 gekoppelt. Die Koppelung erfolgt bevorzugt mittels elektrischer Steuerleitungen und/oder mittels drahtloser Übertragungstechnik, wie beispielsweise Funk oder W-LAN oder Bluetooth, bevorzugt im Radiofrequenzbereich oder alternativ im infraroten oder optischen Frequenzbereich. Insbesondere ist die Maschinensteuerung über mindestens ein Anzeigemittel, vorzugsweise mittels mindestens eines Monitors oder Displays, und/oder an mindestens einem Leitstand, welcher beispielsweise mindestens ein Anzeigemittel aufweist, für einen Bediener zugänglich und/oder anzeigbar. Beispielsweise ist die Maschinensteuerung zusätzlich oder alternativ über mindestens ein mobiles Endgerät, beispielsweise ein Smartphone, zugänglich und/oder anzeigbar. Vorzugsweise umfasst die Maschinensteuerung mindestens eine Recheneinheit, beispielsweise mindestens einen Rechner, vorzugsweise ausgebildet zur Berechnung von Daten und/oder zur Berechnung von Vergleichen zwischen Daten.

Vorzugsweise steht mindestens ein Sensor 164; 622; 722; 726; 728; 922; 916 der Sensoren 164; 622; 722; 726; 728; 922; 916 zumindest datentechnisch in Verbindung zu mindestens einer Steuerungseinheit der Maschinensteuerung. Die Maschinensteuerung, insbesondere deren mindestens eine Steuerungseinheit wertet bevorzugt Daten des mindestens einen Sensors 164; 622; 722; 726; 728; 922; 916 aus. Vorzugsweise wird ein Überwachungsergebnis des mindestens eine Sensors 164; 622; 722; 726; 728; 922; 916 auf mindestens einem Monitor angezeigt. Beispielsweise wird der mindestens eine Sensor 164; 622; 722; 726; 728; 922; 916 durch die Maschinensteuerung und/oder durch Zugriff auf die Maschinensteuerung durch einen Bediener, beispielsweise über den mindestens einen Leitstand der Bearbeitungsmaschine 01, geregelt. Bevorzugt wird mindestens ein Bestandteil der Bearbeitungsmaschine 01 in Abhängigkeit von den ermittelten Daten des mindestens einen Sensors 164; 622; 722; 726; 728; 922; 916 durch die Maschinensteuerung und/oder durch Zugriff auf die Maschinensteuerung durch einen Bediener, beispielsweise über den mindestens einen Leitstand der Bearbeitungsmaschine 01, geregelt.

Das Werkzeug des mindestens einen Formzylinders 901 des Formgebungsaggregats 900 bestimmt das durch Bearbeitung eines Substrats 02 erzielte Formgebungsergebnis. Dieses wird beispielsweise auch als Stanzbild bezeichnet. Da das Werkzeug des mindestens einen Formzylinders 901 des mindestens einen Formgebungsaggregats 900 an einen durchzuführenden Bearbeitungsauftrag angepasst ist, besteht ein Bedarf, das Werkzeug bei einem Wechsel zu einem anderen Bearbeitungsauftrag zu wechseln.

In einer ersten Ausführungsform wird zum Wechsel des Werkzeugs des mindestens einen Formgebungsaggregats 900 das Werkzeug von dem Formzylinder 901 abgenommen, während dieser in einer Stanzposition oder in einer, beispielsweise um wenige Millimeter von der Stanzposition entfernten, von dem Gegenstanzzylinder 902 abgestellten Position, bevorzugt einer Wechselposition, angeordnet ist. Der Wechsel erfolgt beispielsweise manuell durch einen Bediener. Dann muss während des Umrüstens der Zugang zu dem Formzylinder 901 für den Bediener gewährleistet sein.

In einer zweiten Ausführungsform wird zum Wechsel des Werkzeugs des mindestens einen Formgebungsaggregats 900 der mindestens eine Formzylinder 901 gegen einen weiteren Formzylinder 903 mit anderem Werkzeug und/oder entlang der Mantelfläche anders positioniertem Werkzeug ausgetauscht. Dazu weist das mindestens eine Formgebungsaggregat 900 bevorzugt eine Vorrichtung zum Wechseln 950 der Formzylinder 901; 903, insbesondere der als Stanzzylinder 901; 903 ausgebildeten Zylinder 901; 903, auf. Dabei kann ein Stanzzylinder 901, welcher sich im Betrieb in einer Stanzposition befindet, mit einem weiteren Stanzzylinder 903 gewechselt werden. Vorzugsweise erfolgt der Wechsel automatisiert. Die Vorrichtung zum Wechseln 950 umfasst dabei die Komponenten des Stanzaggregats 900, die am Wechseln der Zylinder 901; 903 beteiligt und/oder benötigt werden. Insbesondere weist die Vorrichtung zum Wechseln 950 den zumindest einen Stanzzylinder 901 und den zumindest einen weiteren Stanzzylinder 903 zum Wechseln mit dem zumindest einen Stanzzylinder 901 auf. Werden im Vorangegangen und im Folgenden Stanzzylinder 901; 903 bzw. deren Wechsel beschrieben, ist dies vorzugsweise auf die jeweiligen Formzylinder 901; 903 des Formgebungsaggregats 900 anzuwenden.

Bevorzugt weist die Vorrichtung zum Wechseln 950 der Formzylinder 901; 903 zumindest eine, bevorzugt mehrere, insbesondere zumindest zwei, Führungen 958; 959 auf. Insbesondere weist ein Transportsystem die Führungen 958; 959 auf. Bevorzugt sind die beiden Führungen 958; 959 der Vorrichtung zum Wechseln 950 als Linearführungen 958; 959 ausgebildet. Vorzugsweise ist eine Führung 959 als vorzugsweise überwiegend horizontale Führung 959 weiter bevorzugt mit mindestens einem horizontalen Transportelement ausgebildet. Vorzugsweise ist eine Führung 958 als vorzugsweise überwiegend vertikale Führung 958 weiter bevorzugt mit mindestens einem vertikalen Transportelement 956; 960 ausgebildet. Bevorzugt ist mit überwiegend hier eine größere Richtungs-Komponente in der jeweiligen horizontalen oder vertikalen Richtung gemeint. In einer anderen Ausführungsform können die Führungen 958; 959 auch gekrümmt sein. Wird im Vorangegangenen und im Folgenden von einer horizontalen Führung 959 gesprochen, ist durch diese Formulierung vorzugsweise auch die überwiegend horizontale Führung 959, also eine gekrümmte Führung mit einer größeren Richtungs-Komponente in horizontaler Richtung, umfasst. Wird im Vorangegangenen und im Folgenden von einer vertikalen Führung 958 gesprochen, ist durch diese Formulierung vorzugsweise auch die überwiegend vertikale Führung 958, also eine gekrümmte Führung 958 mit einer größeren Richtungs-Komponente in vertikaler Richtung, umfasst. Vorzugsweise weist das mindestens eine Transportelement 956; 960 mindestens einen Aufnahmebereich, bevorzugt mindestens eine schalenförmige Aufnahme, für den mindestens einen Formzylinder 901; 903 auf. Die Vorrichtung zum Wechseln 950 weist vorzugsweise zum Bewegen der Stanzzylinder 901; 903 ein Transportsystem auf. Dieses umfasst vorzugsweise Transportelemente 956; 960, welche die Stanzzylinder 901; 903 aufnehmen, beispielsweise an dessen Zylinderzapfen, und entlang der Führungswege, also insbesondere entlang der zumindest überwiegend horizontalen Führung 959 und/oder entlang der zumindest überwiegend vertikalen Führung 958, und/oder an die unterschiedlichen Positionen transportieren. Somit umfasst das Transportsystem vorzugsweise die zumindest eine Führung 958; 959. Vorzugsweise ist mindestens eine Führungsschiene 957 vorgesehen, die weiter bevorzugt als Linearführung ausgebildet ist, entlang derer vorzugsweise das zumindest eine Transportelement 956; 960 bewegt wird. Bevorzugt weist das Transportsystem das zumindest eine Transportelement zum überwiegend horizontalen Bewegen der Stanzzylinder 901; 903 und bevorzugt das zumindest eine Transportelement 956; 960 zum überwiegend vertikalen Bewegen der Stanzzylinder 901; 903 auf. Diese Transportelemente 956; 960 sind beispielsweise als Schlitten mit Haltearmen ausgebildet. Weiter bevorzugt weisen diese eine Halbschale zum Halten des Stanzzylinders 901; 903 auf. Bevorzugt ist die Halbschale als Kontaktfläche zu dem Stanzzylinder 901; 903 ausgebildet. Bevorzugt ist auf jeder Seite des Gehäuses ein jeweiliges Transportelement 956; 960 angeordnet. Beispielsweise weist die überwiegend vertikale Führung 958 entweder zwei Transportelemente 956; 960 oder zwei Transportelemente 956; 960 auf einer gemeinsamen Transporteinrichtung 972 auf. In einer besonders einfachen konstruktiven Ausgestaltung sind die beiden Transportelemente 956; 960 der überwiegend vertikalen Führung 958 gemeinsam auf einer gemeinsamen Transporteinrichtung 972, insbesondere einem Träger 972 und/oder Schlitten 972, angeordnet. Dann können durch Bewegen der Transporteinrichtung 972 beide Stanzzylinder 901; 903 in überwiegend, weiter bevorzugt komplett, vertikaler Richtung V bewegt werden.

Die Stanzzylinder 901; 903 können in der Vorrichtung zum Wechseln 950 in mehreren Positionen angeordnet sein. Insbesondere werden die Stanzzylinder 901; 903 entlang der Führungen 958; 959 bewegt. Beim Stanzen ist der Stanzzylinder 901; 903, insbesondere der jeweilige zum Einsatz kommende Stanzzylinder 901; 903, in der Stanzposition angeordnet. Dabei ist er an der Formgebungsstelle 909 angeordnet, bevorzugt oberhalb des Gegenstanzzylinders 902. Im Betrieb der Bearbeitungsmaschine 01 kommen die Stanzmesser in der Stanzposition in Kontakt mit dem Stanzbelag des Gegenstanzzylinders 902. Diese Position des Gegenstanzzylinders 902 wird als Arbeitsposition des Gegenstanzzylinders 902 bezeichnet. Somit wird die Bearbeitungsstelle 909 vorzugsweise durch den in der Stanzposition angeordneten Stanzzylinder 901; 903 und den in der Arbeitsposition angeordneten Gegenstanzzylinder 902 gebildet. Die Stanzposition ist somit für beide Stanzzylinder 901; 903 die gleiche Position. Insbesondere ist somit die Bearbeitungsstelle 909 für den zumindest einen Stanzzylinder 901 und für den weiteren Stanzzylinder 903 an einer identischen Position. Der Bogen 02 wird vorzugsweise an der Bearbeitungsstelle 909 des Stanzaggregats 900 im Betrieb bearbeitet, insbesondere unabhängig davon, welcher Stanzzylinder 901; 903 in der Stanzposition angeordnet ist.

Beispielsweise ist der Formzylinder 901 in der Stanzposition mittels einer Arretierung positionsfest angeordnet. Zum Wechsel des Formzylinders 901 wird vorzugsweise die Arretierung geöffnet. Beispielsweise wird durch Öffnen der Arretierung der Formzylinder 901 aus der Stanzposition in eine Wechselposition überführt, in welcher er bereit zur Entnahme ist. Im Gegensatz dazu wird der einzuwechselnde Zylinder 903 durch Schließen der Arretierung in der Stanzposition positionsfest angeordnet. Beispielsweise wird der weitere Zylinder 903 durch Schließen der Arretierung von der Wechselposition in die Stanzposition überführt. Die Arretierung ist somit vorzugsweise denjenigen Stanzzylinder 901; 903 fixierend ausgebildet, welcher zu dem jeweiligen Zeitpunkt in der Stanzposition anzuordnen ist. Bevorzugt wird ein Antrieb, beispielsweise Hydraulikantrieb, zum Öffnen und/oder Schließen der Arretierung, also vorzugsweise zum Fixieren und/oder Lösen des Formzylinders 901; 903 in der Stanzposition, mittels der Maschinensteuerung gesteuert.

Die Wechselposition liegt vorzugsweise auf einem direkten Führungsweg zwischen der Stanzposition und einer Wartungsposition. Die Wechselposition ist vorzugsweise um wenige Millimeter zur Stanzposition verstellt, vorzugsweise um maximal 1 cm, bevorzugt um maximal 5 mm, weiter bevorzugt um maximal 1 mm, weiter bevorzugt um maximal 0,5 mm, weiter bevorzugt um maximal 0,05 mm. Die Wechselposition ist weiter bevorzugt von der Stanzposition beabstandet, insbesondere in vertikaler Richtung V, und weiter bevorzugt unterhalb der Stanzposition angeordnet. In einer bevorzugten Ausführung ist der Stanzzylinder 901; 903 in der Wechselposition weiter als in der Stanzposition von der Formgebungsstelle 909 entfernt angeordnet, bevorzugt in Richtung des bevorzugt zuvor abgestellten Gegenstanzzylinders 902 verstellt, weiter bevorzugt nach unten verstellt. Vorzugsweise ist die Wechselposition in vertikaler Richtung V über oder bevorzugt unter der Stanzposition angeordnet. Dies ist insbesondere der Fall, wenn die Arretierung den Stanzzylinder 901 bzw. den weiteren Stanzzylinder 903 in eine Position drückt und dann gelöst wird. Besonders bevorzugt ist die Arretierung den Stanzzylinder 901; 903 von der gegenüberliegenden Seite, insbesondere von unten, gegen das Gestell und/oder ein gestellfestes Element und/oder das Gehäuse fixierend, insbesondere drückend, angeordnet. Besonders bevorzugt ist die Arretierung den Stanzzylinder 901; 903 von unten gegen eine Kontaktfläche, bevorzugt in Form einer Halbschale, in einer Wand des Gehäuses, insbesondere der Gehäusewand, oder in das Gestell fixierend und/oder drückend angeordnet.

Alternativ ist die Wechselposition identisch zu der Stanzposition, wobei jedoch die Arretierung geöffnet ist. Hierbei wird der Stanzzylinder 901 vorzugsweise ausschließlich durch das Lösen der Arretierung von dessen Stanzposition in dessen Wechselposition überführt.

In einer bevorzugten Ausführungsform steht der Stanzzylinder 901; 903 in der Stanzposition mit einem ihn rotierend antreibenden Antrieb in Wirkverbindung. Der Antrieb ist vorzugsweise koaxial zu der Rotationsachse des in dessen Stanzposition angeordneten Stanzzylinders 901; 903 angeordnet. Der Antrieb ist bevorzugt gestellfest und/oder gehäusefest am Gehäuse des Stanzaggregats 900, bevorzugt mittels eines Trägers, angeordnet. Vorzugsweise wird der in der Stanzposition angeordnete Formzylinder 901; 903 durch die Maschinensteuerung an dessen ihn rotierend antreibenden Antrieb gekoppelt, beispielsweise durch eine axiale Verstellung zumindest eines Bestandteils des Antriebs und/oder eine Aktivierung einer Kupplung.

Die Vorrichtung zum Wechseln 950 weist in bevorzugter Ausführung die Kupplung zum Koppeln und/oder zum Entkoppeln der Stanzzylinder 901; 903 an und/oder von dem Antrieb zum Antreiben eines der Stanzzylinder 901; 903 auf. Bevorzugt wird die Kupplung beim Wechseln der Stanzzylinder 901; 903 geöffnet und so der Stanzzylinder 901 von seinem Antrieb entkoppelt. Insbesondere koppelt die Kupplung den in der Stanzposition angeordneten Stanzzylinder 901; 903 an den Antrieb bzw. dessen Motor. In dem eingekuppelten Zustand ist die Kupplung bevorzugt in axialer Richtung mit dem Stanzzylinder 901; 903 bewegbar. Beispielsweise wird die Kupplung mit dem Stanzzylinder 901; 903 während der Registereinstellung in axialer Richtung A bewegt.

Vorzugsweise weist der Gegenstanzzylinder 902 dessen Arbeitsposition und eine abgestellte Position mit größerer Entfernung zu der Bearbeitungsstelle 909 und/oder mit größerer Entfernung zu dem in der Stanzposition angeordneten Formzylinder 901 auf. Beispielsweise ist ein Stellantrieb den Gegenstanzzylinder 902 von dessen Arbeitsposition in die abgestellte Position und umgekehrt bewegend ausgebildet.

Vorzugsweise steuert die Maschinensteuerung den Stellantrieb.

Entlang des Führungsweges zwischen der Stanzposition und der Wartungsposition ändert der Führungsweg bevorzugt an einer Ausfahrposition seine Richtung, beispielsweise beginnend an der Stanzposition von einer im wesentlichen horizontalen Führung 959 zu einer im wesentlichen vertikalen Führung 958. Vorzugsweise ist die Ausfahrposition in oder entgegen der Transportrichtung T beabstandet zu der Stanzposition. Vorzugsweise ist die Wechselposition entlang des Führungsweges zwischen der Stanzposition und der Ausfahrposition angeordnet. Bevorzugt ist der Stanzzylinder 901 überwiegend horizontal aus der Wechselposition entnehmbar und in die Ausfahrposition überführbar. Mit überwiegend horizontal ist hierbei insbesondere eine Richtung mit einer überwiegenden horizontalen Komponente gemeint. Damit sind auch geneigte Führungen mit dieser Formulierung umfasst. Bevorzugt ist der Stanzzylinder 901; 903 auf der als Linearführung ausgebildeten Führung 959 aus der Wechselposition in die Ausfahrposition und/oder umgekehrt überführbar. Beispielsweise ist hierfür mindestens ein Transportelement, welches den zu bewegenden Formzylinder 901; 903 hält und bewegt vorgesehen. Vorzugsweise weist das mindestens eine Transportelement mindestens eine schalenförmige Aufnahme für den mindestens einen Formzylinder 901; 903 auf.

Weiterhin ist einer der Formzylinder 901; 903, insbesondere Stanzzylinder 901; 903, zum Rüsten und/oder Warten in einer Wartungsposition anordenbar und/oder ist angeordnet. In dieser Wartungsposition kann der Stanzzylinder 901; 903 gewartet werden und beispielsweise für einen neuen Bearbeitungsauftrag vorbereitet werden. Beispielsweise kann ein Werkzeug gegen ein neues getauscht werden. Vorzugsweise erfolgt dieser Tausch manuell durch einen Bediener. Bevorzugt wird dabei mindestens eine zu entfernende Halbschale 964 mit dem Werkzeug von dem Formzylinder 901; 903 entfernt und mindestens eine weitere Halbschale 964 mit neuem Werkzeug oder anders positioniertem Werkzeug auf den Formzylinder 901; 903 angebracht. Die Wartungsposition ist bevorzugt in einer vertikalen Richtung V unterhalb der Stanzposition und/oder der Wechselposition angeordnet. Weiter bevorzugt liegt der Stanzzylinder 901; 903 dann auf einer für einen Bediener angenehmen Höhe. Dies hat den Vorteil, dass der Stanzzylinder 901; 903 in einer Position für den nächsten Bearbeitungsauftrag vorbereitet werden kann, die für einen Bediener auf einer gut zu erreichenden Höhe liegt. Auch ist der Stanzzylinder 901; 903 von störenden Elementen entfernt und kann so gut von den umliegenden Seiten erreicht werden. Bevorzugt ist die Wartungsposition auf der vertikalen Führung 958 angeordnet.

Eine weitere Position in der die Formzylinder 901; 903, insbesondere Stanzzylinder 901; 903, angeordnet werden können, ist eine Warteposition. Einer der Stanzzylinder 901; 903 ist bevorzugt in der Warteposition zum aneinander Vorbeiführen der zwei Stanzzylinder 901; 903 anordenbar und/oder kann darin angeordnet werden und/oder ist darin angeordnet und/oder wird darin angeordnet. Die Warteposition dient zum aneinander Vorbeiführen von zwei Zylindern 901; 903 und liegt zumindest außerhalb eines Führungsweges eines Stanzzylinders 901. Der Führungsweg ist dabei der direkte Transportweg zwischen der Stanzposition und der Wartungsposition. Vorzugsweise wird einer der Stanzzylinder 901; 903 in der Warteposition angeordnet, während der andere der Stanzzylinder 901; 903 an diesem vorbeigeführt wird. Bevorzugt ist die Warteposition außerhalb eines direkten Führungsweges zwischen der Bearbeitungsposition und der Wartungsposition des Formzylinders 901 angeordnet, bevorzugt oberhalb oder in oder entgegen der Transportrichtung T dazu beabstandet. In einer bevorzugten Ausführungsform ist die Warteposition auf einer ähnlichen Höhe oder oberhalb der Wechselposition und/oder der Stanzposition angeordnet. Weiterhin sind die Warteposition und die Wartungsposition bevorzugt auf der vertikalen Führung 958 angeordnet.

Der Stanzzylinder 901 wird mittels der Vorrichtung zum Wechseln 950 mit dem im Folgenden beschriebenen Verfahren gewechselt. Im Betrieb der Bearbeitungsmaschine 01 während der Abarbeitung eines Bearbeitungsauftrags sind der Stanzzylinder 901 und der Gegenstanzzylinder 902 in der Stanzposition bzw. Arbeitsposition angeordnet. Durch den Wechsel des Formzylinders 901, im Folgenden auch am Beispiel des Stanzzylinders 901 beschrieben, wird dieser von der Bearbeitungsposition, insbesondere der als Stanzposition ausgebildeten Bearbeitungsposition, in die Wartungsposition verstellt, während der mindestens eine weitere Zylinder 903, im Folgenden auch am Beispiel des Stanzzylinders 903 beschrieben, von der Wartungsposition des weiteren Zylinders 903 in die Bearbeitungsposition verstellt wird.

In einem vorzugsweise ersten Schritt wird bevorzugt der Gegenstanzzylinder 902 von dem Stanzzylinder 901 abgestellt und von dessen Arbeitsposition in dessen abgestellte Position überführt. Bevorzugt wird der Gegenstanzzylinder 902 dazu überwiegend in der vertikalen Richtung V, bevorzugt nach unten, verstellt. Während dem Wechsel bleibt der Gegenstanzzylinder 902 vorzugsweise in dieser Position, also vorzugsweise in der abgestellten Position, und muss nicht bewegt werden. Bevorzugt wird die Arretierung zum Wechsel des Formzylinders 901 gelöst und/oder zum Fixieren des weiteren Zylinders 903 in der Bearbeitungsposition geschlossen. Durch Lösen der Arretierung ist der Stanzzylinder 901 vorzugsweise aus der Stanzposition verstellbar. Der Stanzzylinder 901 wird von der Stanzposition in die Wechselposition verstellt. In einer bevorzugten Ausführungsform wird der Stanzzylinder 901 vor dem Lösen der Arretierung, bevorzugt vor dem Überführung von der Stanzposition in die Wechselposition, durch die Kupplung von dem Antrieb, vorzugsweise welcher den Formzylinder 901 rotierend antreibt, entkoppelt. Bevorzugt wird der Stanzzylinder 901 in der Wechselposition durch das Transportelement der vorzugsweise horizontalen Führung 959 getragen. In der Wartungsposition befindet sich der weitere Stanzzylinder 903, welcher mit dem aktuellen Stanzzylinder 901 gewechselt werden soll. Der weitere Stanzzylinder 903 wird vorzugsweise vorgerüstet, während der zumindest eine Stanzzylinder 901 in der Stanzposition ist und das Substrat 02 bearbeitet, also während der Abarbeitung eines Bearbeitungsauftrags. Bevorzugt wird der Stanzzylinder 903 in der Wartungsposition beispielsweise in einfacher Weise für den nächsten Bearbeitungsauftrag hergerichtet. Dazu wird bevorzugt eine Halbschale 964 mit den Formgebungswerkzeugen, insbesondere Stanzmessern, ausgetauscht. Das Herrichten des weiteren Stanzzylinders 903 ist beispielsweise bereits während des Betriebs der Bearbeitungsmaschine 01 mit dem zumindest einen Stanzzylinder 901 erfolgt, also bevorzugt vor dem Beginn des Stanzzylinderwechsels. Vorzugsweise wird der Formzylinder 901 und/oder der weitere Zylinder 903 in der Aufnahme des Transportelements 956; 960 abgelegt und durch dieses entlang der mindestens einen Führung 958; 959 bewegt. Die beiden Stanzzylinder 901; 903 werden vorzugsweise in den Führungen 958; 959 aneinander vorbeigeführt. Zum Wechsel des Formzylinders 901 mit dem weiteren Zylinder 903 wird weiter bevorzugt der Formzylinder 901 oder der weitere Zylinder 903 in der Warteposition zum aneinander Vorbeiführen des Formzylinders 901 und des weiteren Zylinders 903 positioniert. Dazu wird einer der Stanzzylinder 901; 903 in der Warteposition zwischengespeichert und/oder zwischengelagert. Entweder wird der Stanzzylinder 901 aus der Stanzposition in die Warteposition geführt oder der weitere Stanzzylinder 903 aus der Wartungsposition in die Warteposition geführt. Der andere Zylinder 901; 903, welcher nicht in der Warteposition angeordnet ist, wird dann vorzugsweise an dem in der Warteposition angeordneten Zylinder 901; 903 bevorzugt entlang des direkten Führungswegs vorbeigeführt. Anschließend an das aneinander Vorbeiführen der Zylinder 901; 903 wird bevorzugt der zu entnehmende Zylinder 901 in die Wartungsposition und der einzuwechselnde Zylinder 903 an die Stanzposition überführt. Der weitere Zylinder 903 wird vorzugsweise durch die Arretierung in der Bearbeitungsposition fixiert. Insbesondere wird der rotierend antreibende Antrieb nach Anordnung des weiteren Zylinders 903 in der Bearbeitungsposition an diesen angekoppelt. Anschließend wird der Gegenstanzzylinder 902 bevorzugt wieder an den in der Stanzposition angeordneten Stanzzylinder 903 angestellt, insbesondere wenn dieser zuvor abgestellt wurde.

In der Bearbeitungsmaschine 01 muss das Substrat 02 zu den Bearbeitungsstellen 609; 909 transportiert werden. Dazu weist die Bearbeitungsmaschine 01 vorzugsweise mehrere Transportaggregate 700 auf. Vorzugsweise weist ein Transportaggregat 700 mindestens eine Transporteinrichtung 710 auf. In anderen Worten weist die Bearbeitungsmaschine 01 somit bevorzugt mindestens ein bogenförmiges Substrat 02 transportierendes Transportaggregat 700 mit mindestens einer bogenförmiges Substrat 02 transportierenden Transporteinrichtung 710 auf. In bevorzugter Ausführung ist die Transporteinrichtung 710 als Saugtransportmittel, insbesondere als Saugkasten, bevorzugt Rollensaugkasten, ausgebildet. Der Führungsweg des Zylinderwechsels überschneidet beispielsweise den Transportweg von Substrat 02. Beispielsweise muss deshalb zur Durchführung des Zylinderwechsels mindestens ein Bestandteil eines Transportaggregats 700 aus dessen Position zum Transport von Substrat 02 verstellt werden. Das Stanzaggregat 900 weist bevorzugt eine Verstelleinrichtung zum Verstellen der mindestens einen Transporteinrichtung 710 auf. Bevorzugt wird eine Transporteinrichtung 710 verstellt, welche in Transportrichtung T vor der Bearbeitungsstelle 909 angeordnet ist. Beispielsweise wird die Verstelleinrichtung mittels eines Antriebs 933 angetrieben, welcher bevorzugt durch die Maschinensteuerung gesteuert wird. Beispielsweise treibt der Antrieb 933 zusätzlich die vertikale Führung 958 der Vorrichtung zum Wechseln an, dann ist in besonders bevorzugter Ausführung eine Kontaktfläche 992 zwischen der Transporteinrichtung 710 und dem mindestens einen Transportelement 956; 960; 972 der vertikalen Führung 958 vorgesehen, sodass sowohl die Transporteinrichtung 710 als auch das mindestens eine Transportelement 956; 960; 972 gemeinsam verstellt werden. Alternativ oder zusätzlich ist die Transporteinrichtung 710 von Hand, beispielsweise durch einen Bediener verstellbar. Bevorzugt wird bei einem Stanzzylinderwechsel lediglich der Teil bzw. die Transporteinrichtung 710 verstellt, die beim Stanzzylinderwechsel im Weg ist. Bevorzugt wird die Transporteinrichtung 710 so verstellt, bevorzugt in vertikaler Richtung V verstellt oder geschwenkt, um den Führungsweg der Formzylinder 901; 903 freizugeben. Insbesondere nach Beenden des Wechsels der Formzylinder 901; 903 wird die mindestens eine Transporteinrichtung 710 bevorzugt wieder in deren Arbeitsposition verstellt, in welcher sie während eines Bearbeitungsauftrags angeordnet ist.

Weiterhin ist auch ein in Transportrichtung T nach dem Formgebungsaggregat 900, bevorzugt Stanzaggregat 900, angeordnetes Transportmittel 904 so verstellbar, dass ein Bediener den Stanzzylinder 901; 903 und/oder den Gegenstanzzylinder 902 problemlos erreichen kann. Insbesondere wird dieses Transportmittel 904 verstellt, wenn ein manueller Austausch des Formgebungswerkzeugs erfolgt oder wenn der mindestens eine Formzylinder 901 für einen Bediener zugänglich gemacht werden soll. Bevorzugt ist das Transportmittel 904 dazu verschwenkbar. Beispielsweise ist dieses nach dem Stanzaggregat 900 angeordnete Transportmittel 904 als Separationstransportmittel 904 einer Separationseinrichtung 905 ausgebildet. Insbesondere werden mittels des Separationstransportmittels 904 Reststücke, welche durch die Bearbeitung mittels des Stanzzylinders 901; 903 erzeugt wurden, von dem Bogen 02 getrennt, insbesondere falls diese nicht bereits vorher von dem Bogen 02 getrennt wurden. Beispielsweise ist die Separationseinrichtung 905 dazu als Rütteleinrichtung 905 ausgebildet. Beispielsweise weist das dem Stanzaggregat 900 nachgeordnete Transportmittel 904 einen oberen und unteren Teil auf, beispielsweise ein oberes und unteres Transportband. Beispielsweise wird der obere Teil des Transportmittels 904 nach oben geschwenkt, während der untere Teil des Transportmittels 904 nach unten geschwenkt wird.

Bevorzugt kann der Stanzzylinderwechselvorgang vollautomatisch ablaufen. Das Stanzaggregat 900 steht bevorzugt mit einer Maschinensteuerung in Wirkverbindung. In dieser kann der Zylinderwechsel hinterlegt sein und dann vollautomatisch ablaufen. Das Stanzaggregat 900 mit der Vorrichtung zum Wechseln 950 ist vorteilhafterweise inline in einer vorzugsweise als Bogenbearbeitungsmaschine 01 ausgebildeten Bearbeitungsmaschine 01 mit Auftragsaggregaten 600 angeordnet. Auch diese Aggregate 600 weisen beispielsweise Vorrichtungen zum vereinfachten Wechsel der Zylinder 602; 603; 608 der Auftragwerke 614 auf. Somit kann ein inline integrierter vollautomatischer Stanzformwechsler zu einer deutlich effizienteren Gesamtmaschine beitragen.

Es besteht der Bedarf, die Dauer eines Umrüstprozesses zwischen aufeinanderfolgenden Bearbeitungsaufträgen zu minimieren, vorteilhafterweise um Stillstandzeiten der Bearbeitungsmaschine 01 zu reduzieren und deren Produktion zu steigern.

Ein Umrüsten beschreibt im Vorangegangenen und im Folgenden bevorzugt sämtliche ablaufenden Prozesse, welche notwendig sind, um die Bearbeitungsmaschine 01 für einen neuen Bearbeitungsauftrag vorzubereiten. Bevorzugt beschreibt ein Umrüsten der Bearbeitungsmaschine 01 eine Änderung einer Konfiguration und/oder eines Austauschs mindestens eines Bestandteils der Bearbeitungsmaschine 01, um anschließend eine Vielzahl von zueinander identischer Produkten zu erzeugen, die sich besonders bevorzugt von den Produkten vor dem Umrüsten in mindestens einer Eigenschaft unterscheiden oder alternativ zu diesen gleich sind. Insbesondere wird während eines Umrüstens die Bearbeitungsmaschine 01 an Daten bezüglich eines zu bearbeitenden Substrates 02 angepasst. Zusätzlich oder alternativ wird während eines Umrüstens die Bearbeitungsmaschine 01 an Daten bezüglich eines zu erzielenden Produktes angepasst. Die Daten bezüglich des zu bearbeitenden Substrates 02 umfassen bevorzugt zumindest das Format der zu bearbeitenden Substrate 02, wie deren Länge, Breite oder Dicke, und/oder das Material der zu bearbeitenden Substrate 02, beispielsweise umfassend deren Ausführung als Papier, Pappe, Wellpappe oder Karton, und/oder deren Oberflächenstruktur in Form von bereits vorhandenem Grundierungsmittel beziehungsweise, ob es sich um gestrichenes Substrat 02 handelt. Die Daten bezüglich des zu erzielenden Produktes umfassen bevorzugt zumindest das zu erzeugende Druckbild und/oder ein zu erzeugendes Formgebungsergebnis, insbesondere ein zu erzeugendes Stanzbild, und/oder die Anzahl von Nutzen pro Substrat 02.

Zur Durchführung eines ersten Bearbeitungsauftrags ist die Bearbeitungsmaschine 01 vorzugsweise mit einer ersten Konfiguration konfiguriert. Zur Durchführung eines direkt nachfolgenden Bearbeitungsauftrags ist die Bearbeitungsmaschine 01 vorzugsweise in einer zweiten Konfiguration konfiguriert, es muss die Konfiguration also üblicherweise verändert werden, somit vorzugsweise mindestens ein Parameter der Bearbeitungsmaschine 01 angepasst werden. Um von einem ersten Bearbeitungsauftrag zu mindestens einem nachfolgenden Bearbeitungsauftrag zu wechseln, werden bevorzugt zumindest die folgenden Schritte ausgeführt.

Der erste Bearbeitungsauftrag wird durch die Bearbeitungsmaschine 01 abgearbeitet. Während des ersten Bearbeitungsauftrags wird mindestens ein Substrat 02 mit dem mindestens einen als Formgebungsaggregat 900 ausgebildeten Bearbeitungsaggregat 900 und/oder dem mindestens einen, bevorzugt mindestens zwei, weiter bevorzugt mindestens vier, beispielsweise sechs, als Auftragaggregat 600 ausgebildeten Bearbeitungsaggregat 600 der Bearbeitungsmaschine 01 bearbeitet. Durch das mindestens eine Formgebungsaggregat 900 wird das Substrat 02 vorzugsweise geschnitten und/oder gestanzt und/oder gerillt und/oder perforiert und/oder geprägt. Bevorzugt ist das mindestens eine Formgebungsaggregat 900 als Rotationsstanzeinrichtung 900 ausgebildet. Mittels des mindestens einen Auftragaggregats 600 der Auftragaggregate 600 wird bevorzugt mindestens ein Auftragfluid auf das Substrat 02 übertragen, bevorzugt mindestens ein Druckbild auf das Substrat 02 aufgebracht. Beispielsweise wird mindestens ein farbiges Druckbild aufgetragen und/oder das Substrat 02 lackiert und/oder grundiert.

Vor dem Umrüsten, bevorzugt während der Abarbeitung des ersten Bearbeitungsauftrags, wird die Konfiguration der Bearbeitungsmaschine 01 für den mindestens einen nachfolgenden Bearbeitungsauftrag, zumindest für den direkt nachfolgenden Bearbeitungsauftrag, in der Maschinensteuerung geladen und/oder eingestellt und/oder gespeichert. Beim Laden der Konfiguration wird vorzugsweise auf eine bereits zu einem früheren Zeitpunkt gespeicherten Datensatz zugegriffen, welcher vorzugsweise die Daten der einzustellenden Konfiguration umfasst oder lediglich geringe Abweichungen der hinterlegten Daten zu den benötigten Daten der einzustellenden Konfiguration aufweist. Dieser bereits hinterlegte Datensatz wird dann beispielsweise gemäß den Anforderungen des Bearbeitungsauftrags individuell angepasst, beispielsweise durch Ändern einzelner Daten des Datensatzes. Unter dem Einstellen des Bearbeitungsauftrags ist vorzugsweise das Anpassen eines geladenen Datensatzes an die geforderte Konfiguration zu verstehen, beispielsweise durch das Anpassen einzelner Daten. Beispielsweise werden die Daten durch die Maschinensteuerung oder durch den Bediener angepasst. Unter dem Einstellen ist vorzugsweise zusätzlich ein Zusammenstellen der Daten des Datensatzes direkt aus einzelnen Daten zu verstehen, vorzugsweise wenn kein bereits hinterlegter Datensatz zur Verfügung steht oder weitreichende Änderungen eines bestehenden Datensatzes erforderlich wären. Vorzugsweise wird der angepasste Datensatz der Konfiguration in der Maschinensteuerung gespeichert und steht somit zum späteren Wiederverwenden zur Verfügung. Vorteilhafterweise wird durch das Laden und/oder Einstellen und/oder Speichern der Konfiguration die Dauer des Umrüstprozesses verkürzt. In bevorzugter Ausführung wird eine bereits hinterlegte Konfiguration geladen.

Die Maschinensteuerung gibt bevorzugt die Konfiguration der Bearbeitungsmaschine 01 für den mindestens einen nachfolgenden Bearbeitungsauftrag sowie die dazu durchzuführenden Umrüstprozesse vor. In der Maschinensteuerung werden dazu bevorzugt die Daten bezüglich eines zu bearbeitenden Substrates 02 und/oder die Daten bezüglich eines zu erzielenden Produktes des mindestens einen nachfolgenden Bearbeitungsauftrags hinterlegt oder sind darin hinterlegt. Beispielsweise werden die Daten bezüglich eines zu bearbeitenden Substrates 02 und/oder die Daten bezüglich eines zu erzielenden Produktes des mindestens einen nachfolgenden Bearbeitungsauftrags durch einen Bediener eingegeben oder aus einer vorab gespeicherten Vorlage vorzugsweise auf Befehl eines Bedieners geladen. Bevorzugt müssen für den nachfolgenden Bearbeitungsauftrag lediglich die Daten bezüglich eines zu bearbeitenden Substrates 02 und/oder die Daten bezüglich eines zu erzielenden Produktes durch den Bediener geladen und/oder eingestellt werden. Die Maschinensteuerung gibt bevorzugt durch Verarbeitung dieser Daten, bevorzugt unter Berücksichtigung weiterer durch die Maschinensteuerung bereitgestellter maschinenbezogener Daten, die Konfiguration der Bearbeitungsmaschine 01 für den mindestens einen nachfolgenden Bearbeitungsauftrag vorzugsweise sowie die dazu durchzuführenden Umrüstprozesse vor. Vorteilhafterweise minimiert sich dadurch die durch einen Bediener einzugebende Datenmenge, wodurch vorteilhafterweise Eingabefehler minimiert werden und/oder die nötige Zeit zur manuellen Konfiguration reduziert wird. Die maschinenbezogenen Daten umfassen bevorzugt eine vor dem Umrüstprozess gültige, also an der Bearbeitungsmaschine 01 für den ersten Bearbeitungsprozesses eingestellte, Konfiguration der Aggregate 100; 300; 600; 700; 900; 1000 der Bearbeitungsmaschine 01, beispielsweise bezüglich der vorhandenen Aggregatanordnung und/oder eingesetztem Werkzeug des mindestens einem Formgebungsaggregats 900 und/oder eingesetzten Druckformen der Auftragaggregate 600 und/oder der Zuordnung von Auftragfluid zu den Auftragaggregaten 600 und/oder angewandte Höhe der Substratstapel und/oder Einstellungen von Elementen der Bearbeitungsmaschine 01 bezüglich des Formats der bearbeiteten Substrate 02. Zusätzlich oder alternativ umfassen die maschinenbezogenen Daten den Zustand einzelner Elemente, beispielsweise bezüglich einzuhaltender Wartungsintervalle und/oder notwendiger Reinigungsprozesse und/oder bezüglich der Abnutzung des jeweiligen Elements. Die maschinenbezogenen Daten sind vorzugsweise in der Maschinensteuerung als Grundlage der Berechnung hinterlegt, beispielsweise beruhen diese Daten auf in der Maschinensteuerung hinterlegten Einstellungen und/oder internen Berechnungen und/oder Sensormessungen in der Bearbeitungsmaschine 01. Bevorzugt werden die maschinenbezogenen Daten vorzugsweise ohne Bedienereinwirkung durch die Maschinensteuerung erstellt und zur Verarbeitung für die Berechnung bereitgestellt.

Vorzugsweise berechnet die Maschinensteuerung aus den Daten bezüglich eines zu bearbeitenden Substrates 02 und/oder den Daten bezüglich eines zu erzielenden Produktes eine notwendige Konfiguration der Bearbeitungsmaschine 01 zur Erzeugung dieses Produktes. Vorzugsweise vergleicht die Maschinensteuerung, beispielsweise deren mindestens eine Recheneinheit, die an der Bearbeitungsmaschine 01 für den ersten Bearbeitungsauftrag eingestellte Konfiguration mit der geforderten Konfiguration des mindestens einen nachfolgenden Bearbeitungsauftrags, insbesondere zumindest des direkt nachfolgenden Bearbeitungsauftrags. Aus dem Vergleich berechnet die Maschinensteuerung vorzugsweise die durchzuführenden Umrüstprozesse zur Einstellung der neuen Konfiguration. Vorzugsweise ergänzt die Maschinensteuerung zusätzlich Umrüstprozesse aufgrund von einem Abgleich des Zustands einzelner Elemente mit einem Referenzwert, beispielsweise eine durchzuführende Wartung und/oder einen notwendigen Reinigungsprozess. Vorzugsweise erstellt die Maschinensteuerung somit einen Datensatz umfassend die durchzuführenden Umrüstprozesse sowie die Eigenschaften der Bearbeitungsmaschine 01 zur Durchführung des mindestens einen nachfolgenden Bearbeitungsauftrags. Dieser Datensatz wird vorzugsweise einem Bediener an mindestens einem Display der Bearbeitungsmaschine 01 und/oder einem Leitstand angezeigt. In dem Datensatz sind bevorzugt Schemata bezüglich des Ablaufs der einzelnen Umrüstprozesse hinterlegt sowie bezüglich einer zeitlichen Reihenfolge voneinander abhängiger Umrüstprozesse. Vorzugsweise werden möglichst viele Umrüstprozesse, bevorzugt jeweils zumindest ein Umrüstprozess eines umzurüstenden Aggregats 100; 300; 600; 700; 900; 1000, zeitlich überlappend, bevorzugt parallel, ausgeführt.

Die Maschinensteuerung schlägt bevorzugt mindestens einen Datensatz umfassend die mindestens eine Konfiguration des nachfolgenden Bearbeitungsauftrags sowie der dazu durchzuführenden Umrüstprozesse vor, welcher durch einen Bediener anpassbar oder auswählbar ist. Beispielsweise erstellt die Maschinensteuerung zum Einstellen der Konfiguration einen Vorschlag, welcher besonders bevorzugt durch einen Bediener weiter angepasst werden kann, beispielsweise durch Anwählen oder Abwählen eines Umrüstprozesses wie beispielsweise ein Reinigungsprozess oder ein Werkzeugaustausch. Beispielsweise alternativ erstellt die Maschinensteuerung dabei mindestens zwei alternative Vorschläge, zwischen welchen ein Bediener auswählen kann. Vorzugsweise muss ein Bediener dem vorgegebenen oder gegebenenfalls angepassten Datensatz vor dem Beginn des Umrüstprozesses zustimmen, beispielsweise durch Drücken eines als Bestätigung geltenden Symbols an einem Display oder einem Druckknopf. Vorzugsweise wird der geänderte und/oder angepasste Datensatz in der Maschinensteuerung gespeichert. Vorzugsweise steht er dadurch für eine spätere Wiederholung des Bearbeitungsauftrags zur Verfügung.

Die Maschinensteuerung beendet automatisiert den ersten Bearbeitungsauftrag, also vorzugsweise ohne eine explizite Bedienereinwirkung zu diesem Zeitpunkt. Vorzugsweise ist dazu mindestens ein Zähler vorgesehen, welcher die bearbeiteten Substrate 02 und/oder die zu bearbeitenden Substrate 02 zählt. Vorzugsweise wird die Anzahl mittels Datenübertragung an die Maschinensteuerung übertragen und weiter bevorzugt in dieser mit einem Sollwert verglichen. Ist die erforderliche Anzahl des Bearbeitungsauftrags erreicht, so erfolgt vorzugsweise das Beenden des durchgeführten Bearbeitungsauftrags.

Bevorzugt wird der erste Bearbeitungsauftrag beendet, sobald die in dem Stapel des Stapelbereichs der Substratzufuhreinrichtung 100 bereitgestellten Substrate 02 bearbeitet wurden oder die Anzahl der zu erzielenden Produkte des ersten Bearbeitungsauftrags erreicht ist oder nach Erreichen der Anzahl der zu erzielenden Produkte die verbliebenen Substrate 02 des mindestens einen Anlegerstapels 104 bearbeitet wurden. Beispielsweise umfasst der Stapel des Stapelbereichs dabei mehr Substrate 02 als die Anzahl der zu erzielenden Produkte des Bearbeitungsauftrags. Vorzugsweise werden zumindest ab dem Zeitpunkt, wenn in der Auslage 1000 die Anzahl der zu erzielenden Produkte erreicht wurde, keine weiteren Substrate von dem Stapel des Stapelbereichs zu dem mindestens einen Anlegerstapel 104 gefördert. Vorzugsweise werden lediglich die bereits auf dem Förderweg befindlichen und/oder die im Anlegerstapel 104 vorhandenen Substrate 02 ab dem Zeitpunkt des Erreichens der zu erzielenden Produktanzahl weiter durch die Bearbeitungsmaschine 01 gefördert oder bearbeitet, vorzugsweise bevor ein Umrüstprozess gestartet wird. Vorzugsweise wird zum Beenden des Bearbeitungsauftrags der mindestens eine Anlegerstapel 104 leergefahren, vorzugsweise dessen verbliebenen Substrate 02 durch die Bearbeitungsmaschine 01 befördert beziehungsweise bearbeitet und auf einen Auslagestapel abgelegt. Beispielsweise werden diese verbliebenen Substrate 02 nach der Bearbeitung auf dem Auslagestapelträger 1003 der Produkte abgelegt oder aber sie werden auf einen alternativen Auslagestapel, beispielsweise in der Ausleitauslage 1002, abgelegt. Der Substratstapel des Auslagestapelträgers 1003, welcher bevorzugt die für den ersten Bearbeitungsauftrag bearbeiteten Substrate 02 umfasst, wird vorzugsweise aus der Bearbeitungsmaschine 01 entfernt, also abtransportiert. Die erzeugten Produkte werden beispielsweise in einem nachgelagerten Prozess weiterverarbeitet, beispielsweise an einer weiteren Maschine, vorzugsweise zur Erzeugung von Endprodukten.

Automatisiert beschreibt vorzugsweise im Vorangegangenen und im Folgenden einen festgelegten Ablauf eines Prozesses, welcher selbstständig durch die Bearbeitungsmaschine 01 insbesondere gesteuert durch die mindestens eine Maschinensteuerung durchgeführt wird. Vorzugsweise beschreibt ein automatisierter Prozess im Vorangegangenen und im Folgenden das Gegenteil zu einem manuellen Prozess, also einen durch einen Bediener durchgeführten Prozess.

Nach dem ersten Bearbeitungsauftrag, insbesondere nachdem dieser beendet wurde, folgt das Umrüsten der Bearbeitungsmaschine 01 zur Anpassung mindestens eines Aggregats 100; 300; 600; 700; 900; 1000 der Bearbeitungsmaschine 01 an eine Konfiguration eines direkt nachfolgenden Bearbeitungsauftrags. Es erfolgt der Beginn des Umrüstens automatisiert, also durch die Maschinensteuerung gesteuert, insbesondere ohne Bedienereinwirkung. Es wird mindestens ein Umrüstprozess durchgeführt. Vorzugsweise laufen mindestens zwei Umrüstprozesse automatisiert ab. Bevorzugt werden diese mindestens zwei Umrüstprozesse durch die Maschinensteuerung gesteuert, bevorzugt ohne zusätzliche Bedienereinwirkung zur Durchführung und/oder zum Starten des jeweiligen Prozesses. Es laufen mindestens zwei Umrüstprozesse zeitlich überlappend, bevorzugt parallel, zueinander ab, welche durch die Maschinensteuerung gesteuert werden und noch weiter bevorzugt automatisiert ablaufen. Grundlage für die Steuerung der Umrüstprozesse durch die Maschinensteuerung bildet vorzugsweise die eingestellte Konfiguration für den direkt nachfolgenden Bearbeitungsauftrag.

Während des Umrüstens läuft mindestens ein Umrüstprozess des mindestens einen Formgebungsaggregats 900 zeitlich überlappend, weiter bevorzugt parallel, zu mindestens einem weiteren Umrüstprozess der Bearbeitungsmaschine 01 ab. Die Maschinensteuerung steuert die mindestens zwei zeitlich überlappend ablaufenden Umrüstprozesse vorzugsweise automatisiert, also bevorzugt ohne zusätzliche Bedienereinwirkung zur Durchführung und/oder zum Starten des jeweiligen Prozesses. In bevorzugter Ausführung laufen während des Umrüstens mindestens drei Umrüstprozesse der Bestandteile der Bearbeitungsmaschine 01, weiter bevorzugt drei Umrüstprozesse der Bearbeitungsaggregate, noch weiter bevorzugt zumindest des mindestens einen Formgebungsaggregats 900 und des mindestens einen Auftragaggregats 600 und der mindestens einen Substratzufuhreinrichtung 100 und der mindestens einen Auslage 1000, zueinander zeitlich überlappend und bevorzugt automatisiert ab. Die Bearbeitungsmaschine 01 weist vorzugsweise zumindest das mindestens eine Formgebungsaggregat 900, das mindestens eine Auftragaggregat 600, die mindestens eine Substratzufuhreinrichtung 100 und die mindestens eine Auslage 1000 als Aggregate 100; 300; 600; 700; 900; 1000 auf, wobei weiter bevorzugt während des Umrüstens mindestens drei Umrüstprozesse dieser Bestandteile der Bearbeitungsmaschine 01 zueinander zeitlich überlappend automatisiert ablaufen. Mindestens zwei der Umrüstprozesse, bevorzugt alle durchgeführten Umrüstprozesse, laufen bevorzugt automatisiert nach dem in der Maschinensteuerung hinterlegten Schema zur Einstellung der geforderten Konfiguration ab.

Die Maschinensteuerung steuert zumindest die mindestens zwei zeitlich überlappend ablaufenden Umrüstprozesse. Weiter bevorzugt laufen zumindest die zueinander zeitlich überlappend ablaufenden Umrüstprozesse während des Umrüstens automatisiert, also bevorzugt ohne Bedienereinwirkung ab, wodurch vorteilhafterweise der Bediener weitere Prozesse wie Umrüsten eines anderen Elements vornehmen kann. Ein ohne Bedienereinwirkung erfolgender Prozess beschreibt vorzugsweise, dass die Maschinensteuerung den Start des Prozesses selbsttätig auslöst und/oder den Prozess selbsttätig durchführt, beispielsweise ohne explizite Freigabe zum Zeitpunkt des Beginns dieses Prozesses durch den Bediener.

Nach abgeschlossenem Umrüsten folgt ein Starten des direkt nachfolgenden Bearbeitungsauftrags.

Der direkt nachfolgende Bearbeitungsauftrag wird bevorzugt manuell durch den Bediener gestartet. Vorzugsweise wird während des vorangehenden Umrüstens die Bearbeitungsmaschine 01 entriegelt, sodass mindestens ein Aggregat 100; 300; 600; 700; 900; 1000 für den Bediener zugänglich wird, der Bediener vorzugsweise mindestens einen manuellen Umrüstprozess durchführen kann. Um die Sicherheit des Bedieners zu gewährleisten, ist somit eine Bestätigung erforderlich, dass er den Wirkbereich der Bearbeitungsmaschine 01 verlassen hat. Vorzugsweise startet der direkt nachfolgende Bearbeitungsauftrag erst nach Bestätigung, beispielsweise durch Drücken eines Tasters oder eines Bedienfelds, durch den Bediener.

Während des direkt nachfolgenden Bearbeitungsauftrags wird mindestens ein Substrat 02 mit dem mindestens einen als Formgebungsaggregat 900 ausgebildeten Bearbeitungsaggregat 900 und dem mindestens einen als Auftragaggregat 600 ausgebildeten Bearbeitungsaggregat 600 der Bearbeitungsmaschine 01 bearbeitet, vorzugsweise gestanzt und/oder gerillt und/oder perforiert und/oder geprägt beziehungsweise bedruckt und/oder lackiert und/oder grundiert. Vorzugsweise unterscheidet sich ein erzeugtes Stanzbild und/oder erzeugtes Druckbild des zweiten Bearbeitungsauftrags von dem des ersten Bearbeitungsauftrags. Beispielsweise beginnt ein Zähler zum Zählen der zu bearbeitenden oder bearbeiteten Substrate 02 zu Beginn des neuen Bearbeitungsauftrags mit Null.

Beispielsweise folgt mindestens ein weiterer nachfolgender Bearbeitungsauftrag. Dabei ist vorzugsweise zwischen jedem Bearbeitungsauftrag ein Umrüsten der Bearbeitungsmaschine 01 vorgesehen. Es wird bevorzugt zumindest vor dem jeweiligen Umrüsten, beispielsweise vor dem Umrüsten für den direkt auf den ersten Bearbeitungsauftrag nachfolgenden Bearbeitungsauftrag, weiter bevorzugt während der Abarbeitung des ersten Bearbeitungsauftrags, vorbereitet und/oder vorgegeben und/oder in der Maschinensteuerung geladen und/oder eingestellt und/oder gespeichert. Vorteilhafterweise verkürzt dies nötige Einstellungen zu einem späteren Zeitpunkt. Der Bediener kann somit frühestmöglich mit der Vorbereitung der Bearbeitungsaufträge beginnen. Alternativ erfolgt die Vorbereitung und/oder Einstellung der jeweiligen Konfiguration spätestens während des jeweils direkt vorangehenden Bearbeitungsauftrags.

Die Maschinensteuerung steuert bevorzugt das Beenden des ersten Bearbeitungsauftrags und/oder den Beginn des Umrüstens und/oder die Durchführung zumindest der zeitlich überlappenden Umrüstprozesse des Umrüstens und/oder ein Beenden des Umrüstens. Vorzugsweise laufen diese Prozesse automatisiert ab, also bevorzugt ohne eine weitere Bedienereinwirkung. Alternativ werden zumindest die notwendigen Vorgänge, welche ein Bediener zur Durchführung dieser Prozesse aufbringen muss, reduziert. Vorzugsweise wird dadurch die Stillstandzeit verkürzt. Vorzugsweise kann der Bediener bereits Vorbereitungen für weitere nachfolgende Bearbeitungsaufträge treffen und/oder Überwachung der Qualität der erzeugten Produkte vertiefen und/oder Wartungen an im derzeit laufenden Bearbeitungsprozess nicht verwendeter Elemente der Bearbeitungsmaschine 01 vornehmen.

In einer bevorzugten Weiterbildung werden der Maschinensteuerung die mindestens drei aufeinanderfolgenden Bearbeitungsaufträge zugeführt. Vorzugsweise erstellt die Maschinensteuerung die Konfigurationen der Bearbeitungsaufträge sowie berechnet die dazu notwendigen Umrüstprozesse zwischen den Bearbeitungsaufträgen. Bevorzugt schlägt die Maschinensteuerung dem Bediener eine Reihenfolge zur Abarbeitung der Bearbeitungsaufträge vor, welche vorzugsweise die Dauer und/oder Anzahl der Umrüstprozesse zwischen den einzelnen Bearbeitungsaufträgen minimiert.

Im Nachfolgenden werden Beispiele der Umrüstprozesse der einzelnen Aggregate 100; 300; 600; 700; 900; 1000 näher erläutert.

Während mindestens eines Umrüstprozesses der mindestens einen Substratzufuhreinrichtung 100 der Bearbeitungsmaschine 01 wird vorzugsweise eine Anpassung an ein Format eines zu bearbeitenden Substrats 02 durchgeführt, beispielsweise automatisiert. Bevorzugt wird dazu eine Veränderung einer Position mindestens eines Bestandteils der Substratzufuhreinrichtung 100 zur Anpassung an das Format eines zu bearbeitenden Substrats 02 durchgeführt. Beispielsweise wird ein Abstand des Schuppenanlegers zu dem Speicherbereich 166, beispielsweise zu dem mindestens einen Vorderanschlag des Speicherbereichs 166, an das Format angepasst. Insbesondere wird der Abstand bei kleinerem Format für den nachfolgenden Bearbeitungsauftrag verringert, während der Abstand bei größerem Format vergrößert wird. Beispielsweise zusätzlich oder alternativ wird der Abstand zwischen den das Substrat 02 ausrichtenden Anschlägen an dem Stapelbereich und/oder der Abstand zwischen den das Substrat 02 ausrichtenden Anschlägen an dem Speicherbereich 166 angepasst, insbesondere bei kleinerem Format für den nachfolgenden Bearbeitungsauftrag verringert oder bei größerem Format vergrößert. Beispielsweise zusätzlich oder alternativ wird die mindestens eine Blaseinrichtung näher an den Stapelbereich herangefahren oder von diesem weiter entfernt angeordnet. Beispielsweise zusätzlich oder alternativ wird die Ansteuerung des mindestens einen Beschleunigungsmittels, bevorzugt zumindest des primären Beschleunigungsmittels, an das Format angepasst. Insbesondere wird dabei der Zeitpunkt des Starts der Beschleunigung und/oder die Dauer der Beschleunigung und/oder die Länge des mindestens einen Beschleunigungsmittels in Transportrichtung T angepasst. Beispielsweise wird die Dauer der Beschleunigung des mindestens einen primären Beschleunigungsmittels so eingestellt, dass diese endet, sobald ein weiteres auf ein zu beschleunigendes Substrat 02 nachfolgendes Substrat 02 in Kontakt zu dem mindestens einen Beschleunigungsmittel tritt. Beispielsweise wird die Länge des mindestens einen primären Beschleunigungsmittels so eingestellt, dass diese kürzer als die Länge des zu bearbeitenden Substrates 02 ist.

Der Stapel an Substrat 02 des Stapelbereichs der Substratzufuhreinrichtung 100 wird beispielsweise bei einem Formatwechsel oder Wechsel der Art des Substrates 02 gewechselt, dies kann beispielsweise bereits während des Leerfahrens des Anlegerstapels 104 erfolgen oder während des Umrüstens. Alternativ verbleibt der Stapel an Substrat 02 bei gleichbleibendem Format oder gleichbleibender Art in dem Stapelbereich.

An dem mindestens einen Auftragaggregat 600, beispielsweise an mindestens zwei der Auftragaggregate 600, wird vorzugsweise mindestens ein Umrüstprozess der folgenden Umrüstprozesse durchgeführt: Reinigung eines Auftragwerks 614 und/oder Änderung eines Abstands zwischen einem Formzylinder 602 und einem Gegendruckzylinder 608 des mindestens einen Auftragaggregats 600 und/oder Wechsel eines eingesetzten Auftragfluids und/oder Anpassung einer Auftragsmenge eines eingesetzten Auftragfluids und/oder Wechsel eines Formzylinders 602 des mindestens einen Auftragaggregats 600 und/oder Wechsel mindestens einer Druckform des mindestens einen Auftragaggregats 600 und/oder Wechsel einer Rasterwalze 603 des mindestens einen Auftragaggregats 600. Beispielsweise werden lediglich diejenigen Auftragaggregate 600 der Auftragaggregate 600 umgerüstet, für welche eine Veränderung der Konfiguration vorgesehen ist. Bevorzugt läuft zumindest einer der Umrüstprozesse, bevorzugt mindestens zwei der Umrüstprozesse, weiter bevorzugt alle dieser Umrüstprozesse, automatisiert ab.

Mindestens ein Umrüstprozess des mindestens einen Auftragaggregats 600 läuft in bevorzugter Ausführung bevorzugt zeitlich überlappend, bevorzugt parallel, zu dem mindestens einen Umrüstprozess des mindestens einen Formgebungsaggregats 900 ab. Bevorzugt läuft zumindest dieser zeitlich überlappende Umrüstprozess automatisiert ab. Vorteilhafterweise werden die verschiedenen Bearbeitungsaggregate 600; 900 zeitgleich umgerüstet und eine benötigte Stillstandzeit reduziert.

Beispielsweise erfolgt der Wechsel des Formzylinders 602 des Auftragaggregats 600 bei einer Formatveränderung des Substrates 02, insbesondere wenn die Länge eines zu bedruckenden Bereichs des Substrates 02 eine für mindestens eine Druckform eines zuvor verwendeten Formzylinders 602 vorgesehene Umfangslänge des Formzylinders 602 übersteigt. Beispielsweise wird der Wechsel des Formzylinders 602 des Auftragaggregats 600 manuell durchgeführt oder durch eine zu der Vorrichtung zum Wechseln 950 des mindestens einen Formgebungsaggregats 900 gleiche Vorrichtung.

Insbesondere zur Änderung eines zu erzeugenden Druckbildes wird bevorzugt die mindestens eine Druckform des Formzylinders 602 gewechselt. Beispielsweise wird die zu entfernende Druckform automatisiert von dem Formzylinder 602 abgezogen und anschließend eine neue Druckform automatisiert aufgezogen. Vorzugsweise wird die zu entfernende Druckform durch mindestens ein Haltemittel gehalten während der Formzylinder 602 eine Drehung um dessen Rotationsachse vollführt, wodurch ein Abschaben der Druckform vom Formzylinder 602 erfolgt. Die neue Druckform wird an den Formzylinder 602 angestellt und durch Drehen des Formzylinders 602 an dessen Mantelfläche angelegt. Bevorzugt wird die bisher verwendete Druckform vor dem Auswechseln gereinigt, bevorzugt gewaschen.

Vorzugsweise wird das eingesetzte Auftragfluid mindestens eines Auftragaggregats 600 geändert, beispielsweise von einer ersten Farbe zu einer zweiten Farbe. Bevorzugt wird beim Wechsel der Farbbelegung zusätzlich oder alternativ das mindestens eine Auftragwerk 614 des Auftragaggregats 600, bevorzugt zumindest die mindestens eine Druckform des Formzylinders 602 und/oder die mindestens eine Rasterwalze 603 und/oder der mindestens eine Gegendruckzylinder 608, gereinigt, bevorzugt gewaschen. Die Reinigung erfolgt bevorzugt vor dem Wechsel des Auftragfluids. Beispielsweise zusätzlich oder alternativ wird beim Wechsel der Farbbelegung die mindestens eine Rasterwalze 603 des Auftragaggregats 600 gegen eine weitere Rasterwalze 603 gewechselt, beispielsweise erfolgt der Rasterwalzenwechsel vor dem Wechsel des Auftragfluids. Beispielsweise zusätzlich oder alternativ wird beim Wechsel der Farbbelegung die mindestens eine Druckform des Formzylinders 602 des Auftragaggregats 600 gegen eine weitere Druckform gewechselt. Beispielsweise erfolgt der Wechsel der mindestens einen Druckform vor dem Wechsel des Auftragfluids.

Beispielsweise zusätzlich oder alternativ wird die Auftragsmenge des Auftragfluids des mindestens einen Auftragaggregats 600 geändert. Dazu wird bevorzugt die mindestens eine Rasterwalze 603 des Auftragaggregats 600 gegen eine weitere Rasterwalze 603 gewechselt. Beispielsweise erfolgt der Rasterwalzenwechsel zeitgleich zu einem Druckformwechsel. Alternativ wird die Rasterwalze 603 vor oder nach der mindestens einen Druckform gewechselt.

Beispielsweise zur Anpassung an eine veränderte Dicke eines Substrates 02 wird während des Umrüstens ein Abstand zwischen dem Formzylinder 602 und dem Gegendruckzylinder 608 bei Anordnung an der Auftragsstelle 609 angepasst. Vorzugsweise werden der Formzylinder 602 und der Gegendruckzylinder 608 so angeordnet, dass sich diese bei Abwesenheit eines Substrates 02 nicht berühren, während sie bei Anwesenheit eines Substrates 02 dieses berühren und eine zum Übertrag des Auftragfluids ausreichende Pressung auf das Substrat 02 ausüben. Bevorzugt ist die Anpassung des Abstands zwischen dem Formzylinder 602 und Gegendruckzylinder 608 ein letzter Umrüstprozess des Auftragaggregats 600 vor Beenden des Umrüstens.

Beispielsweise erfolgt der als Reinigungsvorgang ausgebildete Umrüstprozess des Auftragwerks 614, bevorzugt der mindestens einen Druckform, des mindestens einen Formzylinders 602 und/oder der mindestens einen Rasterwalze 603 auch zu Wartungszwecken, beispielsweise nach einem vorgegebenen Zeitintervall und/oder nach einer vorgegebenen Anzahl von bearbeiteten Substraten 02, bevorzugt unabhängig von weiteren Umrüstprozessen des Auftragaggregats 600. Vorzugsweise erfolgt eine Reinigung vor dem Wechsel mindestens einer Druckform und/oder vor dem Wechsel einer Rasterwalze 603 und/oder vor dem Einbringen eines neuen Auftragfluids.

Zum Reinigen wird der zumindest eine Formzylinder 602, beispielsweise auch der die zu reinigende Druckform aufweisende Formzylinder 602, bevorzugt rotiert, während mindestens ein Reinigungselement an ihn angestellt ist und/oder während mindestens ein Waschmittel, beispielsweise Wasser oder ein wasserbasiertes Reinigungsmittel, dessen Oberfläche reinigt. Beispielsweise kann das Waschmittel auch über die Rasterwalze 603 auf den Formzylinder 602 übertragen werden. Beispielsweise ist das Reinigungselement als Wischer oder Bürste ausgebildet. Bevorzugt wischt das mindestens eine Reinigungselement die Mantelfläche des Formzylinders 602 oder die mindestens eine Druckform oder die mindestens eine Rasterwalze 603. In bevorzugter Ausführung wird der mindestens eine Reinigungsvorgang des Auftragwerks 614 automatisiert gestartet und/oder durchgeführt. Bevorzugt wird automatisiert das mindestens eine Reinigungselement an den zumindest einen Formzylinder 602 oder an die Rasterwalze 603 angestellt und/oder automatisiert nach erfolgter Reinigung abgestellt. Vorzugsweise wird der zumindest eine Formzylinder 602 und/oder die Rasterwalze 603 dabei automatisiert rotiert. Beispielsweise wird die mindestens eine Kammerrakel 604, besonders bevorzugt die Rakel und der mindestens eine Zwischenspeicher, automatisiert von der Rasterwalze 603 abgestellt und/oder automatisiert nach erfolgter Reinigung angestellt.

Ein zusätzlicher oder alternativer Reinigungsvorgang ist bevorzugt ein Spülen des Versorgungssystems von Auftragfluid des Auftragaggregates 600 mit einem Waschmittel, bevorzugt einem wasserbasierten Reinigungsmittel oder Wasser. Bevorzugt wird zumindest die mindestens eine Leitung 631, beispielsweise zusätzlich der mindestens eine Zwischenspeicher der mindestens einen Kammerrakel 604, gespült. Für eine bevorzugte intensivierte Reinigung wird das mindestens eine Waschmittel in dem Versorgungssystem und beispielsweise zusätzlich in der Fluidquelle 629, für diesen Fall ist die Fluidquelle 629 bevorzugt in der Wirkposition angeordnet, zirkuliert. Beispielsweise verlässt zumindest ein Teil des Waschmittels die mindestens eine Leitung 631 durch die mindestens eine Lanze 632, wodurch dieses bevorzugt in eine Entsorgungseinheit, beispielsweise einen Abfallbehälter, geleitet wird.

Besonders bevorzugt erfolgen das Spülen des Versorgungssystems und das Reinigen des Formzylinders 602 und/oder der Rasterwalze 603 mit mindestens einem Reinigungselement gemeinsam in einem kombinierten Reinigungsvorgang.

Insbesondere werden Bestandteile des Auftragaggregates 600 verstellt. Die Verstellungsbewegungen erfolgen dabei bevorzugt während des Umrüstens des Auftragaggregates 600. Vorteilhafterweise wird ein Reinigungsvorgang automatisiert gestartet und/oder durchgeführt. Handlungen eines Bedieners werden vorteilhafterweise reduziert.

Vorzugsweise wird in einem ersten Schritt eines Verfahrens zur Verstellung der Bestandteile des Auftragaggregates 600, insbesondere in einem Schritt des besonders bevorzugt spülenden Reinigungsvorgangs, in der mindestens einen Leitung 631 vorhandenes Auftragfluid aus der mindestens einen Leitung 631 entfernt, bevorzugt in die mindestens eine Fluidquelle 629 zurückgeleitet oder in eine Entsorgungseinheit geleitet oder in den Zwischenspeicher der Kammerrakel 604 geleitet. Vorzugsweise zusätzlich oder alternativ wird die Pumpeinrichtung, die das Auftragfluid durch die mindestens eine Leitung 631 fördert, gestoppt.

In einem weiteren Schritt des Verfahrens zur Verstellung der Bestandteile des Auftragaggregates 600, insbesondere in einem weiteren Schritt des besonders bevorzugt spülenden Reinigungsvorgangs, besonders bevorzugt nachdem die Pumpeinrichtung gestoppt wurde, wird vorzugsweise die mindestens eine Lanze 632 der mindestens einen Leitung 631 von der in ein Volumen der in der Wirkposition angeordneten Fluidquelle 629 hineinragenden ersten, abgesenkten Position in die zweite, angehobene Position außerhalb des Volumens der Fluidquelle 629 verstellt. Bevorzugt werden die mindestens zwei Lanzen 632 gemeinsam über eine gemeinsame Halterung und/oder Führung 633 verstellt. Die Verstellung erfolgt bevorzugt entlang der mindestens einen Führung 633, bevorzugt durch Anheben in vertikaler Richtung V. Die mindestens eine Lanze 632 wird bevorzugt durch den mindestens einen Antrieb M4 verstellt. Zur Verstellung der mindestens einen Lanze 632 wird bevorzugt der mindestens eine Antrieb M4 der Lanze 632, besonders bevorzugt ausgebildet als pneumatischer Hubantrieb, durch die mindestens eine Steuerungseinheit angesteuert. Vorteilhafterweise wird durch Verstellen der mindestens einen Lanze 632 die Wirkverbindung zu der mindestens einen Fluidquelle 629 unterbrochen, wodurch die Fluidquelle 629 auf vorteilhafte Weise für eine Entnahme und/oder Verstellung freigegeben wird.

In einem weiteren Schritt des Verfahrens zur Verstellung der Bestandteile des Auftragaggregates 600, insbesondere in einem weiteren Schritt des besonders bevorzugt spülenden Reinigungsvorgangs, insbesondere nachdem die mindestens eine Lanze 632 in die zweite Position verstellt wurde, wird bevorzugt die mindestens eine Ausschiebevorrichtung 623 durch die mindestens eine Steuerungseinheit angesteuert. Die mindestens eine Ausschiebevorrichtung 623 verstellt bevorzugt die mindestens eine Fluidquelle 629, insbesondere den Farbeimer, von der Wirkposition in Bewegungsrichtung B in die Abstellposition, besonders bevorzugt linear gerichtet. Besonders bevorzugt verstellt das mindestens eine Stellmittel 626 der mindestens einen Ausschiebevorrichtung 623 zur Verstellung der mindestens einen Fluidquelle 629 die mindestens eine, insbesondere in Wirkkontakt zu der Fluidquelle 629 tretende, Kontaktfläche 624 der mindestens einen Ausschiebevorrichtung 623 von der ersten, deaktivierten Position in die zweite, aktivierte Position. Vorteilhafterweise entfällt somit ein händisches Herausziehen der mindestens einen Fluidquelle 629, ein Bediener wird entlastet und der Umrüstprozess beschleunigt. Die mindestens eine Ausschiebevorrichtung 623 gibt bevorzugt bei Anordnung der mindestens einen Kontaktfläche 624 in der ersten, deaktivierten Position die Wirkposition zur Anordnung der Fluidquelle 629 frei und blockiert bevorzugt bei Anordnung der mindestens einen Kontaktfläche 624 in der zweiten, aktivierten Position die Wirkposition zur Anordnung der Fluidquelle 629.

Beispielsweise wird die in der Abstellposition angeordnete Fluidquelle 629 durch einen Bediener gegen eine weitere Fluidquelle 629 getauscht, insbesondere zum Wechsel des Auftragfluids, und/oder mit zusätzlichem Auftragfluid befüllt, insbesondere mit derselben Art des schon vorhandenen Auftragfluids.

In einem weiteren Schritt des Verfahrens zur Verstellung der Bestandteile des Auftragaggregates 600, insbesondere in einem weiteren Schritt des besonders bevorzugt spülenden Reinigungsvorgangs, besonders bevorzugt sobald oder wenn die mindestens eine Fluidquelle 629 die Wirkposition verlassen hat und/oder in der Abstellposition angeordnet wurde, wird bevorzugt die mindestens eine Lanze 632, insbesondere durch Ansteuerung des Antriebs M4, von der zweiten Position in deren erste, bevorzugt abgesenkte, Position oder in eine weitere gegenüber der zweiten Position abgesenkte Position verstellt, insbesondere durch Absenken entgegen der vertikalen Richtung V. Vorteilhafterweise werden dadurch bisher blockierte Bewegungswege weiterer Komponenten des Auftragaggregats 600 freigegeben.

In einem weiteren Schritt des Verfahrens zur Verstellung der Bestandteile des Auftragaggregates 600, insbesondere in einem weiteren Schritt des besonders bevorzugt spülenden Reinigungsvorgangs, besonders bevorzugt nachdem die Fluidquelle 629 in die Abstellposition verstellt wurde und bei in der zweiten oder in der abgesenkten Position angeordneter Lanze 632, wird bevorzugt ein Reinigungsvorgang des Auftragaggregates 600 durchgeführt. Besonders bevorzugt wird das Versorgungssystem, insbesondere die mindestens eine Leitung 631, mit Waschmittel gespült und/oder der Formzylinder 602 durch das angestellte Reinigungselement gereinigt und/oder die Rasterwalze 603 durch das angestellte Reinigungselement gereinigt. Vorteilhafterweise startet das Spülen und/oder Reinigen somit automatisiert, insbesondere ohne eine notwendige Handlung eines Bedieners.

Bevorzugt nach erfolgtem Reinigungsvorgang wird bevorzugt die Fluidquelle 629 oder eine weitere Fluidquelle 629 in der Wirkposition angeordnet, beispielsweise durch einen Bediener oder automatisiert durch die mindestens eine Ausschiebevorrichtung 623 oder automatisiert durch mindestens eine weitere Stelleinrichtung. Hierbei ist die mindestens eine Lanze 632 bevorzugt in der zweiten, angehobenen Position angeordnet und/oder wurde in diese verstellt. Zudem wird nach erfolgtem Reinigungsvorgang bevorzugt die mindestens eine Lanze 632 in das Volumen der Fluidquelle 629 oder der weiteren Fluidquelle 629 abgesenkt. Dadurch kann nun das Auftragfluid der Fluidquelle 629 wieder in das Versorgungssystem, insbesondere die mindestens eine Leitung 631, eingeleitet werden, insbesondere durch Aktivieren der mindestens einen Pumpeinrichtung.

Während des Umrüstens wird beispielsweise mindestens eine Einstellung der mindestens einen Trocknungsvorrichtung 506 oder des mindestens einen Trocknungsaggregats durch die Maschinensteuerung angepasst. Bevorzugt wird die Intensität der Strahlung, insbesondere der UV- oder IR-Strahlung oder des Heißluftstroms, während des Umrüstens verändert, insbesondere erhöht oder erniedrigt. Beispielsweise erfolgt eine Anpassung der Trocknung bei einem Wechsel des Auftragfluids der Auftragsstelle 609, welcher diese Trocknungsvorrichtung 506 oder dieses Trocknungsaggregat zugeordnet ist, oder bei einer Veränderung der Auftragsmenge des betreffenden Auftragfluids.

Bevorzugt erfolgt ein Wechsel mindestens einer Rasterwalze 603 zeitlich überlappend, bevorzugt parallel, zu mindestens einem Umrüstprozess des mindestens einen Formgebungsaggregats 900, insbesondere dem Wechsel des Formzylinders 901 oder Wechsel des Werkzeugs. Bevorzugt zusätzlich oder alternativ zum Rasterwalzenwechsel erfolgt ein Wechsel mindestens einer Druckform zeitlich überlappend, bevorzugt parallel, zu mindestens einem Umrüstprozess des mindestens einen Formgebungsaggregats 900, insbesondere dem Wechsel des Formzylinders 901 oder Wechsel des Werkzeugs.

Beispielsweise werden an mindestens zwei Auftragaggregaten 600 parallel zueinander gleiche Umrüstprozesse durchgeführt.

Während des Umrüstens, bevorzugt automatisiert ablaufend, wird bevorzugt der mindestens eine Formzylinder 901 und/oder der mindestens eine Gegenstanzzylinder 902 des mindestens einen Formgebungsaggregats 900 von der Bearbeitungsstelle 909 des mindestens einen Formgebungsaggregats 900 entfernt, beispielsweise abgestellt und/oder entnommen und/oder in eine von der Bearbeitungsstelle 909 entfernte Position bewegt. Vorteilhafterweise kann dann ein Wechsel des Werkzeugs des Formzylinders 901 oder ein Austausch des Formzylinders 901 erfolgen, ohne Beeinträchtigung durch den Gegenstanzzylinder 902. Vorzugsweise erfolgt das Abstellen somit vor dem Wechsel eines Formzylinders 901 oder vor dem Wechsel des Werkzeugs. Zusätzlich oder alternativ wird während des Umrüstens, bevorzugt automatisiert ablaufend, der Abstand zwischen dem Formzylinder 901 und dem Gegenstanzzylinder 902 vorzugsweise zur Anpassung an ein Format eines zu bearbeitenden Substrats 02 verändert, bevorzugt bei größerer Substratdicke vergrößert oder bei kleinerer Substratdicke verkleinert. Bevorzugt erfolgt die Anpassung des Abstands zwischen dem Formzylinder 901 und Gegenstanzzylinder 902 nach dem Wechsel eines Formzylinders 901 oder nach dem Wechsel des Werkzeugs. Weiter bevorzugt ist die Anpassung des Abstands zwischen dem Formzylinder 901 und Gegenstanzzylinder 902 ein letzter Umrüstprozess des Formgebungsaggregats 900 vor Beenden des Umrüstens.

Vorteilhafterweise zum Wechsel des zu erzielenden Formgebungsergebnisses, vorzugsweise auch Stanzbild genannt, wird bevorzugt während des Umrüstens, bevorzugt automatisiert ablaufend, insbesondere gesteuert durch die Maschinensteuerung, der mindestens eine Formzylinder 901 des mindestens einen Formgebungsaggregats 900 gegen den mindestens einen weiteren Zylinder 903 durch die mindestens eine Vorrichtung zum Wechseln 950 des mindestens einen Formgebungsaggregats 900 gewechselt. Bevorzugt wird dadurch ein besonders schneller Austausch des zu erzielenden Formgebungsergebnisses erzielt. Vorteilhafterweise erfolgt der Wechselvorgang automatisiert, insbesondere gesteuert durch die Maschinensteuerung, also vorzugsweise ohne Bedienereinwirkung. Die Vorgänge laufen bevorzugt automatisiert nach dem in der Maschinensteuerung hinterlegten Schema zur Einstellung der geforderten Konfiguration ab. Das Werkzeug des Formzylinders 901 beziehungsweise des weiteren Zylinders 903 wird vorzugsweise an dem in der Wartungsposition angeordneten Formzylinder 901 oder weiteren Zylinder 901 gewechselt. Bevorzugt wird der einzuwechselnde Zylinder 903 in der Wartungsposition bereits während des Ablaufs des ersten Bearbeitungsauftrags vorgerüstet und dann während des Umrüstens ohne nötige Eingriffe eines Bedieners mit dem auszuwechselnden Formzylinder 901 gewechselt. Bevorzugt werden die zum Wechsel des Formzylinders 901 mit dem weiteren Zylinder 903 erforderlichen Prozesse durch die Maschinensteuerung gesteuert, vorzugsweise automatisiert durchgeführt.

Beispielsweise alternativ zum Wechsel des Formzylinders 901 mit dem weiteren Zylinder 903, wird zum Wechsel des zu erzielenden Formgebungsergebnisses das mindestens eine Werkzeug des mindestens einen Formzylinders 901 gewechselt. Insbesondere wird das mindestens eine Werkzeug während des Umrüstens gewechselt, beispielsweise manuell durch einen Bediener. Beispielsweise ist dies kostengünstiger als der Wechsel des Formzylinders 901, da lediglich ein Formzylinder 901 zur Aufnahme des Werkzeugs vorgehalten werden muss. Beispielsweise wird hierbei das jeweilige Werkzeug, in bevorzugter Ausführung die mindestens eine Halbschale 964 aufweisend das Werkzeug, durch den Bediener manuell von dem Formzylinder 901 abgenommen und auf den Formzylinder 901 angebracht. Dazu wird während des Umrüstens bevorzugt der mindestens eine Formzylinder 901 für einen Bediener automatisiert zugänglich gemacht, dies erfolgt also bevorzugt ohne Bedienereinwirkung. Vorzugsweise leitet die Maschinensteuerung die Zugänglichmachung ein, sobald das Umrüsten gestartet wurde und/oder sobald das betreffende Formgebungsaggregat 900 während des Umrüstens in Stillstand versetzt wurde. Die Zugänglichmachung wird vorzugsweise durch Abstellen des mindestens einen Formzylinders 901 und des mindestens einen Gegenstanzzylinders 902 voneinander erzielt. Dabei werden entweder beide Zylinder 901; 902 oder es wird dabei lediglich entweder der Formzylinder 901 oder der Gegenstanzzylinder 902 bewegt. Zusätzlich oder alternativ zum Abstellen der Zylinder 901; 902 wird die Zugänglichmachung erzielt durch Verfahren der mindestens einen Transporteinrichtung 710 eines Transportaggregats 700 der Bearbeitungsmaschine 01, insbesondere der bogenförmiges Substrat 02 transportierenden Transporteinrichtung 710, in eine von dessen Arbeitsposition entfernte Position, beispielsweise durch Anheben der Transporteinrichtung 710, und/oder durch Schwenken des mindestens einen Transportmittels 904. Vorteilhafterweise kann dann der Bediener auf einfache Weise an den Formzylinder 901 gelangen und dessen Werkzeug wechseln. Beispielsweise entfällt die mindestens eine Vorrichtung zum Wechseln 950, ist also nicht in die Bearbeitungsmaschine 01 integriert, wenn lediglich der manuelle Austausch des Werkzeugs des mindestens einen Formzylinders 901 durchgeführt wird.

Unter dem Wechsel des Werkzeugs des Formzylinders 901 des Formgebungsaggregats 900 wird vorzugsweise verstanden, dass andere Werkzeuge für den neuen Bearbeitungsauftrag eingesetzt werden, beispielsweise Messer mit neuer Klinge oder Werkzeuge mindestens einer anderen Bearbeitungsart, wie Rillen, Schneiden, Stanzen, Prägen und/oder Perforieren. Vorzugsweise wird unter einem Wechsel von Werkzeug auch verstanden, dass vor und nach dem Wechsel die selbe Art von Werkzeug jedoch in anderer Anordnung, also unterschiedlicher Werkzeugplatzierung, vorgesehen ist.

Ein weiterer Umrüstprozess des mindestens einen Formgebungsaggregats 900 ist eine Anpassung des Abstands zwischen dem Formzylinder 901 und Gegenstanzzylinder 902 an der Formgebungsstelle 909. Dies wird vorzugsweise zur Formatanpassung und/oder nach einem erfolgten Wechsel von Werkzeug oder Formzylinder 901 durchgeführt. Beispielsweise unabhängig davon, ob lediglich das Werkzeug oder der Formzylinder 901 gewechselt wird, wird bevorzugt der Abstand zwischen Formzylinder 901 und Gegenstanzzylinder 902 während eines Umrüstprozesses des Formgebungsaggregats 900 bei einer Veränderung der Dicke des Substrats 02 an die Dicke des zu bearbeitenden Substrates 02 des direkt nachfolgenden Bearbeitungsprozesses angepasst, bevorzugt vergrößert oder verkleinert, um die optimale Bearbeitung zu gewährleisten. Die Abstandsanpassung erfolgt bevorzugt automatisiert.

In einem weiteren oder alternativen Umrüstprozess des mindestens einen Formgebungsaggregats 900 erfolgt vorzugsweise ein Abschleifen des Gegenstanzzylinders 902 mit dem mindestens einen Schleifzylinder 911. Bevorzugt wird der Schleifzylinder 911 dazu an die Mantelfläche des Gegenstanzzylinders 902 angestellt, bevorzugt in Berührkontakt, und der Gegenstanzzylinder 902 in Rotation versetzt. Beispielsweise alternativ erfolgt das Abschleifen des Gegenstanzzylinders 902 während der Abarbeitung eines Bearbeitungsauftrags, vorzugsweise in regelmäßigen Intervallen.

In einer beispielhaften Ausführung der Bearbeitungsmaschine 01 weist diese mindestens zwei Formgebungsaggregate 900 auf, welche in Transportrichtung T hintereinander angeordnet sind. Vorzugsweise unterscheiden sich die Werkzeuge dieser Formgebungsaggregate 900 voneinander oder die Werkzeugplatzierungen sind zueinander unterschiedlich, beispielsweise zur Erzeugung eines unterschiedlichen Stanzbildes. Beispiele für Werkzeuge sind dabei Stanzwerkzeug, Prägewerkzeug, Rillwerkzeug, Perforierwerkzeug, Ausbrechwerkzeug. Beispielsweise sind für mindestens zwei dieser Werkzeugarten, bevorzugt für jede, ein eigenes Formgebungsaggregat 900 vorgesehen. Vorzugsweise wird dann mindestens eines dieser Formgebungsaggregate 900, beispielsweise auch alle, während des Umrüstens angepasst, beispielsweise die Formzylinder 901 oder das Werkzeug gewechselt oder der Abstand des jeweiligen Formzylinders 901 zu dessen Gegenstanzzylinder 902 angepasst. In dieser beispielhaften Ausführung der Bearbeitungsmaschine 01 ist in bevorzugter Ausführung mindestens ein Auftragaggregat 600 den Formgebungsaggregaten vorgeordnet oder alternativ die Bearbeitungsmaschine 01 ohne Auftragaggregate 600 ausgebildet.

Während mindestens eines Umrüstprozesses der mindestens einen Auslage 1000 der Bearbeitungsmaschine 01 wird bevorzugt eine Anpassung an ein Format eines zu bearbeitenden Substrats 02 durchgeführt. Die Formatanpassung erfolgt bevorzugt automatisiert. Bevorzugt wird zum Formatwechsel mindestens ein Anschlag der Auslage 1000, bevorzugt der mindestens eine Anschlag für die Hinterkante und/oder der mindestens eine Anschlag für die Vorderkante und/oder der mindestens eine seitliche Anschlag, verstellt. Der mindestens eine Anschlag wird dabei bevorzugt von dessen bisheriger Position weiter in den Bereich eines abzulegenden Substrates 02 hineinbewegt oder daraus herausbewegt, je nach Format des Substrates 02 des direkt nachfolgenden Bearbeitungsauftrags. Beispielsweise zusätzlich oder alternativ zu der Positionsänderung des mindestens einen Anschlags wird die Drehgeschwindigkeit des mindestens einen Drückers der Auslage 1000 an das Format des Substrates 02 angepasst. Dabei wird die Drehgeschwindigkeit vorzugsweise beschleunigt oder verlangsamt, um den Drücker in dessen Wirkbereich im Transportweg von Substrat 02 anzuordnen, wenn der hintere Bereich des Substrates 02 dort angeordnet ist. Vorteilhafterweise wird dadurch vermieden, dass das Substrat 02, welches gelöst wird, durch die Drehbewegung des Drückers in oder entgegen der Transportrichtung T bewegt wird. Beispielsweise zusätzlich oder alternativ wird vorzugsweise die Abbremsgeschwindigkeit durch das mindestens eine abbremsende Transportmittel angepasst. Kleinere Formate des Substrates 02 können beispielsweise langsamer abgebremst werden als größere Formate, da bei gleicher Maschinengeschwindigkeit und/oder Zykluszeit mehr Zeit bis zum Eintreffen des nachfolgenden Substrates 02 zur Verfügung steht. Bevorzugt wird dadurch das Substrat 02 und/oder das abbremsende Transportmittel in der Abnutzung geschont.

Beispielsweise wird während eines Umrüstens zusätzlich oder alternativ zu weiteren Umrüstprozessen die Anzahl der Substrat 02 bearbeitenden Aggregate 600; 900 verändert. Vorteilhafterweise werden dadurch redundante Bearbeitungsaggregate 600; 900 vermieden oder es kann bereits während einer Produktion ein ausgekoppeltes Bearbeitungsaggregat 600; 900 beispielsweise manuell für einen nachfolgenden Bearbeitungsauftrag vorbereitet werden. In einer bevorzugten Ausführung wird mindestens ein Auftragaggregat 600 zur Reduzierung der Anzahl an Auftragaggregaten 600 so angepasst, dass es zwar den Transport von Substrat 02 entlang des Transportweges gewährleistet, das Substrat 02 dabei allerdings nicht bearbeitet. Dies wird bevorzugt durch eine Unterbrechung der Zufuhr des Auftragfluids zum Formzylinder 602, weiter bevorzugt durch ein Abstellen der Rasterwalze 603 von dem Formzylinder 602, erzielt. Zur Erhöhung der Anzahl wird dann dieses mindestens eine Auftragaggregat 600 zur Bearbeitung von Substrat 02 angepasst, also bevorzugt die Zufuhr des Auftragfluids beispielsweise durch Anstellen der Rasterwalze 603 an den Formzylinder 602 gewährleistet. Vorteilhafterweise kann so schnell und einfach die Anzahl der eingesetzten Bearbeitungsaggregate 600; 900 angepasst werden, ohne die Gesamtanzahl und Reihenfolge der Bearbeitungsaggregate 600; 900 zu verändern. Beispielsweise in einer alternativen Ausführung wird mindestens ein Auftragaggregat 600 zur Reduzierung der Anzahl aus dem Transportweg entfernt oder zur Erhöhung der Anzahl in diesen integriert. Die Auftragsaggregate 600 weisen dazu beispielsweise Stellantriebe zum An- und Abstellen der Auftragsaggregate 600 auf. Die verbleibenden Aggregate 100; 300; 600; 700; 900; 1000 der Bearbeitungsmaschine 01 werden dann vorzugsweise so in deren Positionierung verändert, dass ein durchgängiger Transportweg von Substrat 02 besteht, also beispielsweise durch Ankoppeln der verbleibenden Aggregate 100; 300; 600; 700; 900; 1000 aneinander oder durch Entkoppeln der bisherigen Aggregate 100; 300; 600; 700; 900; 1000 und Einkoppeln des einzufügenden Bearbeitungsaggregats 600; 900. Insbesondere wenn die Anzahl an ein Substrat 02 bearbeitender Auftragaggregate 600 des ersten Bearbeitungsprozesses zu der Anzahl an ein Substrat 02 bearbeitender Auftragaggregate 600 des mindestens einen nachfolgenden Bearbeitungsprozesses verschieden ist, wird bevorzugt gemäß der Anzahl des direkt nachfolgenden Bearbeitungsauftrags mindestens ein Auftragaggregat 600 zur Durchführung einer Bearbeitung von Substrat 02 durch ein Anstellen der Rasterwalze 603 an den Formzylinder 602 oder zum Transport von Substrat 02 ohne zeitgleiche Bearbeitung des Substrats 02 durch ein Abstellen der Rasterwalze 603 von dem Formzylinder 602 angepasst oder es wird bevorzugt gemäß der Anzahl des direkt nachfolgenden Bearbeitungsauftrags mindestens ein Auftragaggregat 600 in den Transportweg von Substrat 02 integriert oder aus diesem entfernt. Bevorzugt erfolgt vor der Veränderung der Anzahl der Bearbeitungsaggregate 600; 900 ein Reinigen des mindestens einen Auftragaggregats 600, dessen Zufuhr von Auftragfluid unterbrochen werden soll oder welches zu entfernen ist. Beispielsweise wird das entfernte Auftragaggregat 600 während des entfernten Zustands gewartet oder umgerüstet.

Beispielsweise können mindestens zwei Arten der Umrüstung unterschieden werden. Vorzugsweise wählt die Maschinensteuerung die Art der Umrüstung für einen anstehenden Umrüstprozess aus oder schlägt diese dem Bediener zur Zustimmung vor. Vorzugsweise unabhängig von der Art des Umrüstens werden beim Wechsel des Bearbeitungsauftrags in der Maschinensteuerung, beispielsweise in deren Steuerungseinheiten, die Auftragsdaten gewechselt. Dies betrifft beispielsweise die Erstellung von Dokumentation wie beispielsweise den Start eines neuen Dokumentationsdokuments, ein Abspeichern der Auftragsdaten, und/oder ein neues Setzen von mindestens einem Zähler zum Zählen der bearbeiteten oder zu bearbeitenden Substrate 02 für den jeweiligen Bearbeitungsauftrag. Vorzugsweise wird mindestens eine Einheit, welche der Bearbeitungsmaschine 01 in der Prozesskette zur Verarbeitung von Substrat 02 nachgeschaltet ist, beispielsweise mindestens ein Palettierer und/oder eine Faltmaschine und/oder eine Klebemaschine, mittels Datenübertragung, beispielsweise per Kabel oder kabellos, über den Wechsel des Bearbeitungsauftrags informiert, vorzugsweise automatisiert durch die mindestens eine Maschinensteuerung. So können auch diese Einheiten den Wechsel zur rechten Zeit durchführen.

In einer ersten Art der Umrüstung liegt vorzugsweise eine starke Abweichung eines ersten zu erzeugenden Produkts des ersten Bearbeitungsauftrags zu einem zweiten zu erzeugenden Produkts des direkt nachfolgenden Bearbeitungsauftrags vor. Beispielsweise unterscheiden sich die Stanzbilder und/oder Druckbilder voneinander oder ein Wechsel von Substrat 02 liegt vor. Vorzugsweise wenn das zu bearbeitende Substrat 02 gewechselt wird, also Format oder Art des Substrates 02 verändert wird, wird vorzugsweise bei einer Umrüstung der ersten Art der mindestens eine Anlegerstapel 104 zum Beenden des ersten Bearbeitungsauftrags leergefahren, beispielsweise wobei diese Substrate 02 ebenfalls auf deren Weg zur Auslage 1000 bearbeitet werden. Vorzugsweise werden diese Substrate 02 auf dem Auslagestapelträger 1003 abgelegt und mit den weiteren Produkten weiterverarbeitet.

Während des Umrüstens in der ersten Art der Umrüstung wird vorzugsweise die Bearbeitungsmaschine 01 gestoppt. Vorzugsweise wird ein Transport von Substrat 02 durch die Aggregate 100; 300; 600; 700; 900; 1000 der Bearbeitungsmaschine 01 gestoppt. Bevorzugt werden dabei die Bestandteile der Bearbeitungsmaschine 01, welche zum Transport eines Substrates 02 ausgebildet sind, während des Umrüstens in Stillstand versetzt. Als diese Bestandteile sind vorzugsweise zumindest die Formzylinder 602; 901 und/oder Gegendruckzylinder 608; 902 und/oder Substrat 02 antreibenden Mittel des mindestens einen Transportaggregats 700 anzusehen. Bevorzugt wird während der Umrüstung mindestens eine, bevorzugt bogenförmiges Substrat 02 transportierende, Transporteinrichtung 710 eines Transportaggregats 700, vorzugsweise mindestens zweier Transportaggregate 700, bevorzugt aller Transportaggregate 700, der Bearbeitungsmaschine 01 zum Transport von Substrat 02 angehalten. Beispielsweise wird der Transport von Substrat 02 durch die Bearbeitungsmaschine 01 für mindestens zwei Minuten, beispielsweise mindestens drei Minuten, unterbrochen. Die Dauer der Unterbrechung ist insbesondere von den durchzuführenden Umrüstprozessen abhängig.

Während des Umrüstens gemäß der ersten Art der Umrüstung wird vorzugsweise mindestens ein Aggregat 100; 300; 600; 700; 900; 1000 der Bearbeitungsmaschine 01 entriegelt, beispielsweise durch Lösen einer Verriegelung mindestens einer Sicherheitsabdeckung. Vorzugsweise ist somit zumindest dieses Aggregat 100; 300; 600; 700; 900; 1000 während der Umrüstung für einen Bediener zugänglich. Der direkt nachfolgende Bearbeitungsauftrag wird im Falle der ersten Art der Umrüstung vorzugsweise durch einen Bediener manuell gestartet. Somit wird sichergestellt, dass alle Umrüstprozesse erfolgreich beendet wurden und sich kein Bediener im Wirkbereich der Bearbeitungsmaschine 01 befindet, wodurch vorzugsweise die Sicherheit erhöht wird.

Bevorzugt werden während des Umrüstens gemäß der ersten Art der Umrüstung mindestens zwei, vorzugsweise eine Vielzahl an Umrüstprozessen durchgeführt, um die Konfiguration an den nachfolgenden Bearbeitungsauftrag anzupassen. Vorzugsweise werden die mindestens zwei durch die Maschinensteuerung gesteuerten Umrüstprozesse, insbesondere die mindestens zwei sich zeitlich überlappenden Umrüstprozesse, durchgeführt. Vorzugsweise wird dabei ein zu erzeugendes Stanzbild des mindestens einen Formgebungsaggregats 900 der aufeinanderfolgenden Bearbeitungsaufträge verändert. Zusätzlich oder alternativ wird bevorzugt mindestens ein Druckbild erzeugt durch mindestens ein Auftragaggregat 600 der Auftragaggregate 600 verändert und weiter bevorzugt mindestens ein weiterer Umrüstprozess an mindestens einem weiteren Auftragaggregat 600 der Auftragaggregate 600 durchgeführt. Dazu weist die Bearbeitungsmaschine 01 vorzugsweise die mindestens zwei, beispielsweise mindestens vier, Auftragaggregate 600 und weiter bevorzugt das mindestens eine Formgebungsaggregat 900 auf. Beispielsweise wird die Kontur eines Nutzens durch Veränderung des Stanzbildes geändert und/oder ein anderer Bearbeitungsprozess wie Stanzen, Prägen, Rillen, Perforieren für den nachfolgenden Bearbeitungsauftrag im Vergleich zu dem vorangehenden Bearbeitungsauftrag eingesetzt. Beispielsweise zusätzlich oder alternativ werden mindestens zwei Druckbilder aufgetragen durch mindestens zwei Auftragaggregate 600 verändert, bevorzugt durch Veränderung der jeweiligen Druckform und/oder der eingesetzten Farben. Vorzugsweise laufen in der ersten Art der Umrüstung mindestens zwei Umrüstprozesse an zueinander verschiedenen Aggregaten 100; 300; 600; 700; 900; 1000 der Bearbeitungsmaschine 01, insbesondere an mindestens zwei Bearbeitungsaggregaten 600; 900, zeitlich überlappend, vorzugsweise parallel zueinander, ab. Beispielsweise zusätzlich oder alternativ wird mindestens ein Wartungsprozess und/oder mindestens ein Reinigungsprozess in der ersten Art der Umrüstung durchgeführt.

In einer zweiten Art der Umrüstung liegt vorzugsweise lediglich eine geringe Abweichung eines ersten zu erzeugenden Produkts des ersten Bearbeitungsauftrags zu einem zweiten zu erzeugenden Produkt des direkt nachfolgenden Bearbeitungsauftrags vor. Vorzugsweise bleibt das zu bearbeitende Substrat 02 unverändert zu dem ersten Bearbeitungsauftrag, also weist das selbe Format und die selbe Art, beispielsweise Grammatur, auf. Bevorzugt weisen die beiden Produkte ein gleiches Stanzbild auf. Beispielsweise unterscheiden sich die beiden Produkte lediglich in dem Druckbild aufgetragen durch ein Auftragaggregat 600, beispielsweise einem veränderten Text und/oder mindestens einem hinzugefügten oder fehlenden Symbol einer Farbe, während die Druckbilder der weiteren Auftragaggregate 600 gleich sind. Dazu weist die Bearbeitungsmaschine 01 vorzugsweise die mindestens zwei, beispielsweise mindestens vier, Auftragaggregate 600, bevorzugt jeweils aufweisend einen Formzylinder 602, weiter bevorzugt jeweils ausgebildet als Flexo-Auftragaggregat 600, und weiter bevorzugt das mindestens eine Formgebungsaggregat 900 auf.

In der zweiten Art der Umrüstung werden bevorzugt die Bestandteile der Bearbeitungsmaschine 01, welche zum Transport eines, bevorzugt bogenförmigen, Substrates 02 ausgebildet sind, während des Umrüstens weiter angetrieben, beispielsweise in Umfangsrichtung rotiert. Als diese Bestandteile sind vorzugsweise zumindest die Formzylinder 602; 901 und/oder Gegendruckzylinder 608; 902 und/oder Substrat 02 antreibenden Mittel des mindestens einen Transportaggregats 700 anzusehen. Beispielsweise werden sie mit der Geschwindigkeit angetrieben, mit welcher ein Substrat 02 im Falle von dessen Anwesenheit während eines Bearbeitungsauftrags bearbeitet wird. Beispielsweise alternativ wird die Geschwindigkeit der Bestandteile gegenüber der regulären Bearbeitungsgeschwindigkeit reduziert, vorzugsweise wobei die Geschwindigkeit größer Null ist. Insbesondere wird während des Umrüstens mindestens eine, bevorzugt bogenförmiges Substrat 02 transportierende, Transporteinrichtung 710 eines Transportaggregats 700, vorzugsweise mindestens zweier Transportaggregate 700, bevorzugt aller Transportaggregate 700, der Bearbeitungsmaschine 01 zum Transport von Substrat 02 mit zumindest einem Geschwindigkeitsprofil angetrieben, wobei die Geschwindigkeit größer Null ist. Bevorzugt entspricht das Geschwindigkeitsprofil einer Antriebsgeschwindigkeit während der Abarbeitung eines Bearbeitungsauftrags. Das Geschwindigkeitsprofil umfasst dabei vorzugsweise eine gleichbleibende Geschwindigkeit sowie ein der Substratführung entsprechendes Abbremsen und/oder Beschleunigen, wobei die Geschwindigkeit vorzugsweise dauerhaft ungleich Null ist. Bevorzugt um die Sicherheit eines Bedieners aufgrund des andauernden Antreibens der Bestandteile zum Transport von Substrat 02 zu gewährleisten, sind vorzugsweise die Aggregate 100; 300; 600; 700; 900; 1000 der Bearbeitungsmaschine 01 während des Umrüstens gemäß der zweiten Art verriegelt, beispielsweise liegt eine aktivierte Verriegelung der Sicherheitsabdeckungen vor. Somit sind die Aggregate 100; 300; 600; 700; 900; 1000 vorzugsweise für den Bediener während des Umrüstens unzugänglich.

In der zweiten Art der Umrüstung wird vorzugsweise eine Zufuhr von, bevorzugt bogenförmigen, Substrat 02 zu den Bearbeitungsaggregaten 600; 900 blockiert, beispielsweise dadurch, dass das mindestens eine Beschleunigungsmittel des Substratzufuhraggregats 100, welches bevorzugt im aktivierten Zustand ein einzelnes Substrat 02 aus einem Speicherbereich 166 eines Substratzufuhraggregats 100 abzieht und das einzelne Substrat 02 auf eine Bearbeitungsgeschwindigkeit der Bearbeitungsaggregate 600; 900 beschleunigt, deaktiviert wird. Insbesondere ist das einzelne Substrat 02 ein unterstes Substrat 02 des Anlegerstapels 104. Bevorzugt während die Bestandteile der Bearbeitungsmaschine 01, welche zum Transport eines Substrates 02 ausgebildet sind, weiter angetrieben werden, wird vorzugsweise die Zufuhr von Substrat 02 für lediglich 0 bis N Substrate 02 blockiert, wobei N vorzugsweise eine natürliche Zahl kleiner gleich 25, bevorzugt kleiner gleich 10, weiter bevorzugt kleiner gleich 5, weiter bevorzugt kleiner gleich drei, weiter bevorzugt kleiner gleich zwei ist. Die natürliche Zahl N beschreibt hierbei in anderen Worten eine Zahl zwischen 1 und vorzugsweise 25, mit deren Hilfe Objekte gezählt werden können. Bevorzugt wird die Zufuhr von Substrat 02 für mindestens 1 bis maximal 25, besonders bevorzugt mindestens zwei und/oder bis maximal 15, noch weiter bevorzugt bis maximal 5, noch weiter bevorzugt maximal 3, noch weiter bevorzugt maximal 2, Substrate 02 blockiert. In besonders bevorzugter Ausführung wird die Substratzufuhr für ein bis drei Substrate 02, bevorzugt zwei bis drei Substrate 02, blockiert. Es wird also vorzugsweise keine oder lediglich eine kleine Lücke im Substratstrom erzeugt. In anderen Worten wird bei vorliegendem Blockieren eine Lücke im Substratstrom erzeugt, die bevorzugt kleiner gleich 25 Substrate, besonders bevorzugt kleiner gleich 5 Substrate, ist. Vorzugsweise wird die Förderung der Substrate 02 von dem Stapel des vorgelagerten Stapelbereichs zu dem Stapel des Speicherbereichs 166 während einer Umrüstung der zweiten Art bevorzugt unverändert aufrechterhalten.

Vorzugsweise wird bei der Umrüstung der zweiten Art der erste Bearbeitungsauftrag beendet, sobald die Anzahl der zu erzielenden Produkte des ersten Bearbeitungsauftrags erreicht ist. Insbesondere da das zu bearbeitende Substrat 02 für beide Bearbeitungsaufträge, also insbesondere für den ersten und zweiten Bearbeitungsauftrag, unverändert ist, entfällt bei einer Umrüstung der zweiten Art ein Leerfahren der Substrate 02 des mindestens einen Anlegerstapels 104.

Während des Umrüstens gemäß der zweiten Art der Umrüstung wird bevorzugt der mindestens eine Formzylinder 901 des mindestens einen Formgebungsaggregats 900 mit einer Geschwindigkeit größer Null, vorzugsweise der Bearbeitungsgeschwindigkeit, rotierend angetrieben. Bevorzugt bleibt dann während des Umrüstens gemäß der zweiten Art der Umrüstung ein zu erzeugendes Stanzbild des mindestens einen Formgebungsaggregats 900 der aufeinanderfolgenden Bearbeitungsaufträge unverändert. Bevorzugt wird kein Umrüstprozess an dem mindestens einen Formgebungsaggregat 900 durchgeführt. Vorzugsweise verbleibt der Formzylinder 901 des mindestens einen Formgebungsaggregats 900 somit während des Umrüstens der zweiten Art in dessen Stanzposition. Alternativ wird mindestens ein Umrüstprozess an dem mindestens einen Formgebungsaggregat 900 durchgeführt.

Zusätzlich oder alternativ bleibt bevorzugt mindestens ein Druckbild erzeugt durch mindestens ein Auftragaggregat 600 der Auftragaggregate 600 der aufeinanderfolgenden Bearbeitungsaufträge unverändert. Vorzugsweise wird kein Wartungsprozess und/oder Reinigungsprozess des mindestens einen Auftragaggregats 600 durchgeführt.

Bevorzugt zusätzlich oder alternativ wird während des Umrüstens der zweiten Art der Umrüstung bevorzugt mindestens ein Auftragaggregat 600 in dessen Konfiguration verändert. Somit wird bevorzugt mindestens ein Umrüstprozess an mindestens einem Auftragaggregat 600 der Auftragaggregate 600 durchgeführt. Bevorzugt wird mindestens eine Druckform des mindestens einen Auftragaggregats 600 gewechselt. Bevorzugt zusätzlich oder alternativ wird die Anzahl an Auftragaggregaten 600 durch das Anstellen der mindestens einen Rasterwalze 603 an den Formzylinder 602 von zumindest einem Auftragaggregat 600, und vorzugsweise somit dem Übertrag von Auftragfluid, erhöht.

Beispielsweise alternativ wird die Anzahl der Auftragaggregate 600 durch Abstellen mindestens einer Rasterwalze 603 erniedrigt. Bei den bevorzugt mindestens zwei Auftragaggregaten 600 tritt somit in besonders bevorzugter Ausführung der Umrüstung der zweiten Art der Zustand ein, dass mindestens ein Druckbild erzeugt durch mindestens ein Auftragaggregat 600 der Auftragaggregate 600 der aufeinanderfolgenden Bearbeitungsaufträge unverändert bleibt und mindestens ein weiteres Auftragaggregat 600, besonders bevorzugt lediglich ein Auftragaggregat 600 aller Auftragaggregate 600, in dessen Konfiguration verändert wird.

Beispielsweise, bevorzugt zusätzlich zu der Veränderung des mindestens einen Auftragaggregats 600, wird während des Umrüstens der zweiten Art der Umrüstung ein Stapelwechsel von Substrat 02 durchgeführt, vorzugsweise in dem mindestens einen Substratzufuhraggregat 100 und/oder in dem mindestens einen Auslageaggregat 1000.

Der direkt nachfolgende Bearbeitungsauftrag startet vorzugsweise beim Umrüsten der zweiten Art der Umrüstung durch Lösen der Blockierung der Substratzufuhr, insbesondere durch Aktivieren des mindestens einen deaktivierten Beschleunigungsmittels. Da die Bearbeitungsmaschine 01 bereits mit der Bearbeitungsgeschwindigkeit betrieben wird, wird ein rascher Weiterbetrieb der Bearbeitungsmaschine 01 gewährleistet. In den Einstellungen der Maschinensteuerung kann der Bediener vorzugsweise wählen, ob die Bearbeitungsmaschine 01 mit dem nachfolgenden Bearbeitungsauftrag nach dessen Start direkt weiterproduzieren soll oder ob diese nach der Herstellung von mindestens einem Musterbogen den Einzug erneut unterbrechen soll, damit der Bediener die Qualität des mindestens einen Musterbogens prüfen kann. Vorteilhafterweise ist die Unterbrechung aufgrund des Umrüstens in der zweiten Art der Umrüstung kürzer als bei einer Umrüstung der ersten Art. Dadurch wird vorteilhafterweise die Stillstandzeit der Bearbeitungsmaschine 01 minimiert.

### Bezugszeichenliste

- 01: Bearbeitungsmaschine, Druckmaschine, Formgebungsmaschine, Stanzmaschine, Flexo-Druckmaschine, Bogenbearbeitungsmaschine, Bogendruckmaschine, Bogenformgebungsmaschine, Bogenstanzmaschine, Wellpappbogenbearbeitungsmaschine, Wellpappbogendruckmaschine
- 02: Substrat, Bogen, Bedruckstoff, Wellpappe, Wellpappbogen
- 21: Speichereinrichtung
- 22: Speicheraufnahme
- 23: Umlagereinrichtung
- 100: Aggregat, Modul, Substratzufuhreinrichtung, Substratzufuhraggregat, Substratzufuhrmodul, Bogenanleger, Bogenanlegeraggregat, Bogenanlegermodul
- 104: Anlegerstapel
- 164: Bogenankunftssensor
- 165: -
- 166: Speicherbereich
- 300: Aggregat, Modul, Anlageeinrichtung, Anlageaggregat, Anlagemodul
- 506: Trocknungsvorrichtung
- 600: Aggregat, Bearbeitungsaggregat, Auftragaggregat, Modul, Auftragmodul, Druckaggregat, Druckmodul, Flexo-Auftragaggregat, Flexo-Druckaggregat, Flexo-Auftragmodul, Flexo-Druckmodul
- 601: -
- 602: Formzylinder, Zylinder
- 603: Versorgungswalze, Rasterwalze, Zylinder
- 604: Kammerrakel
- 607: Gestell
- 608: Gegendruckzylinder, Zylinder
- 609: Bearbeitungsstelle, Auftragsstelle
- 614: Auftragwerk, Druckwerk
- 622: Bogenankunftssensor
- 623: Ausschiebevorrichtung
- 624: Kontaktfläche
- 625: -
- 626: Stellmittel, Stellzylinder
- 627: Gleitschiene
- 628: Führung, Führungsschiene
- 629: Fluidquelle
- 630: -
- 631: Leitung
- 632: Lanze
- 633: Führung
- 700: Aggregat, Modul, Transportaggregat, Transportmodul, Transportmittel, Saugtransportmittel, oberes
- 710: Transporteinrichtung, Saugkasten
- 722: Bogenankunftssensor
- 726: Sensor, Druckbildkontrollsystem
- 727: -
- 728: Sensor, Passerkontrollsystem
- 900: Aggregat, Modul, Bearbeitungsaggregat, Formgebungseinrichtung, Formgebungsaggregat, Stanzaggregat, Formgebungsmodul, Stanzmodul, Stanzeinrichtung, Rotationsstanzeinrichtung
- 901: Formzylinder, Stanzformzylinder, Stanzzylinder, Zylinder
- 902: Gegenstanzzylinder, Gegendruckzylinder, Zylinder
- 903: Stanzzylinder, weiterer, Zylinder
- 904: Transportmittel, Separationstransportmittel
- 905: Separationseinrichtung, Rütteleinrichtung
- 909: Bearbeitungsstelle, Formgebungsstelle, Stanzstelle, Transportmittel, Formgebungstransportmittel, Stanztransportmittel
- 910: -
- 911: Schleifzylinder, Schleifwalze
- 914: Formgebungswerk, Stanzwerk
- 915: -
- 916: Sensor, Stanzkontrollsystem
- 922: Bogenankunftssensor
- 933: Antrieb
- 950: Vorrichtung zum Wechseln
- 956: Transportelement, vertikal, erstes, unteres
- 957: Führungsschiene, Linearführung
- 958: Führung, vertikal, Linearführung
- 959: Führung, horizontal, Linearführung
- 960: Transportelement, vertikal, zweites, oberes
- 964: Stanzform, Halbschale
- 965: -
- 966: Absaugeinrichtung
- 972: Transporteinrichtung, Träger, Schlitten
- 992: Kontaktfläche
- 1000: Aggregat, Modul, Substratabgabeeinrichtung, Auslage, Bogenauslage, Auslageaggregat, Auslagemodul
- 1001: Bogenweiche
- 1002: Ausleitauslage, Ausschleusestapel
- 1003: Auslagestapelträger
- A: Richtung, Querrichtung, horizontal, axiale Richtung
- T: Richtung, Transportrichtung
- V: Richtung, vertikal
- B: Richtung, Bewegungsrichtung
- M1: Antrieb Gegendruckzylinder
- M2: Antrieb Formzylinder, Druckzylinder
- M3: Antrieb Versorgungswalze, Rasterwalze
- M4: Antrieb Lanze

## Patentansprüche

1. Verfahren zum Wechsel eines Bearbeitungsauftrags ausgeführt an einer Bearbeitungsmaschine (01), wobei die Bearbeitungsmaschine (01) mehrere Aggregate (100; 300; 600; 700; 900; 1000) aufweist, wobei die Bearbeitungsmaschine (01) mindestens ein als einen Formzylinder (602) aufweisendes Auftragaggregat (600) ausgebildetes Bearbeitungsaggregat (600) und mindestens ein als Formgebungsaggregat (900) ausgebildetes Bearbeitungsaggregat (900) aufweist, wobei das mindestens eine Formgebungsaggregat (900) als Rotationsstanzeinrichtung (900) ausgebildet ist, wobei das Verfahren die folgenden Schritte umfasst:
- Abarbeiten eines ersten Bearbeitungsauftrags durch die Bearbeitungsmaschine (01), während dessen mindestens ein Substrat (02) mit den mindestens zwei Bearbeitungsaggregaten (600; 900) der Bearbeitungsmaschine (01) bearbeitet wird;
- automatisiertes Beenden des ersten Bearbeitungsauftrags und automatisierter Beginn eines Umrüstens;
- Abarbeiten des Umrüstens der Bearbeitungsmaschine (01) zur Anpassung mindestens eines Aggregats (100; 300; 600; 700; 900; 1000) der Bearbeitungsmaschine (01) an eine Konfiguration eines direkt nachfolgenden Bearbeitungsauftrags, wobei vor dem Umrüsten die Konfiguration der Bearbeitungsmaschine (01) für den mindestens einen nachfolgenden Bearbeitungsauftrag in einer Maschinensteuerung geladen und/oder eingestellt und/oder gespeichert wird, wobei während des Umrüstens mindestens ein Umrüstprozess des mindestens einen Formgebungsaggregats (900) zeitlich überlappend zu mindestens einem weiteren Umrüstprozess der Bearbeitungsmaschine (01) abläuft und wobei die Maschinensteuerung die mindestens zwei zeitlich überlappend ablaufenden Umrüstprozesse steuert;
- Starten des direkt nachfolgenden Bearbeitungsauftrags, während dessen mindestens ein Substrat (02) mit den mindestens zwei Bearbeitungsaggregaten (600; 900) bearbeitet wird.

2. Verfahren nach Anspruch 1, **dadurch gekennzeichnet, dass** während des Umrüstens automatisiert mindestens ein Formzylinder (901) und/oder mindestens ein Gegenstanzzylinder (902) des mindestens einen Formgebungsaggregats (900) von einer Bearbeitungsstelle (909) des mindestens einen Formgebungsaggregats (900) entfernt wird und/oder dass während des Umrüstens automatisiert der Abstand zwischen einem Formzylinder (901) und einem Gegenstanzzylinder (902) ) des mindestens einen Formgebungsaggregats (900) verändert wird.

3. Verfahren nach Anspruch 1 oder 2, **dadurch gekennzeichnet, dass** während des Umrüstens automatisiert mindestens ein Formzylinder (901) des mindestens einen Formgebungsaggregats (900) gegen mindestens einen weiteren Zylinder (903) durch mindestens eine Vorrichtung zum Wechseln (950) des mindestens einen Formgebungsaggregats (900) gewechselt wird.

4. Verfahren nach Anspruch 3, **dadurch gekennzeichnet, dass** zum Wechsel des Formzylinders (901) dieser von einer Bearbeitungsposition in eine Wartungsposition verstellt wird, während der mindestens eine weitere Zylinder (903) von einer Wartungsposition des weiteren Zylinders (903) in die Bearbeitungsposition verstellt wird und/oder dass zum Wechsel des Formzylinders (901) der Formzylinder (901) oder der weitere Zylinder (903) in einer Warteposition zum aneinander Vorbeiführen des Formzylinders (901) und des weiteren Zylinders (903) positioniert wird.

5. Verfahren nach Anspruch 1 oder 2 oder 3 oder 4, **dadurch gekennzeichnet, dass** während des Umrüstens mindestens ein Werkzeug mindestens eines Formzylinders (901) des mindestens einen Formgebungsaggregats (900) gewechselt wird.

6. Verfahren nach Anspruch 1 oder 2 oder 3 oder 4 oder 5, **dadurch gekennzeichnet, dass** während mindestens eines Umrüstprozesses mindestens einer Substratzufuhreinrichtung (100) der Bearbeitungsmaschine (01) eine Anpassung an ein Format eines zu bearbeitenden Substrats (02) durchgeführt wird und/oder dass während mindestens eines Umrüstprozesses mindestens eines als Auslage (1000) ausgebildetem Aggregat (1000) der Bearbeitungsmaschine (01) eine Anpassung an ein Format eines zu bearbeitenden Substrats (02) durchgeführt wird und/oder dass zum Beenden des ersten Bearbeitungsauftrags mindestens ein Anlegerstapel (104) leergefahren wird.

7. Verfahren nach Anspruch 1 oder 2 oder 3 oder 4 oder 5 oder 6, **dadurch gekennzeichnet, dass** ein Wechsel mindestens einer Rasterwalze (603) des mindestens einen Auftragaggregats (600) und/oder ein Wechsel mindestens einer Druckform des mindestens einen Auftragaggregats (600) zeitlich überlappend zu mindestens einem Umrüstprozess des mindestens einen Formgebungsaggregats (900) erfolgt.

8. Verfahren nach Anspruch 1 oder 2 oder 3 oder 4 oder 5 oder 6 oder 7, **dadurch gekennzeichnet, dass** das mindestens eine Auftragaggregat (600) als Flexo-Auftragaggregat (600) ausgebildet ist und/oder dass die Bearbeitungsaggregate (600; 900) bogenförmiges Substrat (02) bearbeitend ausgebildet sind und/oder dass die Bearbeitungsmaschine (01) als Bogenbearbeitungsmaschine (01) ausgebildet ist und/oder dass ein durch das jeweilige Aggregat (100; 300; 600; 700; 900; 1000) festgelegte Abschnitt eines für einen Transport von Substrat (02) vorgesehenen Transportwegs einen minimalen Krümmungsradius aufweist, der zumindest 2 Meter beträgt.

9. Verfahren nach Anspruch 1 oder 2 oder 3 oder 4 oder 5 oder 6 oder 7 oder 8, **dadurch gekennzeichnet, dass** an dem mindestens einen Auftragaggregat (600) mindestens ein Umrüstprozess der folgenden Umrüstprozesse durchgeführt wird: Reinigung eines Auftragwerks (614) und/oder Änderung eines Abstands zwischen einem Formzylinder (602) und einem Gegendruckzylinder (608) des mindestens einen Auftragaggregats (600) und/oder Wechsel eines eingesetzten Auftragfluids und/oder Anpassung einer Auftragsmenge eines eingesetzten Auftragfluids und/oder Wechsel eines Formzylinders (602) des mindestens einen Auftragaggregats (600) und/oder Wechsel mindestens einer Druckform des mindestens einen Auftragaggregats (600) und/oder Wechsel einer Rasterwalze (603) des mindestens einen Auftragaggregats (600).

10. Verfahren nach Anspruch 1 oder 2 oder 3 oder 4 oder 5 oder 6 oder 7 oder 8 oder 9, **dadurch gekennzeichnet, dass** die Anzahl an ein Substrat (02) bearbeitender Auftragaggregate (600) des ersten Bearbeitungsprozesses zu der Anzahl an ein Substrat (02) bearbeitender Auftragaggregate (600) des mindestens einen nachfolgenden Bearbeitungsprozesses verschieden ist.

11. Verfahren nach Anspruch 10, **dadurch gekennzeichnet, dass** gemäß der Anzahl des direkt nachfolgenden Bearbeitungsauftrags mindestens ein Auftragaggregat (600) zur Durchführung einer Bearbeitung von Substrat (02) durch ein Anstellen einer Rasterwalze (603) an einen Formzylinder (602) oder zum Transport von Substrat (02) ohne zeitgleiche Bearbeitung des Substrats (02) durch ein Abstellen der Rasterwalze (603) von dem Formzylinder (602) angepasst wird oder dass gemäß der Anzahl des direkt nachfolgenden Bearbeitungsauftrags mindestens ein Auftragaggregat (600) in den Transportweg von Substrat (02) integriert oder aus diesem entfernt wird.

12. Verfahren nach Anspruch 1 oder 2 oder 3 oder 4 oder 5 oder 6 oder 7 oder 8 oder 9 oder 10 oder 11, **dadurch gekennzeichnet, dass** mindestens ein Umrüstprozess des mindestens einen Auftragaggregats (600) automatisiert abläuft und/oder dass zumindest die zueinander zeitlich überlappend ablaufenden Umrüstprozesse während des Umrüstens automatisiert ablaufen und/oder dass mindestens ein Umrüstprozess des mindestens einen Auftragaggregats (600) zeitlich überlappend zu dem mindestens einen Umrüstprozess des mindestens einen Formgebungsaggregats (900) automatisiert abläuft.

13. Verfahren nach Anspruch 1 oder 2 oder 3 oder 4 oder 5 oder 6 oder 7 oder 8 oder 9 oder 10 oder 11 oder 12, **dadurch gekennzeichnet, dass** in der Maschinensteuerung Daten bezüglich eines zu bearbeitenden Substrates (02) und/oder Daten bezüglich eines zu erzielenden Produktes des mindestens einen nachfolgenden Bearbeitungsauftrags hinterlegt werden oder hinterlegt sind und die Maschinensteuerung durch Verarbeitung dieser Daten unter Berücksichtigung weiterer durch die Maschinensteuerung bereitgestellter maschinenbezogener Daten die Konfiguration der Bearbeitungsmaschine (01) für den mindestens einen nachfolgenden Bearbeitungsauftrag sowie die dazu durchzuführenden Umrüstprozesse vorgibt, und/oder dass die Maschinensteuerung mindestens einen Datensatz umfassend mindestens eine Konfiguration des nachfolgenden Bearbeitungsauftrags sowie die dazu durchzuführenden Umrüstprozesse vorschlägt, welcher durch einen Bediener anpassbar oder auswählbar ist.

14. Verfahren nach Anspruch 1 oder 2 oder 3 oder 4 oder 5 oder 6 oder 7 oder 8 oder 9 oder 10 oder 11 oder 12 oder 13, **dadurch gekennzeichnet, dass** während des Umrüstens mindestens eine Einstellung mindestens einer Trocknungsvorrichtung (506) oder mindestens eines Trocknungsaggregats durch die Maschinensteuerung angepasst wird und/oder dass während der Umrüstung mindestens eine Transporteinrichtung (710) eines Transportaggregats (700) der Bearbeitungsmaschine (01) zum Transport von Substrat (02) angehalten wird und/oder dass während des Umrüstens mindestens ein Aggregat (100; 300; 600; 700; 900; 1000) der Bearbeitungsmaschine (01) entriegelt wird.

15. Verfahren nach Anspruch 1 oder 2 oder 3 oder 4 oder 5 oder 6 oder 7 oder 8 oder 9 oder 10 oder 11 oder 12 oder 13 oder 14, **dadurch gekennzeichnet, dass** sich die Stanzbilder und/oder Druckbilder der Bearbeitungsaufträge voneinander unterscheiden oder ein Wechsel von Substrat (02) vorliegt, und/oder dass die Bearbeitungsmaschine (01) mindestens zwei als einen Formzylinder (602) aufweisende Auftragaggregate (600) ausgebildete Bearbeitungsaggregate (600) aufweist und mindestens zwei Druckbilder aufgetragen durch die mindestens zwei Auftragaggregate (600) verändert werden.

## Claims

1. Method for changing a processing application performed on a processing machine (01), wherein the processing machine (01) comprises a plurality of units (100; 300; 600; 700; 900; 1000), wherein the processing machine (01) comprises at least one processing unit (600) designed as an application unit (600) having a form cylinder (602) and comprises at least one processing unit (900) designed as a shaping unit (900), wherein the at least one shaping unit (900) is designed as a rotary punching device (900), wherein the method comprises the following steps:
- carrying out a first processing application by means of the processing machine (01), during which at least one substrate (02) is processed using the at least two processing units (600; 900) of the processing machine (01);
- automatically terminating the first processing application and automatically starting a changeover;
- carrying out the changeover of the processing machine (01) to adapt at least one unit (100; 300; 600; 700; 900; 1000) of the processing machine (01) to a configuration of a directly subsequent processing application, wherein, prior to the changeover, the configuration of the processing machine (01) for the at least one subsequent processing application is loaded and/or set and/or saved in a machine controller, wherein, during the changeover, at least one changeover process of the at least one shaping unit (900) overlaps in time with at least one further changeover process of the processing machine (01), and wherein the machine controller controls the at least two changeover processes that overlap in time;
- starting the directly subsequent processing application, during which at least one substrate (02) is processed using at least two processing units (600; 900).

2. Method according to claim 1, **characterized in that** during the changeover, at least one form cylinder (901) and/or at least one counter-punching cylinder (902) of the at least one shaping unit (900) is automatically removed from a processing point (909) of the at least one shaping unit (900) and/or **in that** during the changeover, the distance between a form cylinder (901) and a counter-punching cylinder (902) of the at least one shaping unit (900) is automatically changed.

3. Method according to claim 1 or 2, **characterized in that** during the changeover, at least one form cylinder (901) of the at least one shaping unit (900) is automatically changed to at least one further cylinder (903) by at least one changing apparatus (950) of the at least one shaping unit (900).

4. Method according to claim 3, **characterized in that** in order to change the form cylinder (901), it is moved from a processing position to a maintenance position, while the at least one further cylinder (903) is moved from a maintenance position of the further cylinder (903) to the processing position and/or **in that** in order to change the form cylinder (901), the form cylinder (901) or the further cylinder (903) is positioned in a waiting position for the form cylinder (901) and the further cylinder (903) to pass one another.

5. Method according to claim 1 or 2 or 3 or 4, **characterized in that** during the changeover, at least one tool of at least one form cylinder (901) of the at least one shaping unit (900) is changed.

6. Method according to claim 1 or 2 or 3 or 4 or 5, **characterized in that** during at least one changeover process, at least one substrate feed device (100) of the processing machine (01) is adapted to a format of a substrate (02) to be processed and/or **in that** during at least one changeover process, at least one unit (1000) of the processing machine (01) designed as a delivery unit (1000) is adapted to a format of a substrate (02) to be processed and/or **in that** in order to complete the first processing application, at least one feeder stack (104) must be emptied.

7. Method according to claim 1 or 2 or 3 or 4 or 5 or 6, **characterized in that** a change of at least one anilox roller (603) of the at least one application unit (600) and/or a change of at least one printing form of the at least one application unit (600) takes place overlapping in time with at least one changeover process of the at least one shaping unit (900).

8. Method according to claim 1 or 2 or 3 or 4 or 5 or 6 or 7, **characterized in that** the at least one application unit (600) is designed as a flexo application unit (600) and/or **in that** the processing units (600; 900) are designed to process a sheet-like substrate (02) and/or **in that** the processing machine (01) is designed as a sheet processing machine (01) and/or **in that** a portion, defined by the particular unit (100; 300; 600; 700; 900; 1000), of a transport path provided for the transport of the substrate (02) has a minimum radius of curvature of at least 2 meters.

9. Method according to claim 1 or 2 or 3 or 4 or 5 or 6 or 7 or 8, **characterized in that** at least one changeover process of the following changeover processes is performed on the at least one application unit (600): cleaning an application station (614) and/or changing a distance between a form cylinder (602) and an impression cylinder (608) of the at least one application unit (600) and/or changing an application fluid used and/or adapting an application quantity of an application fluid used and/or changing a form cylinder (602) of the at least one application unit (600) and/or changing at least one printing form of the at least one application unit (600) and/or changing an anilox roller (603) of the at least one application unit (600).

10. Method according to claim 1 or 2 or 3 or 4 or 5 or 6 or 7 or 8 or 9, **characterized in that** the number of application units (600) processing a substrate (02) in the first processing process differs from the number of application units (600) processing a substrate (02) in at least one subsequent processing process.

11. Method according to claim 10, **characterized in that** in accordance with the number of directly subsequent processing applications, at least one processing unit (600) is adapted to perform processing of a substrate (02) by attaching an anilox roller (603) to a form cylinder (602) or to transport the substrate (02) without simultaneous processing of the substrate (02) by detaching the anilox roller (603) from the form cylinder (602) or **in that** in accordance with the number of directly subsequent processing orders, at least one application unit (600) is integrated into or removed from the transport path of the substrate (02).

12. Method according to claim 1 or 2 or 3 or 4 or 5 or 6 or 7 or 8 or 9 or 10 or 11, **characterized in that** at least one changeover process of the at least one application unit (600) takes place automatically and/or **in that** at least the changeover processes that overlap in time take place automatically during the changeover and/or **in that** at least one changeover process of the at least one application unit (600) takes place automatically overlapping in time with the at least one changeover process of the at least one forming unit (900).

13. Method according to claim 1 or 2 or 3 or 4 or 5 or 6 or 7 or 8 or 9 or 10 or 11 or 12, **characterized in that** data relating to a substrate to be processed (02) and/or data relating to a product to be obtained for at least one subsequent processing application are stored in the machine controller, and the machine controller, by processing these data while taking into account further machine-related data provided by the machine controller, specifies the configuration of the processing machine (01) for the at least one subsequent processing application as well as the changeover processes to be carried out for this purpose, and/or **in that** the machine controller proposes at least one data set comprising at least one configuration of the subsequent processing application as well as the changeover processes to be performed for this purpose, which data set can be adapted or selected by an operator.

14. Method according to claim 1 or 2 or 3 or 4 or 5 or 6 or 7 or 8 or 9 or 10 or 11 or 12 or 13, **characterized in that** during the changeover, at least one setting of at least one drying apparatus (506) or at least one drying unit is adjusted by the machine controller and/or **in that** during the changeover, at least one transport device (710) of a transport unit (700) of the processing machine (01) is stopped for transporting a substrate (02) and/or **in that** during the changeover, at least one unit (100; 300; 600; 700; 900; 1000) of the processing machine (01) is unlocked.

15. Method according to claim 1 or 2 or 3 or 4 or 5 or 6 or 7 or 8 or 9 or 10 or 11 or 12 or 13 or 14, **characterized in that** the punching images and/or printing images of the processing applications differ from one another or there is a change of the substrate (02), and/or **in that** the processing machine (01) comprises at least two processing units (600) designed as application units (600) having a form cylinder (602) and at least two printing images applied by the at least two application units (600) are changed.

## Revendications

1. Procédé permettant de changer un ordre d'usinage exécuté sur une machine d'usinage (01), dans lequel la machine d'usinage (01) présente plusieurs groupes (100 ; 300 ; 600 ; 700 ; 900 ; 1000), dans lequel la machine d'usinage (01) présente au moins un groupe d'usinage (600) réalisé sous forme de groupe d'application (600) présentant un cylindre de moulage (602) et au moins un groupe d'usinage (900) réalisé sous forme de groupe de formage (900), dans lequel l'au moins un groupe de formage (900) est réalisé sous forme d'appareil d'estampage rotatif (900), dans lequel le procédé comprend les étapes suivantes :
- exécution d'un premier ordre d'usinage par la machine d'usinage (01), pendant lequel au moins un substrat (02) est usiné par les au moins deux groupes d'usinage (600 ; 900) de la machine d'usinage (01) ;
- fin automatisée du premier ordre d'usinage et début automatisé d'un changement d'équipement ;
- exécution du changement d'équipement de la machine d'usinage (01) pour adapter au moins un groupe (100 ; 300 ; 600 ; 700 ; 900 ; 1000) de la machine d'usinage (01) à une configuration d'un ordre d'usinage directement suivant, dans lequel la configuration de la machine d'usinage (01) pour l'au moins un ordre d'usinage suivant est chargée et/ou réglée et/ou mémorisée dans une commande de machine avant le changement d'équipement, dans lequel au moins un processus de changement d'équipement de l'au moins un groupe de formage (900) se déroule pendant le changement d'équipement en chevauchant dans le temps au moins un autre processus de changement d'équipement de la machine d'usinage (01) et dans lequel la commande de machine commande les au moins deux processus de changement d'équipement qui se déroulent en se chevauchant dans le temps ;
- lancement de l'ordre d'usinage directement suivant, pendant lequel au moins un substrat (02) est usiné avec les au moins deux groupes d'usinage (600 ; 900).

2. Procédé selon la revendication 1, **caractérisé en ce que**, pendant le changement d'équipement, au moins un cylindre de moulage (901) et/ou au moins un cylindre de contre-estampage (902) de l'au moins un groupe de formage (900) sont retirés de manière automatisée d'un emplacement d'usinage (909) de l'au moins un groupe de formage (900) et/ou **en ce que**, pendant le changement d'équipement, la distance entre un cylindre de moulage (901) et un cylindre de contre-estampage (902) de l'au moins un groupe de formage (900) est modifiée de manière automatisée.

3. Procédé selon la revendication 1 ou 2, **caractérisé en ce que**, pendant le changement d'équipement, au moins un cylindre de moulage (901) de l'au moins un groupe de formage (900) est changé de manière automatisée contre au moins un autre cylindre (903) par au moins un dispositif pour le changement (950) de l'au moins un groupe de formage (900).

4. Procédé selon la revendication 3, **caractérisé en ce que**, pour le changement du cylindre de moulage (901), celui-ci est déplacé d'une position d'usinage à une position d'entretien, tandis que l'au moins un autre cylindre (903) est déplacé d'une position d'entretien de l'autre cylindre (903) à la position d'usinage, et/ou **en ce que**, pour le changement du cylindre de moulage (901), le cylindre de moulage (901) ou l'autre cylindre (903) est positionné dans une position d'attente pour faire passer l'un devant l'autre le cylindre de moulage (901) et l'autre cylindre (903).

5. Procédé selon la revendication 1 ou 2 ou 3 ou 4, **caractérisé en ce que**, pendant le changement d'équipement, au moins un outil d'au moins un cylindre de moulage (901) de l'au moins un groupe de formage (900) est changé.

6. Procédé selon la revendication 1 ou 2 ou 3 ou 4 ou 5, **caractérisé en ce que**, pendant au moins un processus de changement d'équipement d'au moins un appareil d'alimentation en substrat (100) de la machine d'usinage (01), une adaptation à un format d'un substrat (02) à usiner est effectuée, et/ou **en ce que**, pendant au moins un processus de changement d'équipement d'au moins un groupe (1000) de la machine d'usinage (01) réalisé comme une sortie (1000), une adaptation à un format d'un substrat (02) à usiner est effectuée, et/ou **en ce que**, pour terminer le premier ordre d'usinage, au moins un empilement de margeurs (104) doit être vidée.

7. Procédé selon la revendication 1 ou 2 ou 3 ou 4 ou 5 ou 6, **caractérisé en ce qu'**un changement d'au moins un rouleau tramé (603) de l'au moins un groupe d'application (600) et/ou un changement d'au moins une forme d'impression de l'au moins un groupe d'application (600) sont effectués en chevauchant dans le temps au moins un processus de changement d'équipement de l'au moins un groupe de formage (900).

8. Procédé selon la revendication 1 ou 2 ou 3 ou 4 ou 5 ou 6 ou 7, **caractérisé en ce que** l'au moins un groupe d'application (600) est réalisé comme un groupe d'application de flexographie (600) et/ou **en ce que** les groupes d'usinage (600 ; 900) sont réalisés pour usiner un substrat (02) en forme de feuille et/ou **en ce que** la machine d'usinage (01) est réalisée comme une machine d'usinage de feuilles (01) et/ou **en ce qu'**une section, définie par le groupe (100 ; 300 ; 600 ; 700 ; 900 ; 1000) respectif, d'un trajet de transport prévu pour un transport de substrat (02) présente un rayon de courbure minimal qui est d'au moins deux mètres.

9. Procédé selon la revendication 1 ou 2 ou 3 ou 4 ou 5 ou 6 ou 7 ou 8, **caractérisé en ce qu'**au moins un processus de changement d'équipement des processus de changement d'équipement suivants est effectué sur l'au moins un groupe d'application (600) : nettoyage d'un mécanisme d'application (614) et/ou modification d'une distance entre un cylindre de moulage (602) et un cylindre de contre-pression (608) de l'au moins un groupe d'application (600) et/ou changement d'un fluide d'application utilisé et/ou adaptation d'une quantité d'application d'un fluide d'application utilisé et/ou changement d'un cylindre de moulage (602) de l'au moins un groupe d'application (600) et/ou changement d'au moins une forme d'impression de l'au moins un groupe d'application (600) et/ou changement d'un rouleau tramé (603) de l'au moins un groupe d'application (600).

10. Procédé selon la revendication 1 ou 2 ou 3 ou 4 ou 5 ou 6 ou 7 ou 8 ou 9, **caractérisé en ce que** le nombre de groupes d'application (600) usinant un substrat (02) du premier processus d'usinage est différent du nombre de groupes d'application (600) usinant un substrat (02) de l'au moins un processus d'usinage suivant.

11. Procédé selon la revendication 10, **caractérisé en ce que**, conformément au nombre d'ordres d'usinage directement suivants, au moins un groupe d'application (600) est adapté pour effectuer un usinage du substrat (02) en plaçant un rouleau tramé (603) contre un cylindre de moulage (602) ou pour transporter le substrat (02) sans usinage simultané du substrat (02) en éloignant le rouleau tramé (603) du cylindre de moulage (602), ou **en ce que**, conformément au nombre d'ordres d'usinage directement suivants, au moins un groupe d'application (600) est intégré dans le trajet de transport du substrat (02) ou retiré de celui-ci.

12. Procédé selon la revendication 1 ou 2 ou 3 ou 4 ou 5 ou 6 ou 7 ou 8 ou 9 ou 10 ou 11, **caractérisé en ce qu'**au moins un processus de changement d'équipement de l'au moins un groupe d'application (600) se déroule de manière automatisée et/ou **en ce qu'**au moins les processus de changement d'équipement se déroulant en se chevauchant dans le temps les uns les autres se déroulent de manière automatisée pendant le changement d'équipement et/ou **en ce qu'**au moins un processus de changement d'équipement de l'au moins un groupe d'application (600) se déroule de manière automatisée en chevauchant dans le temps l'au moins un processus de changement d'équipement de l'au moins un groupe de formage (900).

13. Procédé selon la revendication 1 ou 2 ou 3 ou 4 ou 5 ou 6 ou 7 ou 8 ou 9 ou 10 ou 11 ou 12, **caractérisé en ce que** des données concernant un substrat (02) à usiner et/ou des données concernant un produit à obtenir de l'au moins un ordre d'usinage suivant sont enregistrées dans la commande de machine et la commande de machine prescrit la configuration de la machine d'usinage (01) pour l'au moins un ordre d'usinage suivant ainsi que les processus de changement d'équipement à effectuer à cet effet par traitement desdites données en tenant compte d'autres données relatives à la machine fournies par la commande de machine, et/ou **en ce que** la commande de machine propose au moins un jeu de données comprenant au moins une configuration de l'ordre d'usinage suivant ainsi que les processus de changement d'équipement à effectuer à cet effet, lequel jeu de données peut être adapté ou sélectionné par un opérateur.

14. Procédé selon la revendication 1 ou 2 ou 3 ou 4 ou 5 ou 6 ou 7 ou 8 ou 9 ou 10 ou 11 ou 12 ou 13, **caractérisé en ce que**, pendant le changement d'équipement, au moins un réglage d'au moins un dispositif de séchage (506) ou d'au moins un groupe de séchage est adapté par la commande de la machine et/ou **en ce que**, pendant le changement d'équipement, au moins un appareil de transport (710) d'un groupe de transport (700) de la machine d'usinage (01) est arrêté pour le transport du substrat (02) et/ou **en ce que**, pendant le changement d'équipement, au moins un groupe (100 ; 300 ; 600 ; 700 ; 900 ; 1000) de la machine d'usinage (01) est déverrouillé.

15. Procédé selon la revendication 1 ou 2 ou 3 ou 4 ou 5 ou 6 ou 7 ou 8 ou 9 ou 10 ou 11 ou 12 ou 13 ou 14, **caractérisé en ce que** les images d'estampage et/ou les images d'impression des ordres d'usinage diffèrent les unes des autres ou un changement de substrat (02) est présent, et/ou **en ce que** la machine d'usinage (01) présente au moins deux groupes d'usinage (600) réalisés sous forme de groupes d'application (600) présentant un cylindre de moulage (602) et au moins deux images d'impression appliquées par les au moins deux groupes d'application (600) sont modifiées.
